(19) **Europäisches Patentamt / European Patent Office / Office européen des brevets**

(11) **EP 4 761 128 A1**

(12) **EUROPEAN PATENT APPLICATION**
published in accordance with Art. 153(4) EPC

(43) Date of publication:
**17.06.2026 Bulletin 2026/25**

(21) Application number: **24852295.5**

(22) Date of filing: **06.08.2024**

(51) International Patent Classification (IPC):
**H04B 7/06** $^{(2006.01)}$    **H04W 52/02** $^{(2009.01)}$
**H04W 72/0446** $^{(2023.01)}$    **H04W 72/23** $^{(2023.01)}$
**H04B 7/08** $^{(2006.01)}$    **H04W 8/24** $^{(2009.01)}$
**H04L 5/00** $^{(2006.01)}$

(52) Cooperative Patent Classification (CPC):
**H04B 7/06; H04B 7/08; H04L 5/00; H04W 8/24;**
**H04W 52/02; H04W 72/0446; H04W 72/23**

(86) International application number:
**PCT/KR2024/011616**

(87) International publication number:
**WO 2025/033941 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.08.2023  KR 20230103155**
**17.08.2023  KR 20230107768**
**18.08.2023  KR 20230108380**
**26.09.2023  KR 20230129646**
**08.05.2024  US 202463643926 P**

(71) Applicant: **LG Electronics Inc.**
**Yeongdeungpo-gu**
**Seoul 07336 (KR)**

(72) Inventors:
- **KIM, Seonwook**
  **Seoul 06772 (KR)**
- **YANG, Suckchel**
  **Seoul 06772 (KR)**
- **KIM, Kijun**
  **Seoul 06772 (KR)**
- **PARK, Haewook**
  **Seoul 06772 (KR)**

(74) Representative: **Maikowski & Ninnemann**
**Patentanwälte Partnerschaft mbB**
**Postfach 15 09 20**
**10671 Berlin (DE)**

(54) **DEVICE AND METHOD FOR REPORTING CHANNEL STATE INFORMATION ON BASIS OF SUB-CONFIGURATIONS IN WIRELESS COMMUNICATION SYSTEM**

(57)    The purpose of the present disclosure is to report channel state information (CSI) on the basis of sub-configurations in a wireless communication system, and a method performed by a terminal may comprise the steps of: receiving configuration information for a CSI report comprising a list of a plurality of sub-configurations; and transmitting, to a base station, CSI comprising a measurement result based on at least one CSI-RS related to the CSI report.

## FIG. 23

START

determine CSI-RS resource and CSI-RS port — S2301

determine port subsets for sub-configurations — S2303

transmit configuration information for CSI report — S2305

END

EP 4 761 128 A1

**Description**

## TECHNICAL FIELD

The following description relates to a wireless communication system, and relates to a device and method for reporting channel state information (CSI) based on sub-configurations in the wireless communication system.

## BACKGROUND ART

The 5G mobile communications system, the successor to long-term evolution (LTE), is a new, clean-slate mobile communications system characterized by high performance, low latency, and high availability. 5G NR may utilize all available spectrum resources, from low-frequency bands below 1 GHz, to mid-frequency bands between 1 GHz and 10 GHz, and to high-frequency bands (e.g., millimeter wave) above 24 GHz. 6G systems are being developed based on the underlying technologies of 5G mobile communications.

The 6G system aims to achieve (i) extremely high data rates per device, (ii) a very large number of connected devices, (iii) global connectivity, (iv) ultra-low latency, (v) reduced energy consumption for battery-free Internet of Things (IoT) devices, (vi) ultra-reliable connectivity, and (vii) connected intelligence with machine learning capability. The vision of the 6G system may include four aspects: intelligent connectivity, deep connectivity, holographic connectivity, and ubiquitous connectivity.

## DISCLOSURE

## TECHNICAL PROBLEM

The present disclosure relates to a device and method for effectively reporting channel state information (CSI) based on sub-configurations in a wireless communication system.

The present disclosure relates to a device and a method for effectively supporting a network energy saving (NES) operation of a base station in a wireless communication system.

The present disclosure relates to a device and method for determining a CSI-reference signal (RS) reference resource (reference resource) in a wireless communication system.

The present disclosure relates to a device and method for determining a CSI-RS reference resource based on sub-configurations in a wireless communication system.

The present disclosure relates to a device and method for treating sub-configurations as a plurality of CSI-RS resources in determining a CSI-RS reference resource in a wireless communication system.

The present disclosure relates to a device and method for determining a configuration for CSI reporting in consideration of a capability of a UE in a wireless communication system.

The present disclosure relates to a device and method for counting a CSI-RS resource and the number of ports based on sub-configurations in a wireless communication system.

The present disclosure relates to a device and method for selecting ports that are turned off or turned on through sub-configurations in a wireless communication system.

The present disclosure relates to a device and method for selecting ports that are turned off or turned on based on a code division multiplexing (CDM) group through sub-configurations in a wireless communication system.

The present disclosure relates to a device and method for equally determining the number of ports that are turned off or turned on among CDM groups arranged on the same time axis in a wireless communication system.

The technical objectives to be achieved in the present disclosure are not limited to the matters mentioned above, and other technical tasks not mentioned may be considered by those skilled in the art in the technical field to which the technical configuration of the present disclosure is applied, from the embodiments of the present disclosure to be described below.

## TECHNICAL SOLUTION

In one example of the present disclosure, a method performed by a user equipment (UE) in a wireless communication system may comprise: receiving configuration information for a channel state information (CSI) report including a list of a plurality of sub-configurations; and transmitting, to a base station, CSI including a measurement result based on at least one CSI-reference signal (RS) related to the CSI report. The configuration information may include information related to a CSI-RS resource for the CSI report and a plurality of CSI-RS ports, the plurality of sub-configurations may be associated with information related to different port subsets based on the plurality of CSI-RS ports, and the port subsets may be determined based on a code division multiplexing (CDM) group of the CSI-RS ports.

In one example of the present disclosure, a base station in a wireless communication system may comprise: determining a channel stat information (CSI)-reference signal (RS) resource and a plurality of CSI-RS ports for a user equipment (UE); determining sub-configurations for the UE from the plurality of CSI-RS ports using port subsets; and transmitting configuration information for a CSI report including information related to the port subsets. The port subsets may be determined based on a code division multiplexing (CDM) group of the CSI-RS ports.

In one example of the present disclosure, a user equipment (UE) in a wireless communication system may comprise a transceiver and a processor connected to the transceiver, wherein the processor may control to: receive configuration information for a channel state information (CSI) report including a list of a plurality of sub-configurations; and transmit, to a base station, CSI including a measurement result based on at least one CSI-reference signal (RS) related to the CSI report. The configuration information may include information related to a CSI-RS resource for the CSI report and a plurality of CSI-RS ports, the plurality of sub-configurations may be associated with information related to different port subsets based on the plurality of CSI-RS ports, and the port subsets may be determined based on a code division multiplexing (CDM) group of the CSI-RS ports.

In one example of the present disclosure, a base station in a wireless communication system may comprise a transceiver and a processor connected to the transceiver, wherein the processor may control to: determine a channel stat information (CSI)-reference signal (RS) resource and a plurality of CSI-RS ports for a user equipment (UE); determine sub-configurations for the UE from the plurality of CSI-RS ports using port subsets; and transmit configuration information for a CSI report including information related to the port subsets. The port subsets may be determined based on a code division multiplexing (CDM) group of the CSI-RS ports.

In one example of the present disclosure, a communication device may comprise at least one processor, and at least one computer memory connected to the at least one processor and storing instructions that direct operations when executed by the at least one processor, the operations comprising: receiving configuration information for a channel state information (CSI) report including a list of a plurality of sub-configurations; and transmitting, to a base station, CSI including a measurement result based on at least one CSI-reference signal (RS) related to the CSI report. The configuration information may include information related to a CSI-RS resource for the CSI report and a plurality of CSI-RS ports, the plurality of sub-configurations may be associated with information related to different port subsets based on the plurality of CSI-RS ports, and the port subsets may be determined based on a code division multiplexing (CDM) group of the CSI-RS ports.

In one example of the present disclosure, a non-transitory computer-readable medium storing at least one instruction may comprise the at least one instruction executable by a processor, wherein the at least one instruction causing a device, the processor, to: receive configuration information for a channel state information (CSI) report including a list of a plurality of sub-configurations; and transmit, to a base station, CSI including a measurement result based on at least one CSI-reference signal (RS) related to the CSI report. The configuration information may include information related to a CSI-RS resource for the CSI report and a plurality of CSI-RS ports, the plurality of sub-configurations may be associated with information related to different port subsets based on the plurality of CSI-RS ports, and the port subsets may be determined based on a code division multiplexing (CDM) group of the CSI-RS ports.

The aspects described above of the present disclosure are merely some of the preferred embodiments of the present disclosure, and various embodiments reflecting the technical features of the present disclosure may be derived and understood by those skilled in the art based on the detailed description of the present disclosure described below.

ADVANTAGEOUS EFFECTS

According to embodiments based on the present disclosure, the following effects may be obtained.

According to the present disclosure, channel state information (CSI) feedback based on sub-configurations may be effectively performed.

The effects obtainable from the embodiments of the present disclosure are not limited to those mentioned above, and other effects not explicitly described may be clearly derived and understood by those skilled in the art to which the technical features of the present disclosure are applied, based on the description of the embodiments of the present disclosure below. That is, unintended effects resulting from implementing the configurations described in the present disclosure may also be derived by those skilled in the art from the embodiments of the present disclosure.

**BRIEF DESCRIPTION OF THE DRAWINGS**

FIG. 1 illustrates an example of a flexible network topology applicable to the present disclosure.
FIG. 2 illustrates an example of a structure of a wireless communication system applicable to the present disclosure.
FIG. 3 illustrates an example of a wireless device applicable to the present disclosure.

FIG. 4 illustrates an example of a communication procedure between a first node and a second node applicable to the present disclosure.

FIG. 5 illustrates an example of a general functional architecture related to both functionality-based life cycle management (LCM) and model-based LCM.

FIG. 6 illustrates an example of an operation procedure based on an AI/ML model applicable to the present disclosure.

FIG. 7 illustrates an example of an electromagnetic spectrum applicable to the present disclosure.

FIG. 8 illustrates an example of a procedure for transmitting system information for THz communication applicable to the present disclosure.

FIG. 9 illustrates an example of a beam management procedure applicable to the present disclosure.

FIG. 10a illustrates an example of a general NTN scenario based on a transparent payload applicable to the present disclosure.

FIG. 10b illustrates an example of a general NTN scenario based on a regenerative payload applicable to the present disclosure.

FIG. 11a illustrates examples of components of an orbital parameter ephemeris (OPE) format.

FIG. 11b illustrates examples of offsets in a link related to a satellite.

FIG. 11c illustrates examples of timing advance (TA) values in a link related to a satellite.

FIG. 12a and FIG. 12b illustrate examples of sensing operations applicable to the present disclosure.

FIG. 13 illustrates an example of time/frequency resources for sensing operation applicable to the present disclosure.

FIG. 14 illustrates an example of a procedure related to sensing operation applicable to the present disclosure.

FIG. 15 illustrates an example of an operation procedure of a base station supporting a network energy saving (NES) technology applicable to the present disclosure.

FIG. 16 illustrates an example of a procedure for cell discontinuous transmission (DTX)/discontinuous reception (DRX) operation applicable to the present disclosure.

FIG. 17 illustrates an example of a procedure for channel state information (CSI) measurement and reporting applicable to the present disclosure.

FIG. 18a and FIG. 18b illustrate examples of configuration information for CSI reporting according to various embodiments of the present disclosure.

FIG. 19a to FIG. 19r illustrate examples of AP mapping of CSI-RS according to various patterns applicable to the present disclosure.

FIG. 20 illustrates an example of a procedure for determining a CSI reference resource according to one embodiment of the present disclosure.

FIG. 21 illustrates an example of a procedure for providing configuration information for CSI reporting according to one embodiment of the present disclosure.

FIG. 22 illustrates an example of a procedure for receiving configuration information for CSI reporting according to one embodiment of the present disclosure.

FIG. 23 illustrates an example of a procedure for providing configuration information for CSI reporting according to one embodiment of the present disclosure.

FIG. 24 illustrates an example of a procedure for transmitting CSI reporting according to one embodiment of the present disclosure.

## MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, parentheses used in the present disclosure may indicate "for example". Specifically, when expressed as "control information (ABC)", "ABC" may be described as an example of the "control information". For example, "control information" may also include DEF as another example. In other words, the "control information" of the present disclosure is not limited to "ABC", and "ABC" may be described merely as an example of the "control information". In addition, even when expressed as "control information (i.e., ABC)" "ABC" may be described as an example of the "control information".

In addition, the terms "first", "second", and the like used in the present disclosure are only for the purpose of distinguishing one component from another and are not used to limit the components, and unless otherwise specified, do not limit the order, importance, or the like among the components. Therefore, the first component in one embodiment of the present disclosure may be referred to as the second component in another embodiment, and likewise, the second component in one embodiment may be referred to as the first component in another embodiment.

In the following description, 'when, if, or in case of' may be replaced with 'based on'.

A technical feature described individually in one figure in the present disclosure may be individually implemented, or may be simultaneously implemented.

In the present disclosure, a terminal refers to a user-side device (user equipment, UE) or a consumer-side device, and may also be referred to as a first node that receives or transmits a signal from or to a base station/a second node/an integrated access and backhaul (IAB) node, or a transmission-reception point (TRP). The terminal may correspond to a physical node or a logical node. The terminal may correspond to a user-side endpoint or to an intermediate point between other endpoints. In communication between two points that are not limited to endpoints (including one-to-one, many-to-one, one-to-many, and many-to-many communication), the terminal may correspond to a served node. The terminal may be a node with a fixed location or a node whose location is not fixed (i.e., a mobile node).

In the present disclosure, a base station (BS) refers to a network-side device and may also be referred to as a second node, an IAB node, an x-nodeB (x-NodeB, where x may be an abbreviation related to a radio access technology (RAT)), or a transmission-reception point (TRP). The base station may correspond to a physical node or a logical node. The base station may correspond to a network-side endpoint or to an intermediate point between other endpoints. In communication between two points that are not limited to endpoints (including one-to-one, many-to-one, one-to-many, and many-to-many communication), the base station may correspond to a serving node. The base station may be a node with a fixed location or a node whose location is not fixed.

In the present disclosure, a higher layer parameter may be configured for, pre-configured for, or predefined for a UE. For example, a base station may transmit a higher layer parameter to the UE. For example, the UE may transmit a parameter such as capability to the base station as a higher layer parameter. For example, the higher layer parameter may be transmitted through radio resource control (RRC) signaling or medium access control (MAC) signaling.

In the present disclosure, when information/state/parameter is "configured or pre-configured", it may be interpreted as information/state/parameter being provided or pre-provided to the UE through predefined signaling (e.g., SIB, MAC, RRC) from the base station. In the present disclosure, when information/state/parameter is "defined or pre-defined", it may be interpreted as information/state/parameter being already known or stored in advance at both the base station and the UE without signaling between the base station and the UE.

The technology described in the present disclosure may be used in various wireless communication systems such as code division multiple access (CDMA), frequency division multiple access (FDMA), time division multiple access (TDMA), orthogonal frequency division multiple access (OFDMA), and single carrier frequency division multiple access (SC-FDMA), and so on. The CDMA may be implemented with a radio technology such as universal terrestrial radio access (UTRA) or CDMA2000. The TDMA may be implemented with a radio technology such as global system for mobile communications (GSM)/general packet radio service (GPRS)/enhanced data rates for GSM evolution (EDGE). The OFDMA may be implemented with a radio technology such as Institute of Electrical and Electronics Engineers (IEEE) 802.11 (Wi-Fi), IEEE 802.16 (WiMAX), IEEE 802.20, evolved UTRA (E-UTRA), long term evolution (LTE), or 5G new radio (NR).

The technology described in the present disclosure may be implemented as 6G wireless technology and may be applied to various 6G systems. For example, a 6G system may have key factors such as enhanced mobile broadband (eMBB), ultra-reliable low latency communications (URLLC), massive machine-type communication (mMTC), artificial intelligence (AI) integrated communication, tactile internet, high throughput, high network capacity, high energy efficiency, low backhaul and access network congestion, and enhanced data security.

## A. 6G network architecture

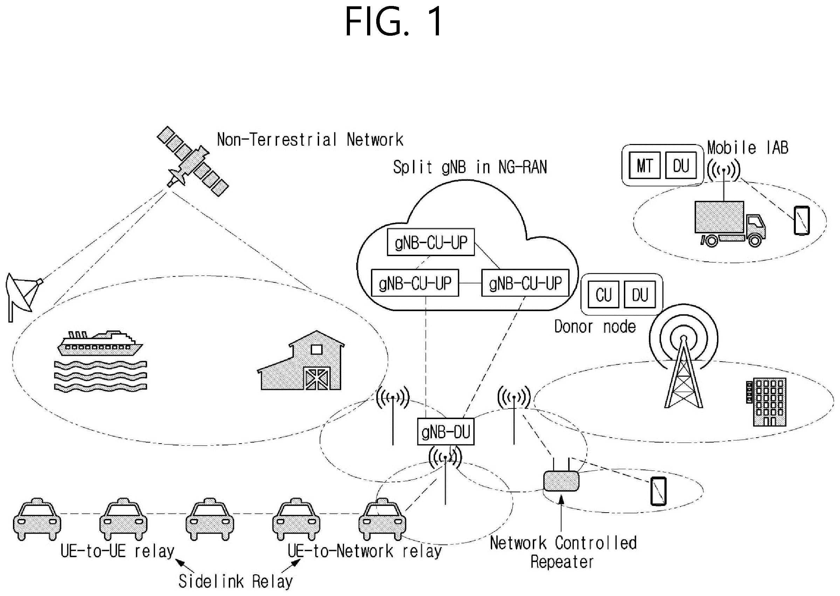

FIG. 1 illustrates an example of a flexible network topology applicable to the present disclosure.

To compensate for incomplete areas of network coverage, a split radio access network (RAN) topology that is more flexible and resilient may be considered. For this purpose, various nodes such as IAB nodes, relays, and RF repeaters as illustrated in FIG. 1 may be applied, and NTN may also be integrated. For example, an IAB node may correspond to a node providing a wireless backhaul. For example, a relay may refer to any intermediate point, and in the case of a sidelink relay in which a UE functions as a relay, it may collectively refer to a UE-to-network (U2N) relay and a UE-to-UE (U2U) relay. For example, an RF repeater may correspond to a node that performs simple signal amplification and forwarding, and in the case of a network-controlled repeater, it may not only perform signal amplification and forwarding but also adjust transmission and reception configuration based on information provided from the network. For example, an NTN node may correspond to a satellite or aerial vehicle that provides NTN coverage difficult to be provided by a terrestrial network. In addition to these examples, various other intermediate points may be introduced to improve the network topology.

Referring to FIG. 1, the split RAN may support division of a base station into one centralized unit (CU) and one or more distributed units (DUs). The CU and DU may correspond to logical units. The CU may be further divided into a control plane (CP) part and one or more user plane (UP) parts. A failure in the CU-CP may affect not only the CU-UP but also the DU, and therefore, various intermediate points may be introduced to compensate for this.

An intermediate point may correspond to a UE or a base station depending on its relative relationship with other nodes. For example, an IAB node may include a mobile termination (MT) part and a DU. The MT may connect the IAB node to a donor node. The DU of the IAB node may serve other UEs or connect to another IAB node to provide multi-hop wireless backhaul to UEs. That is, the IAB node may correspond to a base station in relation to a user-side node, and may correspond to a UE in relation to a network-side node.

In some examples of the present disclosure, the description of a UE may be equally applied not only to a user-side endpoint but also to an intermediate point that corresponds to a UE in relation to a network-side endpoint. Similarly, in some examples of the present disclosure, the description of a base station may be equally applied not only to a network-side endpoint but also to an intermediate point that corresponds to a base station in relation to a user-side endpoint. However, in most cases where no additional explanation is provided for operations among three or more entities, the communication entities in the present disclosure are briefly described by the terms UE and/or base station (or first node and/or second node), where the terms UE and/or base station (or first node and/or second node) are interpreted as including or substituting any endpoint or intermediate point depending on the relationship with other nodes.

That is, in some examples of the present disclosure, for the sake of simplicity of description, the subject of an operation may be referred to as a base station and/or a UE (or a first node and/or a second node). In addition, the terms base station and/or UE (or first node and/or second node) may be interpreted or substituted as follows: for example, the base station (or first node) and the UE (or second node) may respectively correspond to a first endpoint and a second endpoint; may respectively correspond to an endpoint and an intermediate point; may respectively correspond to an intermediate point and an endpoint; or may respectively correspond to a first intermediate point and a second intermediate point.

In the present disclosure, there may be no intermediate point or one or more intermediate points between the base station and the UE. When an intermediate point exists, the intermediate point may correspond to an IAB node, a relay, an RF repeater, a non-terrestrial network (NTN) node, or a node supporting other functions. The intermediate point may be a node with a fixed location or a node whose location is not fixed.

## Systems applicable to this disclosure

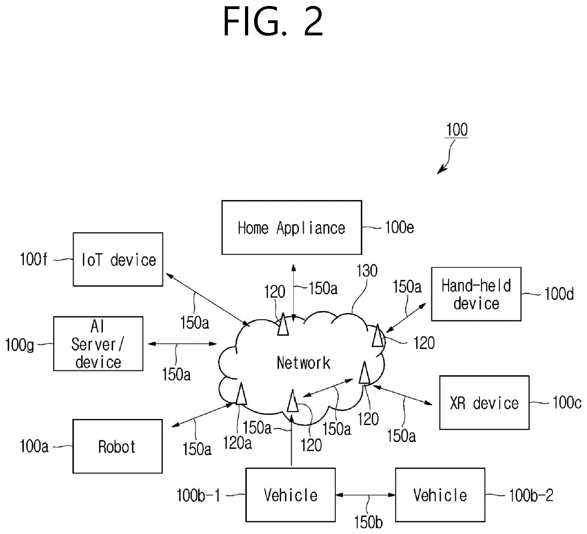

FIG. 2 illustrates an example of a structure of a wireless communication system applicable to the present disclosure. The communication system 100 of FIG. 2, to which the present disclosure is applied, includes a wireless device 110, a network device 120, and a network 130. Here, the wireless device 110 refers to a device that performs communication using a radio access technology (e.g., LTE, LTE-A, LTE-A Pro, NR, 5G, 5G-A, 6G) and may be referred to as a communication/radio/5G/6G device. Without being limited thereto, the wireless device 110 may include a robot 110a, vehicles 110b-1 and 110b-2, an extended reality (XR) device 110c, a hand-held device 110d, a home appliance 110e, an Internet of Things (IoT) device 110f, and an artificial intelligence (AI) device/server 110g. For example, the vehicles may include vehicles equipped with wireless communication capability, autonomous vehicles, or vehicles capable of performing vehicle-to-vehicle communication, and the vehicles 110b-1 and 110b-2 may include unmanned aerial vehicles (UAVs) such as drones. The XR device 110c may include augmented reality (AR), virtual reality (VR), or mixed reality (MR) devices and may be implemented in the form of a head-mounted device (HMD), a head-up display (HUD) mounted in a vehicle, a television, a smartphone, a computer, a wearable device, a home appliance, digital signage, a vehicle, or a robot. The hand-held device 110d may include a smartphone, a smart pad, a wearable device (e.g., smart watch, smart glasses), or a computer (e.g., laptop, etc.). The home appliance 110e may include a TV, refrigerator, or washing machine. The IoT device 110f may include sensors or smart meters. The wireless device 110 may correspond to a UE (or a first node) or an intermediate point. The network device 120 may correspond to a base station (or a second node) or another intermediate point. For example, the network device 120 may also be implemented as a wireless device 110, and a specific wireless device 120a may operate as the network device 120 for another wireless device 110.

The wireless devices 110a to 110f may be connected to the network 130 through the network device 120. AI technology may be applied to the wireless devices 110a to 110f, and the wireless devices 110a to 110f may be connected to an AI server 110g through the network 130. The network 130 may be configured using a 3G network, a 4G (e.g., LTE) network, a 5G (e.g., NR) network, or a 6G network. The wireless devices 110a to 110f may communicate with each other through the network device 120/the network 130, but may also communicate directly (e.g., through sidelink communication) without passing through the network device 120/the network 130. For example, the vehicles 110b-1 and 110b-2 may perform direct communication (e.g., vehicle-to-vehicle (V2V) or vehicle-to-everything (V2X) communication). In addition, the IoT device 110f(e.g., a sensor) may perform direct communication with another IoT device (e.g., another sensor) or with another wireless device 110a to 110f.

Wireless communication/connection 150a, 150b, 150c may be established between wireless devices 110a to 110f and a network device 120, and between network devices 120. Here, the wireless communication/connection may be established through various wireless access technologies such as uplink/downlink communication 150a, sidelink communication 150b (or D2D communication), and communication between network devices 150c (e.g., relay, integrated access backhaul (IAB)). Through the wireless communication/connection 150a, 150b, 150c, the wireless device and the network device/wireless device, and the network device and the network device may transmit and receive wireless signals with each other. For example, the wireless communication/connection 150a, 150b, 150c may transmit and receive signals through various physical channels. To this end, based on various descriptions of the present disclosure, at least a part of various configuration information configuring processes for transmitting/receiving wireless signals, various signal processing processes (e.g., channel encoding/decoding, modulation/demodulation, resource mapping/demapping, etc.), and resource allocation processes may be performed.

## Device applicable to the present disclosure

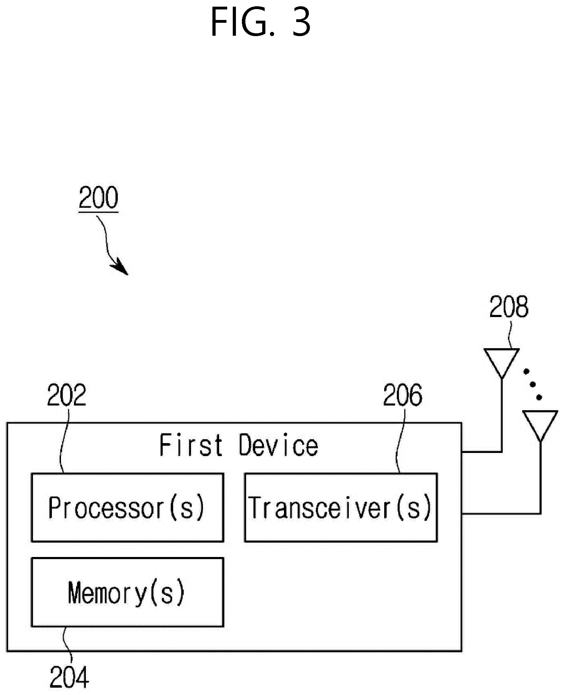

FIG. 3 illustrates an example of a wireless device applicable to the present disclosure.

Referring to FIG. 3, a wireless device 200 may transmit/receive a radio signal through various wireless access technologies (e.g., LTE, LTE-A, LTE-A pro, NR, 5G, 5G-A, 6G). The wireless device 200 may include at least one processor 202 and at least one memory 204 and additionally further include at least one transceiver 206 and/or at least one antenna 208.

The processor 202 may be configured to control the memory 204 and/or the transceiver 206 and to implement the descriptions, functions, procedures, proposals, methods, and/or operation flowcharts disclosed in this document. For example, the processor 202 may generate first information/signal by processing information in the memory 204 and then transmit a radio signal including the first information/signal through the transceiver 206. In addition, the processor 202 may receive a radio signal including second information/signal through the transceiver 206 and then store information obtained from signal processing of the second information/signal in the memory 204. The memory 204 may be connected to the processor 202 and store a variety of information associated with an operation of the processor 202. For example, the memory 204 may store a software code including instructions for implementing some or all of processes controlled by the processor 202 or for implementing the descriptions, functions, procedures, proposals, methods, and/or operation flowcharts disclosed in this document. Herein, the processor 202 and the memory 204 may be a part of a communication modem/circuit/chip designed for implementing a wireless communication technology. The transceiver 206 may be connected to the processor 202 and transmit and/or receive a radio signal through the at least one antenna 208. The transceiver 206 may be a transmitter and/or a receiver. The transceiver 206 may be used interchangeably with a radio frequency (RF) unit. In the present disclosure, a wireless device may mean a communication modem/circuit/chip.

Hereinafter, a hardware element of the wireless device 200 will be described in further detail. Although not being limited thereto, at least one protocol layer may be implemented by the at least one processor 202. For example, the at least one processor 202 may implement at least one layer (e.g., a functional layer such as physical (PHY), media access control (MAC), radio link control (RLC), packet data convergence protocol (PDCP), radio resource control (RRC), and service data adaptation protocol (SDAP)). The at least one processor 202 may generate at least one protocol data unit (PDU) and/or at least one service data unit (SDU) according to the descriptions, functions, procedures, proposals, methods, and/or operation flowcharts disclosed in this document. The at least one processor 202 may generate a message, control information, data, or information according to the descriptions, functions, procedures, proposals, methods, and/or operation flowcharts disclosed in this document. The at least one processor 202 may generate a signal (e.g., a baseband signal) including a PDU, an SDU, a message, control information, data, or information according to a function, a procedure, a suggestion and/or a method, which are disclosed in the present document, and provide the signal to the at least one transceiver 206. The at least one processor 202 may receive a signal (e.g., a baseband signal) from the at least one transceiver 206 and obtain a PDU, an SDU, a message, control information, data, or information according to the descriptions, functions, procedures, proposals, methods, and/or operation flowcharts disclosed in this document.

The at least one processor 202 may be referred to as a controller, a microcontroller, a microprocessor, or a microcomputer. The at least one processor 202 may be implemented by hardware, firmware, software, or a combination thereof. As an example, at least one application specific integrated circuit (ASIC), at least one digital signal processor (DSP), at least one digital signal processing devices (DSPD), at least one programmable logic device (PLD), or at least one field programmable gate array (FPGA) may be included in the at least one processor 202. The descriptions, functions, procedures, proposals, methods, and/or operation flowcharts disclosed in this document may be implemented using firmware or software, and the firmware or software may be implemented to include the modules, procedures, or functions. Firmware or software configured to perform the descriptions, functions, procedures, proposals, methods, and/or operation flowcharts disclosed in this document may be included in the at least one processor 202 or may be stored in the at least one memory 204 and executed by the at least one processor 202. The descriptions, functions, procedures, proposals, methods, and/or operation flowcharts disclosed in this document may be implemented using firmware or software in the form of code, an instruction, and/or a set of instructions.

The at least one memory 204 may be connected to the at least one processor 202 and store various forms of data, signals, messages, information, programs, codes, indications, and/or instructions. The at least one memory 204 may be configured as a read only memory (ROM), a random access memory (RAM), an erasable programmable read only memory (EPROM), a flash memory, a hard drive, a register, a cache memory, a computer-readable storage media, and/or a combination thereof. The at least one memory 204 may be located at the interior and/or exterior of the at least one processor 202. In addition, the at least one memory 204 may be connected to the at least one processor 202 through various technologies such as wired or wireless connection.

The at least one transceiver 206 may transmit user data, control information, and wireless signals/channels, mentioned in the methods and/or operation flowcharts of this document, to at least one other device. The at least one transceiver 206 may receive user data, control information, and wireless signals/channels, mentioned in the descriptions, functions, procedures, proposals, methods, and/or operation flowcharts disclosed in this document, from at least one other device. For example, the at least one transceiver 206 may be connected to the at least one processor 202 and transmit and receive radio signals. For example, the at least one processor 202 may control the at least one transceiver 206 to transmit user data, control information, or a radio signal to at least one other device. In addition, the at least one processor 202 may control the at least one transceiver 206 to receive user data, control information, or a radio signal from at least one other device. In addition, the at least one transceiver 206 may be connected to the at least one antenna 208, and the at least one transceiver 206 may be configured to transmit and receive user data, control information, radio signals/channels mentioned in the descriptions, functions, procedures, proposals, methods and/or operation flowcharts disclosed in this document through the at least one antenna 208. In this document, the at least one antenna may be a plurality of physical antennas or a plurality of logical antennas (e.g., antenna ports). The at least one transceiver 206 may convert received radio signals/channels from RF band signals into baseband signals in order to process received user data, control information, and radio signals/channels using the at least one processor 202. The at least one transceiver 206 may convert the user data, control information, and radio signals/channels processed using the at least one processor 202 from the baseband signals into the RF band signals. To this end, the at least one transceiver 206 may include an (analog) oscillator and/or a filter.

The constituents of the wireless device, which are described in reference to FIG. 3, may be referred to as other terms from functional aspects. For example, the processor 202 may be referred to as a control unit, the transceiver 206 may be referred to as a communication unit, and the memory 204 may be referred to as a storage unit. In some cases, the communication unit may be used for a meaning including at least a part of the processor 202 and the transceiver 206.

The structure of the wireless device described with reference to FIG. 3 may be understood as at least a part of the structure of various devices. For example, the structure of the wireless device illustrated in FIG. 3 may correspond to at least a part of the various devices described with reference to FIG. 2 (e.g., a robot 110a, vehicles 110b-1 and 110b-2, an XR device 110c, a portable device 110d, a home appliance 110e, an IoT device 110f, and an AI device/server 110g). Furthermore, depending on various embodiments, the device may further include other components in addition to those illustrated in FIG. 3.

For example, a device may be a hand-held device such as a smartphone, a smart pad, a wearable device (e.g., a smart watch, smart glasses), and a hand-held computer (e.g., a laptop, etc.). In this case, the device may further include at least one of a power supply unit that supplies power and includes a wired/wireless charging circuit, a battery and the like, an interface unit including at least one port (e.g., an audio input/output port, a video input/output port) for connection to another device, and an input/output unit for inputting and outputting video information/signals, audio information/signals, data and/or information input from a user.

For example, a device may be a mobile device such as a mobile robot, a vehicle, a train, a manned/unmanned aerial vehicle (AV), and a ship. In this case, the device may further include at least one of a drive unit including at least one of the engine, motor, powertrain, wheels, brake, and steering device of the device, a power supply unit that supplies power and includes a wired/wireless charging circuit, a battery and the like, a sensor unit that senses state information of the device or surrounding the device, environment information and user information, an autonomous driving unit that performs functions such as route maintenance, speed control and destination setting, and a location measurement unit that obtains moving object location information through a global positioning system (GPS) and various sensors.

For example, a device may be an XR device such as an HMD, a head-up display (HUD) provided in a vehicle, a television, a smartphone, a wearable device, a home appliance device, a digital signage, a vehicle, and a robot. In this case, the device may further include at least one of a power supply unit that supplies power and includes a wired/wireless charging circuit, a battery and the like, an input/output unit that obtains control information and data from outside and outputs a generated XR object, and a sensor unit that senses state information of the device or surrounding the device, environment information and user information.

For example, a device may be a robot that may be classified for industrial use, medical use, domestic use, military use and the like according to purposes of use or fields. In this case, the device may further include at least one of a sensor unit that senses state information of the device or surrounding the device, environment information and user information and a drive unit that moves robot joints and performs various other physical operations.

For example, a device may be an AI device such as a TV, a projector, a smartphone, a PC, a laptop, a terminal for digital broadcasting, a tablet PC, a wearable device, a set-top box (STB), a radio, a washing machine, a refrigerator, a digital signage, a robot, and a vehicle. In this case, the device may further include at least one of an input unit that obtains various types of data from outside, an output unit that generates outputs associated with sight, hearing, or touch, a sensor unit that senses state information of the device or surrounding the device, environment information and user information, and a training unit that uses learning data to learn a model consisting of artificial neural networks.

The structure of the wireless device illustrated in FIG. 3 may be understood as being a part of a UE (or a first node), a part of an intermediate point, or a part of a base station (or a second node). When the device illustrated in FIG. 3 is the base station (or the second node), the device may further include a wired transceiver for front haul and/or back haul communication. However, when the front haul and/or back haul communication is based on wireless communication, at least one transceiver 206 illustrated in FIG. 3 may be used for the front haul and/or back haul communication, and the wired transceiver may not be included.

## B. Communication Procedures

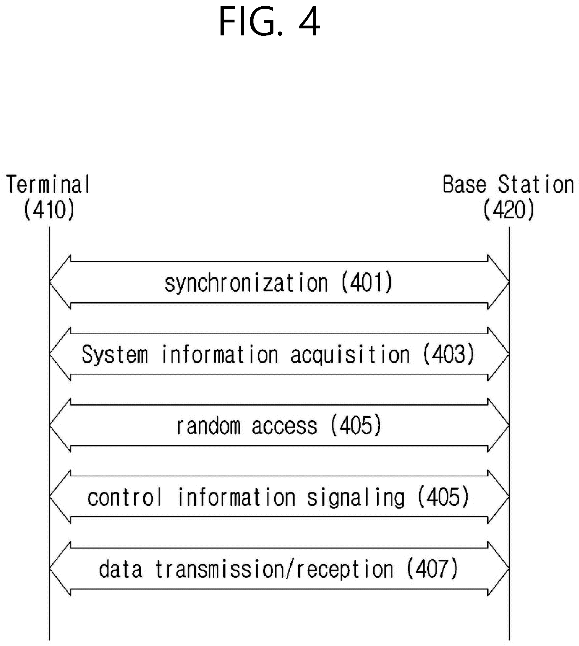

FIG. 4 illustrates an example of a communication procedure between a first node (e.g., a UE) and a second node (e.g., a base station) applicable to the present disclosure. The second node of FIG. 1 may support dynamic spectrum sharing (DSS) and may provide connection not only to nodes where 6G technology is implemented but also to nodes where pre-6G wireless communication (e.g., 5G, 4G) technology is implemented. That is, the first node of FIG. 1 may implement 6G technology or may implement pre-6G wireless communication (e.g., 5G, 4G) technology. In addition, the first node and/or the second node may support not only a non-overlapping full duplex mode but also a full duplex mode.

In FIG. 4, for simplicity of description, the first node and the second node are assumed to be a UE and a base station, respectively, and operations in which the UE 440 and the base station 420 transmit and/or receive data and operations performed prior thereto are illustrated. However, the operation of FIG. 1 is not limited to the operation between the UE and the base station, and may be interpreted as the operation between the first node and the second node. In addition, although FIG. 1 illustrates a direct wireless signal transmission/reception operation between the UE 440 and the base station 420, one or more intermediate points may exist between the UE 440 and the base station 420, and the wireless signal may be transmitted and received through one or more intermediate points.

Referring to FIG. 4, in step 401, the UE 440 and the base station 420 perform synchronization. For example, the UE 440 may perform an initial cell search operation. Specifically, the UE 440 may detect at least one synchronization signal for base station connection, which is transmitted from the base station 420 according to a predefined rule. Here, the synchronization signal may include a plurality of synchronization signals (e.g., a first synchronization signal (for example, a primary synchronization signal), a second synchronization signal (for example, a secondary synchronization signal), etc.) classified according to structure or purpose. Through this, the UE 440 may identify a boundary of a unit (e.g., a frame, subframe, slot, and/or symbol) configuring wireless signal transmission of the base station 420, and may obtain information related to the base station 420 (e.g., a cell identifier).

In step 403, the UE 440 obtains system information transmitted from the base station 420. The system information is information related to attributes, characteristics, and/or capabilities of the base station 420, which are required for the UE to access the base station 420 and use services, and may be classified according to content (e.g., whether it is essential for access), transmission structure (e.g., which channel is used, whether it is provided on-demand), and the like, for example, the system information may be classified into first system information (e.g., a master information block (MIB), primary system information) and second system information (e.g., a system information block (SIB), secondary system information). If necessary, the UE 440 may transmit a signal requesting the system information before receiving the system information. However, the request and provision of the system information may be performed after a random access procedure described below.

In step 405, the UE 440 and the base station 420 perform a random access procedure. The UE 440 may transmit and/or receive at least one message (e.g., a random access preamble, a random access response (RAR) message, etc.) for the random access procedure based on information related to a channel (e.g., channel location, channel structure, structure of supported preambles, etc.) for the random access procedure of the base station 420 obtained through the system information. For example, the UE 440 may transmit a first message (e.g., a preamble, MSG1) through a channel for the random access procedure, receive a second message (e.g., an RAR message, MSG2), transmit a third message (e.g., MSG3) including information related to the UE 440 (e.g., identification information) to the base station 420 by using scheduling information included in the second message, and receive a fourth message (e.g., MSG4) for contention resolution and/or connection establishment. In another example, the first message and the third message may be transmitted and received as a single message, or the second message and the fourth message may be transmitted and received as a single message.

In step 407, the UE 440 and the base station 420 perform signaling of control information. Here, the control information may be defined in various layers such as a layer for controlling connection (e.g., a radio resource control (RRC) layer), a layer for processing mapping between logical channels and transport channels (e.g., a media access control (MAC) layer), and a layer for processing physical channels (e.g., a physical (PHY) layer). For example, the UE 440 and the base station 420 may perform at least one of signaling for establishing a connection, signaling for determining configurations related to communication, and signaling for indicating allocated resources.

In step 409, the UE 440 and the base station 420 transmit and/or receive data. In other words, the UE 440 and the base station 420 may process and transmit and/or receive data based on the signaling of control information. For example, when transmitting data, the UE 440 or the base station 420 may perform at least one of channel encoding, rate matching, scrambling, constellation mapping, layer mapping, waveform modulation, antenna mapping, and resource mapping on information bits. Conversely, when receiving data, the UE 440 or the base station 420 may perform at least one of signal extraction from a resource, waveform demodulation per antenna, signal arrangement considering layer mapping, constellation demapping, descrambling, and channel decoding.

## C. 6G System Core Technologies

As core implementation technologies of a 6G system, technologies such as artificial intelligence (AI), terahertz (THz) communication, optical wireless technology, free-space optical (FSO) backhaul network, massive MIMO technology, blockchain, 3D networking, quantum communication, unmanned aerial vehicles, cell-free communication, wireless information and energy transfer (WIET), integration of sensing and communication, integration of access and backhaul networks, holographic beamforming, big data analytics, and large intelligent surface (LIS) may be adopted.

### C-1. Artificial intelligence

Introducing artificial intelligence (AI) into communication may simplify and enhance real-time data transmission. AI may determine how complex target tasks are performed by using numerous analyses. That is, AI may improve efficiency and reduce processing delay. Time-consuming tasks such as handover, network selection, and resource scheduling may be performed instantly by using AI. AI may also play an important role in M2M, machine-to-human, and human-to-machine communications. In addition, AI may enable rapid communication in a brain-computer interface (BCI). An AI-based communication system may be supported by meta-materials, intelligent structures, intelligent networks, intelligent devices, intelligent cognitive radios, self-sustaining wireless networks, and machine learning.

[Functional Framework]

The following describes a functional framework for AI/ML operations.

Hereinafter, for a more specific description of AI (or AI/ML), terms may be defined as follows.

- Data collection: Data collected from network nodes, management entities, or UEs, serving as the basis for AI model training, data analysis, and inference
- AI model: A data-driven algorithm applying AI techniques that generates a set of outputs including prediction information and/or decision parameters based on a set of inputs
- AI/ML training: An online or offline process of training an AI model by learning functions and patterns that best represent data and enable inference, to obtain a trained AI/ML model
- AI/ML inference: A process of predicting or inducing decisions based on collected data and an AI model by using the trained AI model

The Life Cycle Management (LCM) procedure for an AI/ML model (i.e., model training, model deployment, model inference, model monitoring, model update, etc.) may be classified into functionality-based LCM and model-based LCM. In functionality-based LCM, the AI/ML model may not be identifiable in the network, and the network may indicate activation/deactivation/fallback/switching of the AI/ML functionality. In model-identifier (ID)-based LCM, the AI/ML model may be identifiable in the network, and the network/UE may activate/deactivate/select/switch the AI/ML model through the model ID.

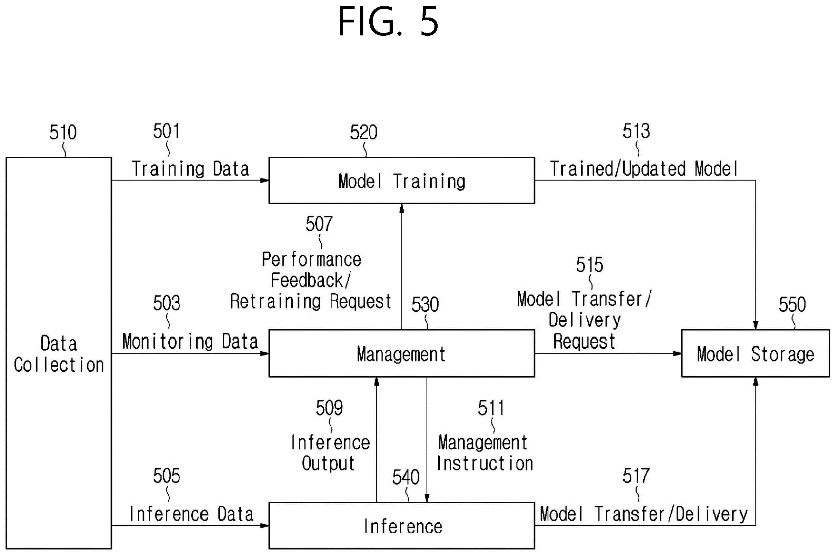

FIG. 5 illustrates an example of a general functional architecture related to both functionality-based LCM and model-based LCM. Some functions or some data/information/command flows (i.e., arrows) illustrated in FIG. 5 may be omitted.

Referring to FIG. 5, a general functional framework may be configured to include a data collection function 510, a model training function 520, a management function 530, an inference function 540, and a model storage function 550.

The data collection function 510 provides input data to the model training function 520, the management function 530, and the inference function 540. The data collection function 510 may perform data preparation based on raw data and may provide processed input data through the data preparation. Examples of raw data may include received data or measurement data from UEs or other network entities, and inference or output of an AI/ML model. The data collection function 510 may be performed by a single entity (e.g., a UE, a network node, etc.) or may be performed by a plurality of entities.

Here, training data 511 refers to data required as input for the AI/ML model training function 520. Monitoring data 512 refers to data required as input for the management 530 of the AI/ML model or the AI/ML functionality. Inference data 513 refers to data required as input for the AI/ML inference function 530.

The model training function 520 performs AI/ML model training, validation, and testing capable of generating model performance metrics that may be used as part of an AI/ML model testing procedure. The model training function 520 may perform data preparation (e.g., data pre-processing and cleaning, forming, and transformation) based on training data 511 transferred from the data collection function 510, if necessary.

Trained/Updated Model 521: If there is a model storage function 550, it is used to transfer a trained, validated and tested AI/ML model to the model storage function 550 or to transfer an updated version of the model to the model storage function 550.

The management function 530 supervises the operation of the AI/ML model or the AI/ML functionality. In addition, the management function 530 may make decisions to ensure appropriate inference operations based on data received from the data collection function 510 (i.e., monitoring data 512) and/or data received from the inference function 540 (i.e., inference output 541).

The management instruction 532 refers to information required as input to manage the inference function 540. The related information may include selection/(de)activation/switching of an AI/ML model or an AI/ML-based functionality, and may also include fallback to non-AI/ML operation (i.e., not relying on an inference process).

The model transfer/delivery request 533 may be used to request one or more models from the model storage 550.

The performance feedback/retraining request 531 refers to information required as input to the model training function 520 (e.g., for the purpose of model retraining or model updating).

The inference function 540 provides an output from a process of applying an AI/ML model or an AI/ML functionality by using data (i.e., inference data 513) provided by the data collection 510 as input. The inference function 540 may perform data preparation (e.g., data pre-processing and cleaning, formatting, and transformation) based on the inference data 513 transferred by the data collection 510. If necessary, the inference function 540 may also perform data preparation (e.g., data pre-processing and cleaning, forming, and transformation) based on the inference data 513 provided by the data collection function 510.

The inference output 541 is data used by the management function 530 to monitor the performance of an AI/ML model or an AI/ML functionality. The inference output 541 may include an inference output of the AI/ML model generated by the inference function 540, and details of the inference output may vary depending on the use case.

The model storage function 550 stores trained/updated models that may be used to perform the inference function 540. The model storage function 550 illustrated in FIG. 5 may serve as a reference point, if applicable, for protocol termination, model transmission/transfer, and related processes. In addition, the model storage function 550 is merely an example and is not intended to limit the actual storage location of the AI/ML model, and it may be omitted.

The model transfer/delivery 551 is used to deliver an AI/ML model to the inference function.

Depending on the capabilities of AI/ML functions between a plurality of nodes, levels of cooperation may be defined as follows, and modifications may be possible through a combination of a plurality of levels or separation of any one level.

Cat 0a) No collaboration framework: The AI/ML algorithm is purely implementation-based and does not require any modification of the wireless interface.

Cat 0b) This level corresponds to a framework without collaboration but involves a modified wireless interface adapted to efficiently implemented AI/ML algorithms.

Cat 1) Node-to-node assistance is involved to improve the AI/ML algorithm of each node. For example, this applies when a specific node receives assistance (for training, adaptation, etc.) from another node, and vice versa. At this level, model exchange between network nodes is not required.

Cat 2) Joint AI/ML operations among a plurality of nodes may be performed. This level requires AI/ML model commands or exchanges between network nodes.

FIG. 5 is a diagram illustrating an overall functional framework for an AI/ML model, and not all functions and/or all data/information/command signals illustrated in FIG. 5 may be performed within a specific node, but only some of them may be performed.

The AI/ML model may be classified into a one-side model or a two-side model depending on whether training and/or inference is performed within a single node or jointly/sequentially among a plurality of nodes.

The one-side model may refer to an AI/ML model in which inference is entirely performed by a single node (e.g., a UE or a network). Here, training of the AI/ML model may also be entirely performed by a single node. The training and inference of the AI/ML model may be performed by the same node, or the training and inference of the AI/ML model may be performed by different nodes, respectively.

The two-side model may refer to an AI/ML model in which joint inference is performed across a plurality of nodes (e.g., a UE and a network). The joint inference means that inference is jointly performed across a plurality of nodes, for example, a first part of the inference may be performed by a first node, and the remaining part of the inference may be performed by a second node. The two-side model may be classified into several types according to the training method of the AI/ML model.

- First type: The AI/ML model may be trained at a single node. In this case, joint training may be performed. Afterward, the trained model may be distributed to other nodes or entities.
- Second type: Joint training of the AI/ML model may be performed respectively at a plurality of nodes or entities (e.g., a network and a UE). The joint training may mean that model generation (e.g., a CSI generation part) and model reconstruction (CSI compression for sub-use cases) are trained within the same loop for forward activation and backward gradient. In this type, the joint training may include both simultaneous training (i.e., model generation training and model reconstruction training are performed simultaneously) and sequential training (i.e., model reconstruction training is performed after model generation training).
- Third type: Separate training of the AI/ML model may be performed respectively at a plurality of nodes (e.g., a network and a UE). The separate training may mean that training is sequentially started at one node and then continued at another node. In this case, when a first node first performs the AI/ML model and shares training data with a second node, the second node may perform the AI/ML model by using the shared training data. For example, training for a CSI generation part may be performed by the UE, and CSI reconstruction may be performed by the network.

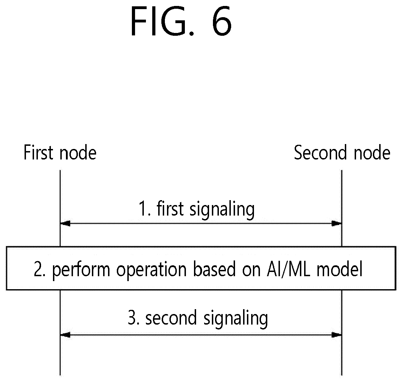

In the present disclosure described below, even without a specific mention (i.e., without an explicit reference such as by/based on/for an AI/ML model), the operation proposed in the present disclosure may be described or interpreted as being based on an AI/ML model, as illustrated in FIG. 6. FIG. 6 illustrates an example of an operation procedure based on an AI/ML model applicable to the present disclosure.

In addition, unless otherwise specifically limited in the description of the present disclosure, the AI/ML model may correspond to a one-side model in which inference is entirely performed by a single node, or a two-side model in which joint inference is performed across a plurality of nodes.

Step 1: In the description of the present disclosure provided below, signaling (e.g., information/data/channel/-signal, etc.) or a set of signaling between a specific node (e.g., a UE, a network, etc.) and another node may be interpreted, even without explicit mention, as signaling or a set of signaling in step 1 used to perform operations based on an AI/ML model. For example, such signaling may correspond to training data used for AI/ML model training (i.e., generation and/or reconstruction) as illustrated in FIG. 2, or to inference data used for AI/ML model inference, or to feedback for an AI/ML model. If signaling between nodes is not required prior to the AI/ML model-based operation in the present disclosure, step 1 may be omitted. When a one-side model is used in the present disclosure, unidirectional/bidirectional signaling (set) in the present disclosure may correspond to the signaling in step 1. In addition, when a two-side model is used in the present disclosure, unidirectional/bidirectional signaling in the present disclosure may also correspond to the signaling in step 1, and repetitive signaling operations may also correspond to the signaling in step 1.

For example, in AI/ML model-based beam management (BM), when beam(s) with good quality are predicted (i.e., inferred) by the base station based on the AI/ML model, the base station may receive quality/strength information for multiple beams from the UE. Also, beam(s) with good quality are predicted (i.e., inferred) by the UE based on the AI/ML model, the UE may receive a plurality of beams from the base station.

Step 2: In the description of the present disclosure provided below, an operation (e.g., computation, selection, prediction, etc.) performed at a specific node (e.g., a UE, a network, etc.) or a joint operation (e.g., computation, selection, prediction, etc.) performed at a plurality of nodes (e.g., a UE, a network, etc.) may correspond to the operation of step 2, which is based on one or more functions within the functional framework of an AI/ML model, even without explicit mention. For example, this may correspond to training (i.e., generation and/or reconstruction) or inference of the AI/ML model illustrated in FIG. 2. When a one-side model is used, an operation performed by a single node in the present disclosure may correspond to the operation of step 2, in addition, when a two-side model is used, a joint operation performed by a plurality of nodes in the present disclosure may correspond to the operation of step 2.

For example, in AI/ML model-based BM, the base station may use quality/strength information for a plurality of beams received from the UE as inference data and may predict (i.e., infer) beam(s) with good quality based on the AI/ML model. Also, the UE may measure a plurality of beams received from the base station, use the measurement results as inference data, and predict (i.e., infer) beam(s) of good quality based on the AI/ML model.

Step 3: In the description of the present disclosure provided below, signaling (e.g., information/data/channel/-signal, etc.) or a set of signaling between a specific node (e.g., a UE, a network, etc.) and another node may be interpreted, even without explicit mention, as signaling or a set of signaling in step 3 that is generated as a result of an operation based on an AI/ML model. For example, this may correspond to an output resulting from inference of the AI/ML model illustrated in FIG. 2. If signaling between nodes is not required as a result of an operation based on the AI/ML model in the present disclosure, step 3 may be omitted. When a one-side model is used in the present disclosure, unidirectional/bidirectional signaling (set) in the present disclosure may correspond to the signaling in step 3. In addition, when a two-side model is used in the present disclosure, unidirectional/bidirectional signaling in the present disclosure may also correspond to the signaling in step 3, and in addition, repetitive signaling operations may also correspond to the signaling in step 3.

For example, in AI/ML model-based BM, the base station may transmit to the UE one or more beams predicted based on the AI/ML model as candidates to allow the UE to determine an optimal beam. In addition, the UE may report, to the base station, beam(s) predicted based on the AI/ML model as candidates in order to request transmission of candidate beams from the base station for determining an optimal beam.

C-2. **THz communication**

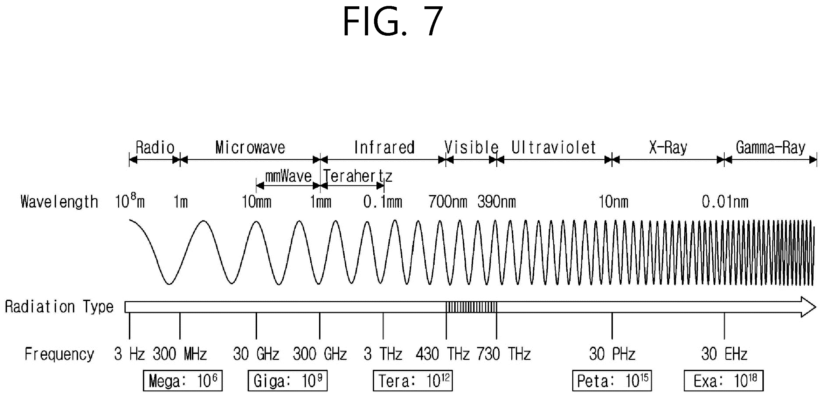

The data transmission rate may be increased by expanding the bandwidth. This may be achieved by using sub-THz communication with a wide bandwidth and applying advanced massive MIMO technology. THz waves, also known as sub-millimeter radiation, generally refer to a frequency band between 0.1 THz and 10 THz with a corresponding wavelength range of 0.03 mm to 3 mm. The 100 GHz-300 GHz frequency range (sub-THz band) is considered the main portion of the THz band for cellular communication. Adding the sub-THz band to the mmWave band increases the capacity of 6G cellular communication. Among the defined THz bands, the 300 GHz-3 THz range belongs to the far-infrared (IR) frequency region. The 300 GHz-3 THz range is part of the optical band but lies at its boundary, immediately following the RF band. Therefore, this 300 GHz-3 THz range exhibits similarity to the RF band. FIG. 7 illustrates an example of an electromagnetic spectrum applicable to the present disclosure. The embodiment of FIG. 7 may be combined with various other embodiments. Key characteristics of THz communication include (i) widely available bandwidth that supports extremely high data transmission rates, and (ii) high path loss occurring at high frequencies (high-directionality antennas are indispensable). The narrow beamwidth generated by high-directionality antennas reduces interference. The short wavelength of THz signals allows a much larger number of antenna elements to be integrated into devices and base stations operating in this band. This enables the use of advanced adaptive array techniques that can overcome range limitations.

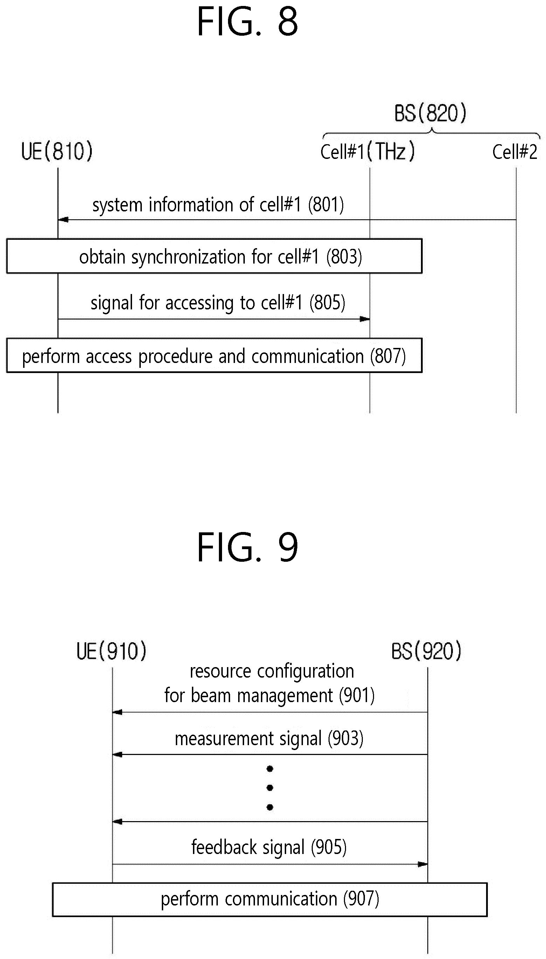

In the THz frequency band, transmitting system information (i.e., information related to attributes, characteristics, and/or capabilities of a base station necessary for service use, such as MIB and SIB) may be inefficient because, in high-frequency bands, the beamwidth becomes narrower, requiring more frequent beam sweeping to cover the entire area of the cell. In particular, when there are few users within the cell, transmitting system information through such a method becomes even more inefficient. Accordingly, a system information transmission procedure such as that illustrated in FIG. 8 may be used.

(System information reception method)

FIG. 8 illustrates an example of a procedure for transmitting system information for THz communication applicable to the present disclosure. Although this example is described in consideration of a THz scenario, it may also be applied to a 6G communication environment where THz is not used. In addition, the procedure illustrated in FIG. 8 may be combined with various embodiments of the present disclosure described below. For example, the embodiments described below may be performed based on the system information obtained through the procedure illustrated in FIG. 8.

Referring to FIG. 8, in step 801, the base station 820 transmits system information of cell #1 through cell #2. That is, the base station 820 provides at least two cells, where cell #1 uses a THz frequency band, and cell #2 uses a frequency band other than the THz frequency band. Here, the system information may include at least one piece of information/-state/parameter/configuration generated at each of the higher layer and the physical layer. For example, at least one piece of information/state/parameter/configuration generated at the higher layer may include at least one of an SFN, control information configuration for SIB1 (e.g., PDCCH configuration for SIB1), information related to cell selection/entry (e.g., cell barring, cell reselection, etc.), and subcarrier spacing, and at least one piece of information/state/parameter/configuration generated at the physical layer may include at least one of an SFN, a half-frame indicator, and an SSB index. However, this is merely an example, and the system information may include information/state/parameter/configuration related to cell #1 and/or cell #2, generated at various types of physical and higher layers. For this purpose, in one example, cell #1 and cell #2 may have a relationship of a secondary cell and a primary cell.

In step 803, the UE 810 obtains synchronization for cell #1. The synchronization may be obtained by detecting a synchronization signal. Generally, synchronization is obtained before receiving system information, however, since the system information of cell #1 is received through cell #2, synchronization acquisition for cell #1 may be performed after the reception of system information. For example, the UE 810 may obtain synchronization based on the system information.

However, unlike FIG. 8, in another example, the synchronization acquisition may be performed before step 801.

In step 805, the UE 810 transmits a signal for accessing cell #1. For example, the signal may include information for accessing cell #1 (e.g., a random access preamble). The structure of the signal and the resource (e.g., a channel) for transmitting the signal may be identified through the system information. Subsequently, in step 807, the UE 810 and the base station 820 perform an access procedure for cell #1 and perform communication. In this step, operations according to various embodiments described below may be performed.

The procedure described with reference to FIG. 8 may be performed when the UE 801 initially accesses cell #1 of the base station 820. Alternatively, a similar procedure may be performed when the UE 801 performs a handover to cell #1 of the base station 820. However, in the case of handover, the system information of cell #1 may be received from a cell of another base station rather than from cell #2 of the base station 820.

Communication in the THz band is expected to experience extremely severe path loss, and to overcome this, the UE and the base station must use very sharp beams. The use of sharp beams means that the UE and the base station must perform beam control along with beamforming, and that the number of beams used becomes very large. Accordingly, a considerable amount of time is required to align transmission and reception beams between the base station and the UE. Furthermore, when the beam alignment between the base station and the UE is disturbed due to UE movement or mobility, time for re-aligning the beams is frequently required, which may cause instability of the link. Therefore, a beam management procedure such as that illustrated in FIG. 9 may be used.

(Beam search procedure in a THz communication environment)

FIG. 9 illustrates an example of a beam management procedure applicable to the present disclosure. FIG. 9 shows an example of a procedure for searching for and/or selecting beams for THz communication, but it is not limited to the THz environment, and the present disclosure may also be applied to a 6G communication environment. In addition, the procedure illustrated in FIG. 9 may be combined with various embodiments of the present disclosure described below. Here, the term beam may be interpreted as 'spatial (configuration) information', 'spatial domain filter', 'spatial domain transmission filter', 'spatial domain reception filter', or other terms (e.g., reference signal, synchronization signal block (SSB) index, transmission reception point (TRP), panel, cell, transmission point (TP), base station, or control resource-related information such as control resource set (CORESET)-related information) having an equivalent technical meaning capable of distinguishing beams.

Referring to FIG. 9, in step 901, the base station 920 configures resources for beam management. Here, the resources may include at least one of time-frequency resources, channels, and spatial resources (e.g., antenna ports). For example, the base station 920 may utilize a beam search signal (BSS) that is transmitted spatially separated from existing downlink signals/channels for beam search. Here, the BSS may be transmitted based on dedicated ports for beam search. The dedicated ports may be different from ports used for transmission of existing downlink signals/channels (e.g., synchronization signals such as SSBs, or data channels such as PDSCH). The term BSS is defined for convenience of explanation, and the technical idea according to this embodiment is not limited to the term BSS itself. That is, a signal transmitted based on dedicated ports defined/configured for beam search may be included in the technical idea of this embodiment.

In step 903, the base station 920 transmits measurement signals by using a plurality of transmission beams. For example, the measurement signals may include at least one of reference signals and synchronization signals. In this case, the measurement signals may be transmitted for as many beams as those requiring measurement and may be transmitted using a multi-beam transmission method that forms multiple beams simultaneously to reduce sweeping time. Here, the multi-beam transmission may be performed based on at least one of a multi-panel, a sub-array, and a true time delay (TTD).

In step 905, the UE 910 transmits a feedback signal to the base station 920. The feedback signal indicates at least one beam selected by the UE 910. The UE 910 may select at least one preferred beams based on the measurement signals received in step 903. In step 907, the UE 910 and the base station 920 perform communication. At this time, the UE 910 and the base station 920 may perform communication by using the beam selected in step 905. When channel reciprocity is established, the transmission beam of the UE 910 may also be determined through steps 903 and 905, and therefore, the transmission operation of the UE 910 may be performed by using the beam selected in step 905. If channel reciprocity is not established, a procedure including transmission of measurement signals by the UE 910 and transmission of a feedback signal by the base station 920 may be performed in advance to determine the transmission beam of the UE 910. In step 907, operations according to various embodiments described below may be performed.

## C-3. Non-terrestrial networks (NTN)

An NTN may refer to a network or network segment that uses radio frequency (RF) resources mounted on a satellite (or an unmanned aerial system (UAS) platform). The use of NTN services has been considered to provide wireless communication services in areas where wider coverage is required or where the installation of terrestrial base stations is difficult. The NTN service may collectively refer to a wireless communication system that provides service to UEs by installing base stations on non-terrestrial platforms such as satellites (e.g., geostationary orbit, low Earth orbit, or medium Earth orbit satellites), airplanes, unmanned airships, or drones. The satellite described in the present disclosure may move at high speed relative to a specific location on Earth, and a satellite beam directed toward Earth may correspond to an area on Earth where the satellite can provide service to users.

In one example of the present disclosure, an NTN scenario may be classified into a geostationary cell scenario and a moving cell scenario on Earth, depending on the type of cell supported by the satellite. The geostationary cell scenario refers to a scenario in which a cell is permanently maintained or maintained for a specific service duration within a location on the specific surface based on the beam steering function of the satellite. The moving cell scenario refers to a scenario in which the beam steering function of the satellite is not used, and the service is provided through fixed beams, causing the cell on the surface to continuously move.

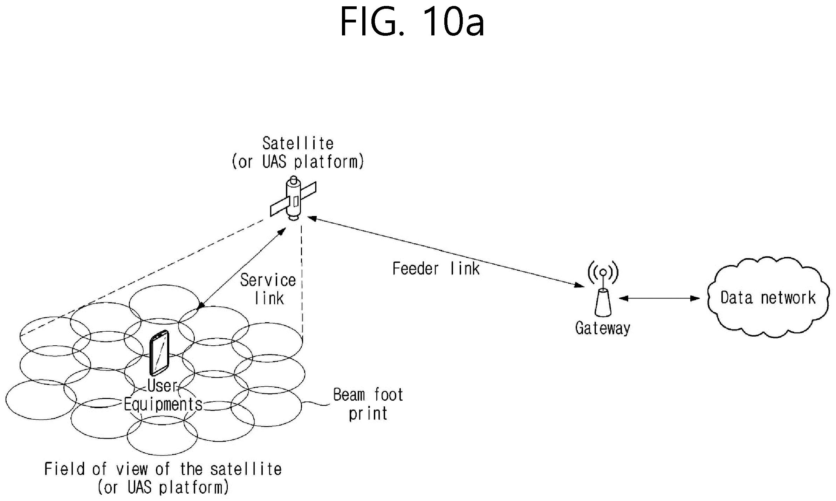

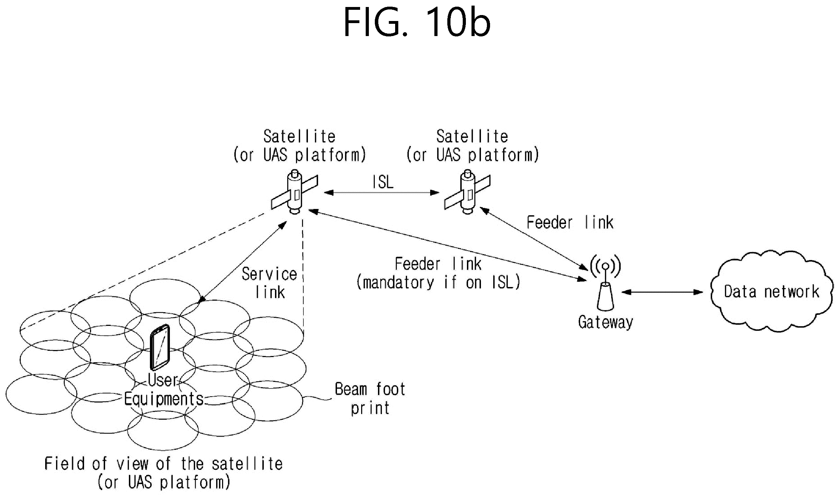

In another example of the present disclosure, an NTN scenario may be classified into a typical NTN scenario based on a transparent payload and a typical NTN scenario based on a regenerative payload, depending on the characteristics of the payload. FIG. 10a illustrates an example of a typical NTN scenario based on a transparent payload applicable to the present disclosure. FIG. 10b illustrates an example of a typical NTN scenario based on a regenerative payload applicable to the present disclosure. The embodiments of FIG. 10a or FIG. 10b may be combined with various embodiments of the present disclosure. Referring to FIG. 10a, a satellite (or a UAS platform) may establish a service link with a UE. The satellite (or UAS platform) may be connected to an NTN gateway through a feeder link. The satellite may be connected to a data network through the gateway. A beam footprint may refer to an area in which signals transmitted by a satellite can be received. Referring to FIG. 10b, a satellite (or a UAS platform) may establish a service link with a UE. The satellite (or UAS platform) connected to the UE may be connected to another satellite (or UAS platform) through inter-satellite links (ISLs). The other satellite (or UAS platform) may be connected to a gateway through a feeder link. Based on a regenerative payload, the satellite may be connected to a data network through another satellite and the gateway. When there is no inter-satellite link (ISL) between satellites, a feeder link between the satellite and the gateway may be required. FIG. 10a and FIG. 10b are merely examples of NTN scenarios, and the NTN may be implemented based on various types of scenarios. For example, a satellite (or a UAS platform) may implement a transparent payload or a regenerative (with on board processing) payload. For example, a satellite (or a UAS platform) may generate multiple beams over a designated service area according to the field of view of the satellite (or UAS platform). For example, the field of view of the satellite (or UAS platform) may vary depending on the onboard antenna diagram and the minimum elevation angle. For example, a transparent payload may include radio frequency filtering, frequency conversion, and amplification. Therefore, a waveform signal repeated by the payload may remain unchanged. For example, a regenerative payload may include radio frequency filtering, frequency conversion and amplification, demodulation/decoding, switching and/or routing, and coding/modulation. For example, the regenerative payload may be substantially equivalent to equipping the satellite (or UAS platform) with all or part of base station functionality.

Hereinafter, procedures for maintaining network service continuity and satellite coverage in a wireless communication system utilizing NTN elements (e.g., initial cell selection, mobility management in idle mode, and mobility management in connected mode) is described.

- Initial cell selection procedure

The UE may search for a first satellite-based NTN cell (or a satellite broadcasting the cell) when power is turned on. At this time, if the UE has satellite orbit information (i.e., ephemeris data) and/or RTT (round-trip time) information that can be used when performing a cell entry procedure (e.g., a random access procedure), the UE may use such information to shorten the cell search procedure and reduce the time required for cell search. To this end, the UE may require (initial) system information including satellite orbit (ephemeris) information for identifying the precise location of the cell, and the (initial) system information may be configured/determined/generated based on orbital plane information already held by the UE. For example, satellite-level orbit parameters for all satellites that can provide service to the UE through the UE uSIM, including satellite ID or index, may be provided in advance. Subsequently, since the system information includes and broadcasts the satellite ID of the serving satellite, the UE may use this to derive orbit data (ephemeris data) related to the serving satellite stored in the uSIM and/or the positional coordinates of the serving satellite. Additionally, to assist with mobility handling, the UE may obtain information related to neighboring satellites through system information and/or dedicated RRC signaling.

Here, the satellite orbit (ephemeris) information transmitted to the UE through system information and/or RRC signaling may be implemented/supported in i) a position and velocity state vector orbit format, and ii) an orbital parameter (ephemeris) format. For example, the position and velocity state vector orbit format may consist of 17 bytes or less (e.g., 132 bits). The field size for position (x, y, z) (in meters) may be 78 bits, and the field size for velocity (vx, vy, vz) (in meters per second) may be 54 bits.

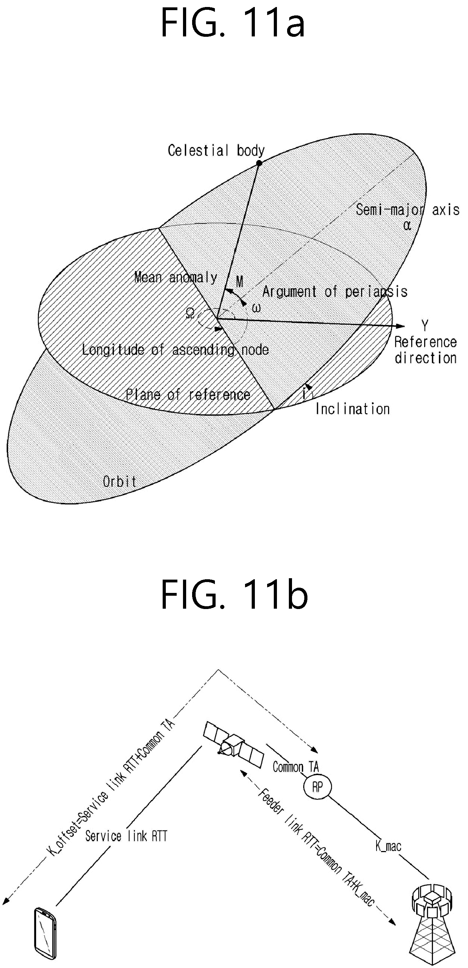

The orbital parameter ephemeris format may consist of 21 bytes or less (e.g., 164 bits). FIG. 11a illustrates an example of components of the orbital parameter ephemeris format. The components of the orbital parameter ephemeris format illustrated in FIG. 11a are as follows.

- Semi-major axis (half of the major axis of the elliptical satellite orbit) "$\alpha$" [m] (e.g., 33 bits)
- Eccentricity "e" (in an elliptical satellite orbit, where 0 < e < 1) (e.g., 20 bits)
- Argument of periapsis (the angle measured from the ascending node to the periapsis (the point closest to the central body), determining the orientation of the ellipse within the orbital plane) "$\omega$" [rad] (e.g., 28 bits)
- Longitude of ascending node (the angle measured counterclockwise from a reference point (e.g., the vernal equinox in the solar system) to the ascending node (the point where the orbit passes from below to above the reference plane)) "$\Omega$" [rad] (e.g., 28 bits)
- Inclination (the tilt of the ellipse relative to the reference plane, measured as the angle between the orbital plane and the reference plane at the ascending node) "i" [rad] (e.g., 27 bits)
- Mean anomaly (an angle that changes continuously over time, mathematically convenient but not corresponding to a geometric angle) "M" = M(t0) at the epoch t0 [JD] (e.g., 28 bits) [rad]
- Mobility management in idle mode

During the idle mode, the location of the UE may be identified at the tracking area level or unit. Here, a tracking area is defined as a set of cells, and each cell may belong to a tracking area identified by a tracking area code (TAC). The TAC may be transmitted through system information of a broadcast channel. Multiple cells may belong to the same tracking area, and the same TAC corresponding to the same tracking area may be broadcast. The location of the UE may be known to the network when the UE is first turned on (i.e., when performing a registration procedure). The registration request message transmitted by the UE for the registration procedure may include the TAC of the cell on which the UE is currently camped. When the UE moves and changes cells, it may determine the tracking area of the new cell by decoding the system information of the changed cell. The UE may move within the same tracking area without performing an update. When the UE enters a new cell using a different TAC, the UE may perform registration in the new cell and transmit the new TAC to update its location to the network. Accordingly, as the tracking area becomes larger, signaling from the UE to the network decreases, thereby minimizing UE power consumption. When the network needs to reach a UE in idle mode (e.g., for an incoming call), the network may page the UE in all cells belonging to the last tracking area where the UE performed registration. If the tracking area is very large and includes many cells, the number of paging messages may increase because the network pages the UE in all cells belonging to the TAC. When the same model is applied to a satellite system and each satellite broadcasts a TAC, the tracking area may sweep across the ground as the satellite orbits the Earth. In this case, even a stationary UE would need to perform registration updates frequently, which could affect the battery life of the UE and increase uplink signaling. To address this issue, the system may be designed so that the tracking area does not change its geographical position on Earth. Instead of the tracking area moving as the satellite moves, the satellite may change its tracking area when entering a new geographical region, and the TAC broadcast by the satellite may be updated to reflect the corresponding new geographical region. At the same time, when the UE detects a new TAC on the broadcast channel, it may perform a tracking area update procedure. Accordingly, if the UE does not change its physical location on Earth, its tracking area may remain fixed.

- Mobility management in connected mode

While the UE is in the connected mode, the mobility management procedure may be handled through a handover. In terrestrial networks or NTN networks, the handover may be triggered by the network (i.e., measurement-based handover triggering) based on measurement values reported by the UE for the signal quality of the current cell and neighboring cells. In the handover procedure, the service interruption time is defined as the time from when the UE stops transmission and reception with the source base station to when the UE resumes transmission and reception with the target base station. Meanwhile, the interruption time may differ between uplink and downlink. In the downlink, the interruption time may be defined as the time from when the network transmits a synchronized RRC reconfiguration message to when the target base station receives an RRC Reconfiguration Complete message. After transmitting the RRC reconfiguration message, the base station can no longer send data and may resume communication only after receiving the RRC Reconfiguration Complete message. In the uplink, the UE may potentially continue transmitting data to the source base station until the synchronized RRC reconfiguration message is received. Then, the interruption time may be defined as the time from when the UE receives the synchronized RRC reconfiguration message to when the target base station receives the RRC Reconfiguration Complete message.

Since the propagation delay value in a satellite-based NTN is much greater than that in a terrestrial system, additional waiting time may occur for mobility-related signals such as measurement reporting, reception of a handover (HO) command, and HO request/acknowledgment (when the target cell is served by another satellite). The geostationary Earth orbit (GEO) scenario is characterized by a much larger propagation delay compared to the low Earth orbit (LEO) scenario, but the latter requires consideration of satellite movement. To prevent extended service interruption, the waiting time related to mobility-related signaling needs to be addressed in both cases. In addition to the measurement-triggered handover described above, handover triggering based on the position of the UE and satellite (or the distance between the UE and the satellite), handover triggering based on the timing advance (TA) of the target cell, handover triggering based on deterministic satellite motion/local time, handover triggering based on the elevation angle of the source/target cell, etc. may be utilized. Additionally or alternatively, the UE may be pre-provided with handover configuration and handover triggering conditions (e.g., the position of the UE/satellite, or the strength of signals transmitted by the UE/satellite). For example, the UE may receive handover configuration and handover triggering conditions through information related to a new cell that will serve as a handover target. Accordingly, the UE may monitor the handover conditions and, when the conditions are satisfied, perform handover to the target cell.

Meanwhile, as described above, since a wireless communication system utilizing NTN elements has a much larger RTT value compared to a terrestrial communication system, various types of offsets and TA values may be configured/defined/indicated/signaled for efficient time and frequency synchronization. Hereinafter, offsets (e.g., K_offset and k_mac), TA values, validity duration, and epoch time for time/frequency synchronization in an NTN-based wireless communication system will be described.

- K_offset and k_mac

FIG. 11b illustrates examples of offsets in a link related to a satellite. The K_offset illustrated in FIG. 11b represents an offset value corresponding to the RTT of the uplink time synchronization reference point (RP). Here, K_offset may correspond to the sum of the service link RTT and the common TA (if indicated). The k_mac illustrated in FIG. 11b represents an offset value corresponding to the RTT between the RP and the base station. For example, K_offset may be applied to i) PUSCH transmission timing based on DCI and the DCI-scheduled PUSCH, ii) PUSCH transmission timing based on a random access response (RAR), iii) PUSCH transmission timing based on a configured grant, iv) PUCCH transmission timing according to MsgB, and v) transmission timing of non-periodic SRS/CSI resources. For example, k_mac may be applied to UE actions and assumptions related to downlink configuration indicated by MAC-CE command on the PDSCH. In a beam failure recovery procedure, for PRACH transmission in uplink slot n, the UE may monitor the corresponding PDCCH starting from downlink slot "n + k_mac + 4" within the corresponding RAR window.

The cell-specific K_offset may be signaled through system information related to NTN (e.g., an NTN-specific SIB). A range of cell-specific K_offset values (0 to 1023 ms) may be used to cover all scenarios. A differential UE-specific K_offset may be signaled through MAC CE, and the corresponding differential UE-specific value range may be 0 to 63 ms. The total UE-specific K_offset value equals the cell-specific K_offset value minus the differential UE-specific K_offset value. The k_mac may be provided by the network when the downlink and uplink frame timings are not aligned at the base station. Updating of k_mac is not supported, and its value range may be from 1 to 512 ms. When the UE does not receive a k_mac value from the network, the UE may assume k_mac = 0. In FR1, the reference SCS value for the unit of K_offset may be 15 kHz.

- UE-specific TA and common TA

In an NTN-based communication system, the UE may calculate a timing advance (TA) based on the UE's GNSS (global navigation satellite system) capability (e.g., UE location) and higher layer parameters related to satellite ephemeris transmitted from the base station, and this is referred to as a UE-specific TA ( $N_{TA,adj}^{UE}$ ). When the higher layer parameters related to satellite ephemeris are not received from the base station, the UE-specific TA may be set to 0. Then, the TA calculated based on the common TA parameters (e.g., TACommon, TACommonDrift, and/or TACommonDriftVariation) transmitted from the base station as higher layer parameters is referred to as the common TA ( $N_{TA,adj}^{common}$ ) When the common TA parameters are not transmitted from the base station, the common TA may be set to 0. Accordingly, in an NTN-based communication system, the total TA value (T_TA) may be calculated as $N_{TA} + N_{TA,offset} + N_{TA,adj}^{common} + N_{TA,adj}^{UE}$ . Here, N_TA,offset means a TA offset value provided to the UE for each serving cell, and N_TA means a value derived based on a timing advance command.

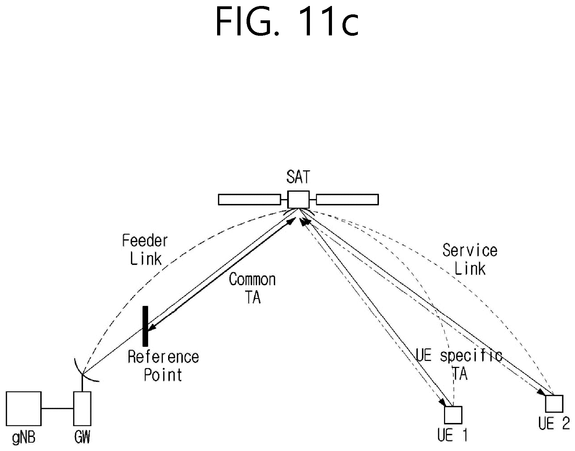

FIG. 11c illustrates examples of timing advance (TA) values in a link related to a satellite. As shown in FIG. 11c, the UE-specific TA is calculated to compensate for the transmission delay over the service link, while the common TA is calculated to compensate for the transmission delay between the RP and the satellite.

- Valid duration and epoch time

The validity duration refers to the (maximum) time interval during which the UE may apply previously obtained assistance information (e.g., serving and/or neighboring satellite ephemeris and common TA parameters, etc.) without obtaining new assistance information (from the epoch time). Configuration information related to the validity duration may be broadcast by the base station for each cell through system information related to NTN (e.g., SIB19). For example, the validity duration range may consist of {5s, 10s, 15s, 20s, 25s, 30s, 35s, 40s, 45s, 50s, 55s, 60s, 120s, 180s, 240s, 900s}, but is not limited thereto. A validity timer configured with the validity duration value may (re)start at the epoch time of the assistance information. If new or additional assistance information is unavailable within the validity duration, the UE may assume that uplink synchronization has been lost.

The serving satellite ephemeris and common TA parameters may be signaled in the same SIB message and may share the same epoch time. When the epoch time is explicitly provided through the SIB, the epoch time of the assistance information (i.e., satellite ephemeris and common TA parameters) corresponds to the start time of the DL subframe indicated by the SFN and the subframe number signaled together with the assistance information. When the epoch time is not explicitly indicated through the SIB, the epoch time of the assistance information may be implicitly known as the end of the SI window in which the NTN-specific system information (e.g., SIB19) is transmitted. When the epoch time is provided through dedicated signaling, the epoch time of the assistance information corresponds to the start time of the DL subframe and may be represented by the SFN and the subframe number.

In the case of a serving cell, when the epoch time is explicitly indicated by the SFN and subframe number, the UE may consider the corresponding frame as the next SFN following the frame in which the message indicating the current SFN or epoch time is received. In the case of a neighboring cell, when the epoch time is explicitly indicated by the SFN and subframe number, the UE may consider the corresponding frame as the frame closest to the frame in which the message indicating the epoch time is received.

## C-4. Integrated sensing and communication (ISAC)

Radio sensing is a technology that can obtain information about the characteristics of an environment and/or objects within the environment by identifying instantaneous flux velocity, angle, and distance (range) of objects using radio frequencies. Because the radio frequency sensing function does not require connecting an object to a device through the network, it may provide object-positioning services without the need for dedicated devices. The ability to obtain range, velocity, and angle information from radio frequency signals may enable a wide range of new functions, such as object detection, object recognition (e.g., vehicles, humans, animals, UAVs), high-precision positioning, tracking, and activity recognition. Radio sensing services may provide information to various industries (e.g., unmanned aerial vehicles, smart homes, V2X, factories, railways, public safety, etc.) that enable applications such as intrusion detection, assisted driving and navigation, trajectory tracking, collision avoidance, traffic management, and health or transportation monitoring. In some cases, radio sensing may use non-3GPP-type sensors (e.g., radar, cameras) to additionally support 3GPP-based sensing. For example, the operation of a wireless sensing service, i.e., the sensing operation, may depend on the transmission, reflection, and scattering of wireless sensing signals. Therefore, radio sensing may provide an opportunity to enhance existing communication systems from communication networks into radio communication and sensing networks.

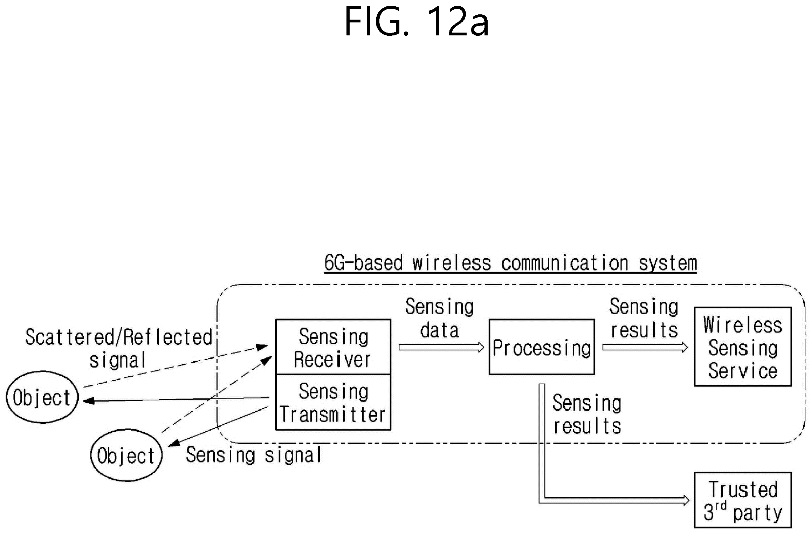

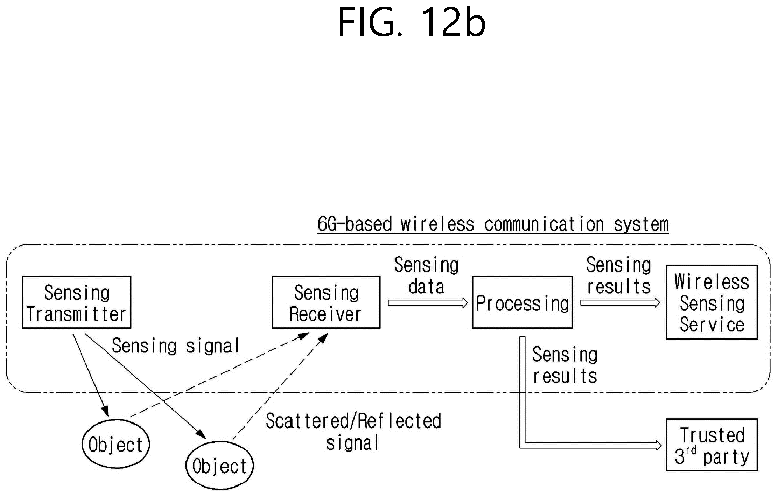

FIG. 12a and FIG. 12b illustrate examples of sensing operations applicable to the present disclosure. The embodiments shown in FIG. 12a and FIG. 12b may be combined with various embodiments of the present disclosure. Specifically, FIG. 12a illustrates an example of sensing (e.g., monostatic sensing) using a sensing receiver and a sensing transmitter located at the same position, and FIG. 12b illustrates an example of sensing (e.g., bistatic sensing) using a separated sensing receiver and sensing transmitter.

For example, in a wireless communication system based on a 6G network according to the present disclosure, referring to FIG. 12a, the sensing transmitter and sensing receiver may be configured to be included in a single base station (i.e., the same base station) or a single UE (i.e., the same UE). In contrast, referring to FIG. 12b, the sensing transmitter and sensing receiver may be configured to be included in different base stations, in different UEs, or respectively in a UE and a base station.

In this regard, based on whether the sensing transmitter and the sensing receiver are included in a base station or a UE, six types of sensing modes may be defined as follows:

- Mode 1: A mode in which the sensing transmitter and sensing receiver are included in a single base station (e.g., a base station-based sensing mode in a monostatic mode)
- Mode 2: A mode in which the sensing transmitter is included in a first base station and the sensing receiver is included in a second base station different from the first base station (e.g., a base station-based sensing mode in a bistatic mode)

- Mode 3: A mode in which the sensing transmitter is included in a base station and the sensing receiver is included in a UE (e.g., a base station-to-UE sensing mode)
- Mode 4: A mode in which the sensing transmitter is included in a UE and the sensing receiver is included in a base station (e.g., a UE-to-base station sensing mode)
- Mode 5: A mode in which the sensing transmitter and sensing receiver are included in a single UE (e.g., a UE-based sensing mode in a monostatic mode)
- Mode 6: A mode in which the sensing transmitter is included in a first UE and the sensing receiver is included in a second UE different from the first UE (e.g., a UE-based sensing mode in a bistatic mode)

In a wireless communication system based on a 6G network according to the present disclosure, one or more of the six types of sensing modes described above may be used independently or in combination.

In connection with the sensing operations illustrated in FIG. 12a and FIG. 12b, a sensing transmitter may transmit a sensing signal for sensing one or more objects (and/or the environment surrounding the objects). For example, the sensing signal may correspond to a radio (frequency) signal defined to be transmittable by a base station or a UE in a wireless communication system based on the 6G network of the present disclosure. A sensing receiver may receive a signal that has been scattered or reflected by one or more objects (and/or the environment surrounding the objects) from the sensing signal transmitted by the sensing transmitter. At the sensing receiver, sensing data may be derived from the scattered/reflected signal, and sensing results may be generated or obtained through processing of the sensing data. Here, the sensing results may include characteristic information (e.g., position, distance, velocity, angle, etc.) of one or more objects (and/or the environment surrounding the objects). The sensing results generated or obtained in this manner may be used for radio sensing services (e.g., detection or tracking of objects and/or environments) provided by the wireless communication system based on the 6G network of the present disclosure, or may be provided/disclosed to a trusted third party.

Additionally, although the sensing operations in FIG. 12a and FIG. 12b are described as representative examples of operations in a wireless communication system based on a 6G network, they may also be extended and applied to cases where UEs/base stations/signals based on previous generations (e.g., 4G, 5G, etc.) are utilized.

Furthermore, with respect to radio sensing described in the present disclosure, in a wireless communication system based on a 6G network according to the present disclosure, the time/frequency resources for sensing operations and the time/frequency resources for general communication (e.g., UL/DL/sidelink-based communication) may be separately scheduled/configured.

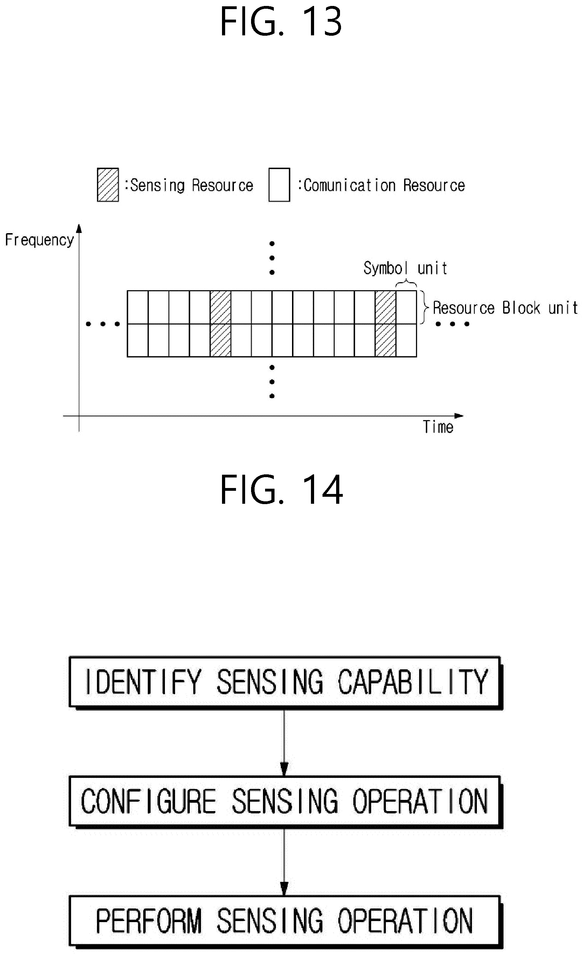

FIG. 13 illustrates an example of time/frequency resources for sensing operations applicable to the present disclosure. The embodiment of FIG. 13 may be combined with various embodiments of the present disclosure.

Referring to FIG. 13, time/frequency resources (hereinafter, sensing resources) for the above-sensing operation (e.g., sensing operation based on FIG. 12a and FIG. 12b) may be configured/allocated separately from time/frequency resources (hereinafter, communication resources) for general communication.

For example, as illustrated in FIG. 13, the sensing resources may be configured or allocated in units of symbols in the time domain and/or in units of resource blocks in the frequency domain. Resources other than those configured or allocated as sensing resources may be used as resources for general communication. That is, the sensing resources and communication resources may be configured or allocated based on a time-division multiplexing (TDM) scheme and/or a frequency-division multiplexing (FDM) scheme in terms of base station/UE operations. Additionally or alternatively, unlike the example shown in FIG. 13, the sensing resources may be configured or allocated based on other units in the time domain (e.g., slot, frame, or absolute time such as ms or μs) and/or other units in the frequency domain (e.g., subcarrier, carrier, or absolute frequency such as MHz or GHz).

Additionally or alternatively, with respect to the configuration/allocation/scheduling of resources for general communication described in the present disclosure, the relationship between such resources and the sensing resources described above may need to be considered. For example, when configuring or allocating resources for general communication according to embodiments of the present disclosure, such resources may be configured/allocated to perform rate matching or puncturing for the resource region corresponding to the sensing resources. For example, when scheduling resources for general communication according to embodiments of the present disclosure, such resources may be scheduled so as not to overlap with the resource region corresponding to the sensing resources. If, in embodiments of the present disclosure, the resources for general communication and the resource region corresponding to the sensing resources are configured/allocated/scheduled to overlap, either or both operations may be dropped, skipped, or postponed based on priority or predefined rules. That is, in embodiments of the present disclosure, it may be preferable that the resources related to general communication (e.g., resources for signals/channels related to UL/DL/sidelink-based data/control) be configured/allocated/scheduled so as not to overlap with the sensing resources described above.

Additionally, with respect to the radio sensing described in the present disclosure, various channel modeling methods may be applied. Channel modeling related to sensing may refer to constructing a path for transmitting and/or receiving sensing signals and/or scattered/reflected signals, considering the object to be sensed and/or the environment to which the object belongs. Since channel modeling may be related to the performance and requirements of sensing in a wireless communication system, it may be an important aspect for verifying the feasibility of the sensing function.

The channel related to sensing may be classified into a channel between an object (e.g., a target of interest) and the sensing transmitter/receiver, and a channel between the environment to which the object belongs and the sensing transmitter/receiver. In this regard, channel modeling related to sensing may be classified based on the sensing mode (e.g., the six types of modes described above), whether the focus is on an object or an environment, and/or the sensing scenarios. For example, channel modeling for a target in a base station/UE-based monostatic sensing mode, channel modeling for a target in a base station/UE-based bistatic sensing mode, channel modeling for an environment in a base station/UE-based monostatic sensing mode, and channel modeling for an environment in a base station/UE-based bistatic sensing mode may each be differently optimized and configured. For example, when various sensing scenarios are classified, channel modeling may be categorized into channel modeling for detection, location, and tracking scenarios, channel modeling for motion recognition, and channel modeling for imaging or environmental reconstruction scenarios. Additionally, channel modeling related to sensing may be based on a statistical channel modeling technique and/or a deterministic channel modeling technique. For example, modeling for sensing in a wireless communication system based on the 6G network of the present disclosure may be based on a stochastic geometry channel modeling technique and/or a hybrid channel modeling technique including ray tracing channel modeling. Here, the stochastic geometry channel model may be based on various statistical characteristics of channel conditions. In addition, the hybrid channel model may be based on both the ray tracing technique and the stochastic technique. In the case of the hybrid approach, channel modeling for objects (e.g., targets of interest) that require high accuracy and consistency may be performed using the ray tracing technique, while channel modeling for the environment may be performed using the stochastic technique.

FIG. 14 illustrates an example of a procedure related to sensing operations applicable to the present disclosure. The embodiment of FIG. 14 may be combined with various embodiments of the present disclosure.

For example, in a wireless communication system based on the 6G network of the present disclosure, in the case of a sensing operation in which a UE participates, the base station may need to identify the capability of the UE related to the sensing operation. In this regard, the UE may be configured to report capability information to the base station indicating whether it supports the sensing operation. Additionally or alternatively, if the UE is predefined by specification to support sensing operations, such a procedure may be omitted. Furthermore, in the case of a sensing operation in which only the base station participates, the base station may be configured to report capability information indicating whether it supports the sensing operation to the entity (e.g., a higher-layer network entity above the base station) that configures or controls its sensing operation.

For example, the base station may perform signaling with the UE to exchange configuration information related to the sensing operation. For example, the base station may configure or indicate to the UE information related to the sensing operation mode (e.g., based on the six types of modes described above), the entity of the sensing operation (e.g., sensing transmitter, sensing receiver), the resources for the sensing operation (e.g., sensing resources as shown in FIG. 13), the utilization target of sensing results (e.g., the type of radio sensing service based on the 6G network, or a trusted third party), and the channel modeling for sensing (e.g., the channel between the base station/UE and the object/environment). For example, the base station may be configured/instructed with such information from network entity at a higher level/layer of the base station.

For example, the base station and/or the UE may perform a sensing operation based on the configured/indicated information. For example, the base station and/or the UE, in the role of a sensing transmitter and/or sensing receiver, may perform procedures such as transmission of a sensing signal, reception of a scattered/reflected signal, derivation of sensing data, acquisition of sensing results through processing of the sensing data, and provision of the sensing results, as illustrated in FIG. 12a and FIG. 12b described above. In one example, in the operation of the base station/UE described in the present disclosure, the sensing results provided through the sensing operation may also be utilized.

### D. Network Energy Saving (NES)

Energy saving of a base station is being importantly considered in wireless communication systems, including 3GPP, because it may contribute to building an eco-friendly network by reducing carbon emissions and to reducing the operational expenditure (OPEX) of operators in the telecommunications industry. In particular, due to the introduction of 5G communication, higher transmission rates are required, and therefore, base stations need to be equipped with a greater number of antennas and provide services through wider bandwidths and frequency bands. As a result, according to recent studies, the energy cost of base stations has reached a level of about 20% of the total OPEX. Accordingly, the 5G system has adopted various technologies for reducing energy consumption under the name of network energy savings (NES), and the standardization of related technologies is expected to continue. Specifically, Rel-18, which has been recently conducted, discussed techniques such as the following.

1. Specify SSB-less SCell operation for inter-band CA for FR1 and co-located cells, if found feasible by RAN4 study, where a UE measures SSB transmitted on PCell or another SCell for an SCell's time/frequency synchronization (including downlink AGC), and L1/L3 measurements, including potential enhancement on SCell activation procedures if necessary [RAN4, RAN2]

2. Specify enhancement on cell DTX/DRX mechanism including the alignment of cell DTX/DRX and UE DRX in RRC_CONNECTED mode, and inter-node information exchange on cell DTX/DRX [RAN2, RAN1, RAN3]

· Note: No change for SSB transmission due to cell DTX/DRX.
· Note: The impact to IDLE/INACTIVE UEs due to the above enhancement should be avoided.

3. Specify the following techniques in spatial and power domains

· Specify necessary enhancements on CSI and beam management related procedures including measurement and report, and signaling to enable efficient adaptation of spatial elements (e.g. antenna ports, active transceiver chains) [RAN1, RAN2]
· Specify necessary enhancements on CSI related procedures including measurement and report, and signaling to enable efficient adaptation of power offset values between PDSCH and CSI-RS [RAN1, RAN2]
· Note: Above objectives are only for UE specific channels/signals
· Note: Legacy UE CSI/CSI-RS capabilities applies when considering total number of CSI reports and requirements

4. Specify mechanism(s) to prevent legacy UEs camping on cells adopting the Rel-18 NES techniques, if necessary [RAN2]
5. Specify CHO procedure enhancement(s) in case source/target cell is in NES mode [RAN2]
6. Specify inter-node beam activation and enhancements on restricting paging in a limited area [RAN3].
7. Specify the corresponding RRM/RF core requirements, if necessary, for the above features [RAN4]

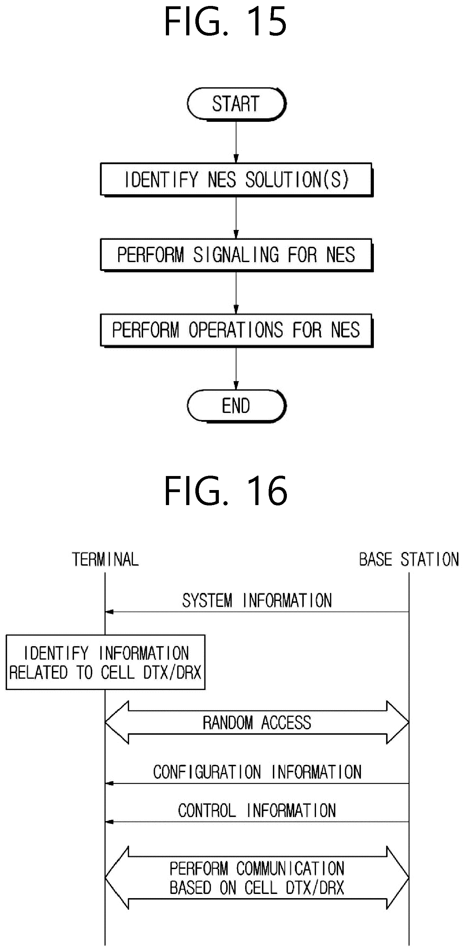

According to the application of the NES technology, a base station may perform operations such as controlling on/off in a time axis for a certain time duration, adjusting transmission/reception resources for UE-common or UE-specific signals/channels, changing an amount of frequency-domain resources, adjusting transmission power, or turning on/off antenna ports, transmission-reception points (TRPs), etc. in a spatial domain. FIG. 15 illustrates an example of an operation procedure of a base station supporting an NES technology applicable to the present disclosure. Referring to FIG. 15, the base station identifies NES solution(s) to be applied. The NES solution(s) may be related to control of signal transmission/reception (e.g., on/off), beam operation, handover procedure, channel measurement and reporting, and the like. Which NES solution(s) to apply may be adaptively selected according to a current situation (e.g., cell load level, characteristics of connected UEs, etc.) or may be predefined. The base station having identified the NES solution(s) performs signaling for NES. The specific signaling procedure may vary depending on the identified NES solution(s). For example, the base station may transmit common information regarding the NES solution(s), may transmit configuration information necessary for NES operation to at least one UE. In addition, the base station may receive capability information related to NES from at least one UE. Thereafter, the base station performs operations for NES. In this case, the base station may perform the operations for NES based on the signaling performed earlier. That is, according to system information, configuration information, and control information transferred through the signaling, the base station may turn on/off transmission/reception of a specific signal, turn on/off elements of a spatial domain, or adjust resources for transmission/reception of a measurement signal.

Through a procedure such as that of FIG. 12, the NES technology may be performed. Examples of NES solutions that may be performed through a procedure such as that of FIG. 12 are as follows.

· Intra-system energy saving solution: the RAN node may request a neighboring RAN node to switch at least one SSB beam into its deactivated cell, or may perform paging to a UE in an inactive state (e.g., a stationary UE) using a limited beam set.
· Inter-system energy saving solution: the NG-RAN node having a capacity booster cell may autonomously switch the cell to an inactive state.
. SSB-less SCell solution: when an SSB or an SSB-based RRM measurement timing configuration (SMTC) configuration for an SCell is not provided, the UE may obtain a timing reference and an AGC source from another serving cell. In FR1 or FR2, the base station may configure intra-band CA or inter-band CA including an SCell without SSB transmission, and in this case, SSB/SIB transmission may be triggered by a wake up signal (WUS) of the UE. Accordingly, since the period of a common channel/signal such as an SSB is increased, the base station may remain in a sleep state for a longer time.
· Cell DTX/DRX solution: To reduce downlink transmission/uplink reception activity time of a base station, a periodic cell DTX/DRX pattern (e.g., active and inactive periods) may be commonly configured for UEs in a cell having such a feature. Here, the cell DTX pattern and the cell DRX pattern may be separately configured and activated, and up to two cell DTX/DRX patterns may be configured per MAC entity. When cell DTX is configured and activated, at least one of monitoring for SPS opportunities or monitoring a PDCCH may be suspended during a cell DTX inactive period. When cell DRX is configured and activated, at least one of transmission on a CG resource or SR transmission may be suspended during a cell DRX inactive period. The cell DTX/DRX may be activated/deactivated through RRC signaling or L1 group common signaling.

· For cell DTX/DRX, parameters such as an active duration and a cycle may be configured. The active duration is a period in which the UE waits to receive a PDCCH or an SPS opportunity and to transmit an SR or a CG, and the cycle specifies periodic repetition of the active duration and an inactive duration. When both cell DTX and cell DRX are configured, parameters such as the active duration and the cycle are common. If the base station recognizes an emergency call or a public safety-related service (e.g., MPS or MCS), the network may release or deactivate the cell DTX/DRX configuration so as not to affect the corresponding service. In addition, at least partial overlap is required between the active duration of connected mode DRX of the UE and the active duration of cell DTX/DRX. For example, the connected mode DRX cycle of the UE may be a multiple of the cell DTX/DRX cycle or vice versa.

· Conditional handover (CHO) solution: the CHO procedure, in which execution of handover is determined by the UE, is used while an NES technology is applied (e.g., when a cell activates or deactivates cell DTX/DRX). In this case, the UE may use an NES-specific CHO event to execute CHO to a candidate cell, and as an additional triggering condition for this, reception of DCI that activates CHO condition(s) set as an NES event indication may be applied.

· Spatial and power domain adaptation solution: to support a gNB in transceiver muting and/or transmission power adaptation, a UE may be configured to report multiple CSI entries in CSI reporting based on a plurality of sub-configurations. Each sub-configuration corresponds to a spatial domain adaptation pattern (e.g., a subset of available spatial elements) and/or a power offset between a data channel (e.g., PDSCH) and CSI-RS. With the application of the spatial and power domain adaptation solution, CSI configuration, measurement, and/or reporting operations may be affected.

## **Cell** DTX/DRX

To operate the base station in a sleep mode for a relatively long duration without frequent wake-ups, base station DTX/DRX has been proposed for Network Energy Saving (NES) purposes. The base station may configure cell DTX and, within an active period of the cell DTX, configure on-durations of C-DRX for UEs, thereby reducing energy consumption by using DTX transmission under low system load conditions. FIG. 16 illustrates an example of a procedure for cell DTX/DRX operation applicable to the present disclosure.

Referring to FIG. 16, the base station transmits system information to the UE, and the UE checks information related to cell DTX/DRX. For example, the system information may include an MIB and an SIB1. In relation to NES technology, the MIB may include information related to cell barring (e.g., cellBarred), and the SIB1 may include information related to a cell barring status (e.g., cellBarredNES). Specifically, when the cellBarred included in the MIB is configured to a value indicating that the cell is not barred (e.g., notBarred), the UE may determine that the corresponding cell is not barred, regardless of whether NES cell DTX/DRX is supported. In contrast, when the cellBarred included in the received MIB is configured to a value indicating that the cell is barred (e.g., barred), a UE that does not support NES cell DTX/DRX may determine that the corresponding cell is barred. However, when the UE has the capability to support NES cell DTX/DRX, the UE checks the SIB1 to determine the cell barring status. If cellBarred in the MIB is configured to barred and cellBarredNES is absent in the SIB1, a UE supporting NES cell DTX/DRX may treat the corresponding cell as barred and perform cell reselection to another cell. On the other hand, if cellBarred in the MIB is configured to barred and cellBarredNES is included in the SIB1, a UE supporting NES cell DTX/DRX may determine that the corresponding cell is not barred.

In the case of FIG. 16, it is assumed that the UE has the capability to support NES cell DTX/DRX, and either cellBarred in the MIB is configured to notBarred, or cellBarred in the MIB is configured to barred and cellBarredNES is included in the SIB1. Accordingly, the UE may perform a random access procedure to connect to the base station and may subsequently perform communication. At this time, the base station performs cell DTX/DRX operation and transmits configuration information related to the cell DTX/DRX operation to the UE. The configuration information related to the cell DTX/DRX operation (e.g., CellDTXDRX-Config) includes at least one parameter related to the cell DTX/DRX, and may include, for example, at least one of an on-duration timer, a cycle start offset, a slot offset, a configuration type (e.g., DTX, DRX, or DTX-DRX), and an activation state (e.g., active, inactive) of DTX/DRX. In addition, the configuration information may further include information (e.g., DCI-related information) for receiving and interpreting control information related to the cell DTX/DRX.

Subsequently, the base station transmits control information related to the cell DTX/DRX to the UE. The control information related to the cell DTX/DRX may include DCI having a designated format (e.g., format 2_9). When an operation for a serving cell according to at least one of the cell DTX operation and the cell DRX operation is configured by configuration information (e.g., cellDTXDRX-Config), the UE may identify a search space set (e.g., a Type3-PDCCH CSS set) for monitoring a PDCCH that delivers control information of the designated format during an active time through a higher layer parameter (e.g., SearchSpace), and may obtain a location of information for the serving cell within the control information through another higher layer parameter (e.g., positionInDCI-cellDTRX). Then, the UE may obtain the control information based on the identified search space set and the obtained location.

The control information related to the cell DTX/DRX may be used to indicate activation or deactivation of cell DTX and/or cell DRX and/or to provide an NES mode indicator, and for example, may include at least one block including a cell DTX/DRX indicator and an NES mode indicator. In this case, when the serving cell is configured as a supplementary uplink (SUL) carrier, the indication of activation or deactivation of the cell DRX by the cell DTX/DRX indicator may be applied to both the uplink (UL) carrier and the SUL carrier.

Subsequently, the UE and the base station may perform communication based on the cell DTX/DRX. Specifically, the base station may turn on or off transmission and reception of signals according to the configuration related to the cell DTX/DRX, and accordingly, the UE may selectively monitor signals from the base station. During DTX-OFF, the base station enters a sleep mode to reduce energy consumption. In this case, the base station DTX cycle may be aligned with the UE DRX cycle. The base station DTX-ON may fully cover the UE DRX-ON. Furthermore, for NES purposes, the base station may align transmissions over Xn/NG and Uu. The DTX/DRX mechanism triggers switching of reference signal resource set groups, and the base station may perform a dormancy-like behavior of transmitting SSB, SIB, and CSI-RS sparingly or not transmitting at all to reduce energy consumption. The UE may sparsely receive or not receive downlink signals/channels according to the configuration of the base station. Once the base station DTX/DRX operation is triggered, during the DTX/DRX OFF duration, the UE may discontinuously receive corresponding CSI-RS, SSB, or PDCCH.

### CSI Measurement and Reporting

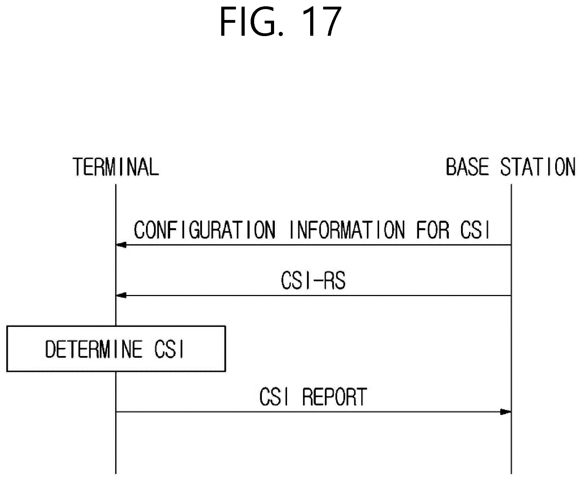

FIG. 17 illustrates an example of a procedure for CSI measurement and reporting applicable to the present disclosure.

Referring to FIG. 17, the base station transmits configuration information for CSI to the UE. The configuration information for CSI may include information related to a CSI-RS resource or resource set (e.g., time-frequency resource information, sequence information, power information, etc.), information related to CSI reporting (e.g., quantity information, report type information, report resource information, codebook information, etc.), and information related to CSI measurement. Here, to assist the base station in transceiver muting and/or transmission power adaptation, the UE may be configured to report multiple CSI entries in CSI reporting based on a plurality of sub-configurations. Here, each sub-configuration corresponds to a spatial domain adaptation pattern (e.g., a subset of available spatial elements) and/or a power offset. In addition, with respect to CSI reporting, a higher layer parameter (e.g., CSI-ReportConfig) included in the configuration information may include a list of sub-configurations, each sub-configuration being identified by an identifier (e.g., csi-ReportSubConfigID) and corresponding to a list of at least one CSI-RS resource, or to a CSI-RS antenna port subset, and/or, in addition to a power control offset parameter (e.g., powerControlOffset) for the CSI-RS resource(s), corresponding to a power offset for a PDSCH related to the CSI-RS.

In this case, the configuration related to CSI may include a plurality of sub-configurations. Accordingly, in interpreting the configuration information for CSI, the UE may determine a CSI-RS resource, CSI-RS port mapping, power offset, codebook type, reporting quantity, etc., by considering the sub-configurations. When the UE is configured with configuration information related to CSI reporting (e.g., CSI-ReportConfig) including sub-configurations, the UE is not expected that a higher layer parameter related to the reporting quantity (e.g., reportQuantity) is configured to 'cri-RSRP', 'cri-SINR', 'cri-SINR-Index', 'cri-RSRP-Index', 'none', 'ssb-Index-RSRP', 'ssb-Index-SINR', 'ssb-Index-RSRP-Index', 'ssb-Index-SINR-Index', or 'tdcp'. In addition, when the type of CSI reporting is configured as semi-persistent CSI reporting or aperiodic CSI reporting, the base station may activate/trigger only some of the sub-configurations configured for the UE through MAC CE or DCI. That is, a trigger state for aperiodic CSI reporting may be configured as needed, and activation of semi-persistent CSI reporting may be controlled by an activation command.

For example, regarding the configuration for a reporting quantity, the UE may determine CSI-RS port index(es) for each CSI-RS resource based on information related to a port subset for each sub-configuration (hereinafter referred to as 'port subset indicator'). The port subset indicator may include a bitmap for specifying a portion of antenna ports for the corresponding CSI-RS resource. Accordingly, the UE may identify at least one antenna port for the corresponding sub-configuration based on positions of bits set to a positive value (e.g., 1) in the port subset indicator.

For example, regarding the configuration for a reporting quantity, the UE may determine a codebook type based on whether sub-configurations are present. Specifically, when sub-configurations are configured for CSI reporting, the UE may exclude the configuration of at least one codebook type. However, depending on the capability of the UE, it may be possible to configure the at least one codebook type.

For example, regarding the configuration for a reporting quantity, a power offset value and an NZP CSI-RS resource set may be configured for each sub-configuration. In this case, depending on whether a power offset value is configured for each sub-configuration and whether an NZP CSI-RS resource set is configured, interpretation of the NZP CSI-RS resource set for each sub-configuration may vary.

In determining a CQI, a higher layer parameter related to a time restriction for channel measurements (e.g., timeRestrictionForChannelMeasurements) may be configured. In this case, the UE should derive a channel estimation for determining CSI based on the most recent CSI reference resource. In this case, when cell DTX for the base station is activated, the cell DTX active time may be considered.

The CSI is derived based on a CSI reference resource. The CSI reference resource is defined, in the frequency domain, as a group of downlink physical resource blocks corresponding to a band related to the CSI derived in the frequency domain, and is defined, in the time domain, as one downlink slot determined based on a higher layer parameter and a subcarrier spacing. The UE should transmit CSI reporting no later than the CSI reference resource after receiving a CSI-RS. In this case, when sub-configurations are configured for CSI reporting, the CSI reference resource is considered for each sub-configuration.

When configured to report at least one of a CQI index, PMI, or RI, in the CSI reference resource, the UE may assume specific values for symbol positions and the number of symbols occupied by control signaling, the number of PDSCH and DMRS symbols, the subcarrier spacing of the BWP, the bandwidth for CQI reporting, the CP length and subcarrier spacing of the reference resource, the redundancy version (RV), etc., for the purpose of deriving at least one of the CQI index, PMI, or RI. In this case, when sub-configurations are configured for CSI reporting, assumptions regarding antenna ports, EPRE, etc., may be determined based on the sub-configurations.

Subsequently, the base station transmits at least one CSI-RS. Accordingly, the UE may receive the at least one CSI-RS and perform measurement. The at least one CSI-RS may be transmitted through a CSI-RS resource or resource set configured by the configuration information.

In this case, in a situation where the UE is configured to monitor power saving related control information (e.g. DCI format 2_6) and the DRX related timer (e.g. drx-onDurationTimer) is not started by a higher layer parameter (e.g. ps-TransmitOtherPeriodicCSI), when the UE is configured to report CSI using a reporting configuration type configured to periodic reporting and a reporting quantity configured to an item other than cri-RSRP and ssb-index-RSRP, the most recent CSI measurement opportunity occurs during a time indicated by the drx-onDurationTimer in DRX-related configuration information (e.g., DRX-Config), in addition to a DRX active time or a DRX active time for the CSI to be reported. As another example, in a situation where the UE is configured to monitor power saving-related control information (e.g., DCI format 2_6) and, according to a higher layer parameter (e.g., ps-TransmitPeriodicL1-RSRP), the drx-onDurationTimer has not been started, when the UE is configured to report L1-RSRP using a reporting configuration type configured to periodic reporting and a reporting quantity configured to cri-RSRP, the most recent CSI measurement opportunity occurs during a time indicated by the drx-onDurationTimer in DRX-related configuration information (e.g., DRX-Config), in addition to a DRX active time or a DRX active time for the CSI to be reported. In other cases, the most recent CSI measurement opportunity occurs within the DRX active time for the CSI to be reported.

Meanwhile, the base station may perform cell DTX/DRX operation. In this case, during a cell DTX inactive period, a UE configured with cell DTX is not expected to receive periodic CSI-RS and semi-persistent CSI-RS configured in a CSI reporting configuration associated with a reporting quantity including at least a rank indicator (RI). When cell DTX is activated for a serving cell, the most recent CSI measurement opportunity for a semi-persistent CSI-RS resource or a periodic CSI-RS resource occurs within cell DTX active periods for CSI reporting, which are configured by configuration information (e.g., CSI-ReportConfig) related to CSI reporting related to a reporting quantity including at least the RI.

The UE that has received at least one CSI-RS determines CSI. In other words, the UE performs CSI calculation. In this case, the UE may perform CSI calculation based on CSI processing criteria. The UE may indicate the number of supported simultaneous CSI calculations, that is, the number NCPU of CSI processing units (CPUs) that can be operated simultaneously. The UE may determine the number of CPUs for the corresponding CSI reporting based on at least one of the NCPU, the number of CPUs for each CSI reporting, the number of CPUs currently occupied, and the configuration of the reporting quantity. For example, for configuration information (e.g., CSI-ReportConfig) related to CSI reporting including a reporting quantity parameter (e.g., reportQuantity) not set to 'none', the CPU(s) may be occupied for at least one OFDM symbol, where the number of the at least one symbol may be determined based on CSI-RS resources or CSI-IM resources related to sub-configurations.

When configuration information (e.g., CSI-ReportConfig) related to CSI reporting includes a plurality of sub-configurations, the number of CPUs occupied by the CSI reporting is determined based on the number of CSI-RS resources corresponding to the sub-configuration. In this case, the number of CSI-RS resources may be determined based on the number of times referenced in the configuration information (e.g., CSI-ReportConfig) related to the CSI reporting, or based on the number of sub-configurations referring to the corresponding CSI-RS resource.

The UE that has determined CSI transmits CSI reporting to the base station. The UE may transmit CSI for at least one sub-configuration according to a reporting quantity parameter (e.g., reportQuantity) configured in configuration information (e.g., CSI-ReportConfig) related to CSI reporting. For example, the CSI reporting may include at least one of a PMI, CQI, RI, CRI, SSBRI, LI, or RSRP. In this case, the CSI reporting may include Part 1 CSI reporting and Part 2 CSI reporting. In addition, the CSI reporting may be transmitted through at least one of a PUCCH or a PUSCH.

When the UE multiplexes CSI reporting including Part 2 CSI reporting onto a PUCCH resource, the UE determines the PUCCH resource and the number of PRBs for the PUCCH resource, or the number of Part 2 CSI reports, on the assumption that each CSI report or each CSI sub-report included in the CSI reporting indicates rank 1 or a rank combination {1, 1}. When a higher layer parameter related to a CSI reporting mode (e.g., csi-ReportMode) is set to 'Mode2', the UE determines the PUCCH resource and the number of PRBs for the PUCCH resource, or the number of Part 2 CSI reports, on the assumption that each CRI of the CSI reporting is related to a resource pair.

When CSI reporting on a PUSCH includes two parts, the UE may omit a portion of Part 2 CSI. The omission of Part 2 CSI follows a priority order. Except when the corresponding CSI reporting includes at least one CSI sub-report including Part 2 corresponding to a sub-configuration from the list of sub-configurations provided by a higher layer parameter (e.g., csi-ReportSubConfigList) included in information (e.g., CSI-ReportConfig) related to the CSI reporting, when omitting Part 2 CSI information for a specific priority level, the UE should omit all information at that priority level.

For a reporting configuration related to information (e.g., CSI-ReportConfig) related to CSI reporting including a list of sub-configurations, the following processing may be possible. For a corresponding CSI reporting including at least one CSI sub-report, omission of Part 2 CSI is performed at a sub-configuration level within the same priority level. Here, a sub-configuration having a lower index value has a higher priority.

When a CSI reporting consists of two parts, the UE may omit a portion of Part 2 CSI. The omission of Part 2 CSI follows a priority order. For a reporting configuration related to information (e.g., CSI-ReportConfig) related to CSI reporting including a list of sub-configurations, for a given CSI reporting including at least one CSI sub-report, omission of Part 2 CSI is defined in section 5.2.3. Part 2 CSI is omitted starting from the lowest priority level up to a Part 2 CSI code rate less than or equal to a code rate configured by a higher layer parameter (e.g., maxCodeRate).

In addition, when a CQI request field in a DCI triggers CSI reporting(s) on a PUSCH, the first uplink symbol carrying the CSI reporting(s) shall not precede a symbol specified as a certain interval after the last symbol of the PDCCH carrying the corresponding DCI. This may be understood as ensuring CSI calculation time. In this case, when a plurality of sub-configurations are configured for CSI reporting, the start position of the certain interval described above may be determined based on all triggered sub-configurations.

## Specific embodiments of the present disclosure

The present disclosure relates to a technique for reporting CSI based on sub-configurations of CSI reporting in a wireless communication system. In particular, the present disclosure is related to a technique for transmitting CSIs for a plurality of sub-configurations, that is, CSI sub-reports, in consideration of overhead, and proposes various embodiments for transmitting CSIs for the sub-configurations. Hereinafter, in the present disclosure, '/' means 'and', 'or', or 'and/or' depending on the context.

The base station may operate technologies such as controlling on/off of a UE for a certain duration on a time axis for NES purposes, adjusting transmission and reception resources for UE-common or UE-specific signals/channels, changing an amount of frequency domain resources, adjusting transmission power, or turning on/off antenna ports (APs), transmission reception points (TRPs), etc., in a spatial domain. In the present disclosure, the listed technologies are referred to as 'NES technology' or 'NES_tech', and a state in which at least one of the NES_techs is applied is referred to as an 'NES mode' or 'NES state'. The base station may indicate to the UE which NES_tech(s) are applied for each NES_tech or NES_tech group [Approach 1], or may pre-configure NES_tech or NES_tech group(s) corresponding to each code point of a specific indicator [Approach 2]. Here, the specific indicator may be indicated through DCI or MAC CE, or may be configured through higher layer signaling.

In the case of Approach 1, when at least one NES_tech is applied to the UE, the corresponding state may be defined as an NES mode or an NES state, and furthermore, may be treated as different NES modes or different NES states depending on which NES_tech is applied. The NES mode or NES state may be used as a concept indicating whether at least one NES technology is applied, or in addition, indicating which NES technology(ies) are applied. When the NES mode or NES state further indicates which NES technology(ies) are applied, different NES modes or different NES states may include different combinations of NES_techs. In the case of Approach 2, for example, when a 1-bit indicator is used, '0' may indicate that the corresponding NES_tech is not applied, and '1' may indicate that at least one NES_tech is applied. In this case, when '1' is indicated through the indicator, the corresponding state may be defined as an NES mode or an NES state. In another example, when a 2-bit indicator is used, '00' may indicate that there is no corresponding NES_tech, '01' may indicate that at least one NES_tech_A is applied, '10' may indicate that at least one NES_tech_B is applied, and '11' may indicate that at least one NES_tech_C is applied. In this case, when a code point other than '00' is indicated through the indicator, the corresponding state may be defined as an NES mode or an NES state. Furthermore, the UE may determine NES state #1 when '01' is detected, NES state #2 when '10' is detected, and NES state #3 when '11' is detected. Accordingly, it may be distinguished, for each code point, whether the state is an NES state and/or which NES state it is.

For NES purposes, the base station may turn on/off certain spatial elements (e.g., antenna ports, active transmit/receive chains, panels, or TRPs) or adjust power values for downlink signals/channels. To dynamically apply various NES technologies in the spatial domain and power domain, the base station may associate, for one CSI report configuration (e.g., CSI-ReportConfig), CSI-RS resources or resource sets having different antenna ports, or may associate a plurality of power offsets (e.g., a powerControlOffset parameter representing a power offset value between PDSCH and CSI-RS, a powerControlOffsetSS parameter representing a power offset value between SSS and CSI-RS, etc.).

Specifically, at least one of the following CSI frameworks may be introduced.

- Framework#1: A plurality of CSI-RS resource sets are associated with one channel measurement resource (CMR) or one interference measurement resource (IMR) in CSI-ReportConfig. Here, the CMR may be configured by a resourcesForChannelMeasurement parameter, and the IMR may be configured by a csi-IM-ResourcesForInterference parameter or an nzp-CSI-RS-ResourcesForInterference parameter. For example, for the CMR, CSI-RS resource set #1 and CSI-RS resource set #2 are associated, CSI-RS resources belonging to CSI-RS resource set #1 may be configured with 16 antenna ports (APs), and CSI-RS resources belonging to CSI-RS resource set #2 may be configured with 8 APs.
- Framework#2: When one CSI-RS resource set associated with one CMR or one IMR is configured in CSI-ReportConfig, at least one CSI-RS resource having different properties such as the number of APs and/or power offset may be configured within the CSI-RS resource set. For example, for CSI-RS resource set #1 configured as a CMR, CSI-RS resource #1 belonging to CSI-RS resource set #1 is configured with 16 APs, and CSI-RS resource #2 belonging to the same set may be configured with 8 APs. For example, for CSI-RS resource set #1 configured as a CMR, CSI-RS resource #1 belonging to CSI-RS resource set #1 is configured with power offset #1, and CSI-RS resource #2 belonging to the same set may be configured with power offset #2.
- Framework#3: When one CSI-RS resource set associated with one CMR or one IMR is configured in CSI-ReportConfig, some or all CSI-RS resources in the set may be configured with a plurality of numbers of APs and/or power offset values. For example, for CSI-RS resource set #1 configured as a CMR, CSI-RS resource #1 belonging to CSI-RS resource set #1 is configured with up to 16 APs, and CSI reporting using at least one AP among them may be configured. Alternatively, CSI-RS resource #2 belonging to the same CSI-RS resource set #1 is configured with a plurality of power offset values, and CSI reporting using all or part of the power offsets may be configured.

For the CSI frameworks described above, a CSI reporting method may be defined through at least one of the following options.

- Option #1: CSIs considering a plurality of numbers of APs values and/or a plurality of power offset values configured in one CSI reporting may all be included in one CSI reporting. Alternatively, CSIs considering a plurality of numbers of APs values and/or a plurality of power offset values determined through configuration/indication of the base station may be included in one CSI reporting. In this case, the number of APs values and/or power offset values configured/indicated through the base station may be a part of the number of APs values and/or power offset values configured in the CSI reporting.
- Option #2: Even if a plurality of numbers of APs values and/or a plurality of power offset values are configured in one CSI reporting, CSIs considering the number of single AP value and/or a single power offset value through configuration/indication of the base station may be included in one CSI reporting.
- Option #3: Even if a plurality of numbers of APs values and/or a plurality of power offset values are configured in one CSI reporting, CSIs considering a part of the number of APs values and/or a part of power offset values through judgment/decision/selection of the UE based on a criterion pre-configured by the base station or predefined may be included in one CSI reporting.

In configuration for CSI reporting (e.g., CSI-ReportConfig), L sub-configurations greater than 1 may be configured, and each sub-configuration may correspond to one of a spatial domain adaptation pattern or a power domain adaptation pattern.

Here, the spatial domain adaptation pattern may correspond to a specific number of APs or an AP on/off pattern, or may correspond to a specific CSI-RS power value (e.g., a CSI-RS power value determined by a powerControlOffsetSS parameter which is a power offset value between SSS and CSI-RS, since turning off a part of antenna elements corresponding to one AP may affect the CSI-RS power value). For example, when applying Framework #2, for CSI-RS index #n1 belonging to a resource set, the number of A1 APs or a P1 power value is configured, and for CSI-RS index #n2 belonging to the same resource set, the number of A2 APs or a P2 power value may be configured. In this case, sub-configuration index #s1 is associated with CSI-RS index #n1, and sub-configuration index #s2 is associated with CSI-RS index #n2, thereby allowing spatial domain adaptation patterns to be configured differently for each sub-configuration.

When applying Framework #3, when CSI-RS index #n1 belonging to a resource set is configured with the number of A1 APs (or a P1/P2 power value), sub-configuration index #s1 is associated with the number of A1 APs (or the P1 power value), and sub-configuration index #s2 is associated with the number of A2 APs less than the number of A1 APs (or the P2 power value) configuring CSI-RS index #n1, thereby allowing spatial domain adaptation patterns to be configured differently for each sub-configuration.

In addition, the power domain adaptation pattern may mean that a power offset value (e.g., a power offset value determined by a powerControlOffset parameter which is a power offset value between PDSCH and CSI-RS, or a powerControlOffsetSS parameter which is a power offset value between SSS and CSI-RS) is varied. For example, when applying Framework #2, for CSI-RS index #n1 belonging to a resource set, a P1 power value is configured, and for CSI-RS index #n2 belonging to the same resource set, a P2 power value may be configured. In this case, sub-configuration index #s1 is associated with CSI-RS index #n1, and sub-configuration index #s2 is associated with CSI-RS index #n2, thereby allowing power domain adaptation patterns to be configured differently for each sub-configuration.

In addition, when applying Framework #3, for CSI-RS index #n1 belonging to a resource set, a P1 power value and a P2 power value may be configured. In this case, sub-configuration index #s1 is associated with the P1 power value, and sub-configuration index #s2 is associated with the P2 power value, thereby allowing power domain adaptation patterns to be configured differently for each sub-configuration.

By utilizing one of the options #1/2/3 described above, the UE may feedback to the base station a CSI reporting including CSI(s) corresponding to N sub-configurations, where N is between 1 and L among the L sub-configurations.

As described above, in configuration information related to CSI reporting (e.g., CSI-ReportConfig), L (>1) sub-configurations may be configured, and each sub-configuration may correspond to one spatial or power domain adaptation pattern. Previously, an example in which the CSI-ReportConfig is composed of sub-configurations corresponding to only one of two patterns has been described, but a configuration in which two patterns are mixed within one CSI-ReportConfig is also possible. By configuring sub-configurations by combining multiple patterns within one CSI-ReportConfig and controlling the UE to feedback CSI information corresponding to the plurality of sub-configurations, the base station may apply efficient spatial/power domain adaptation based on the feedback information.

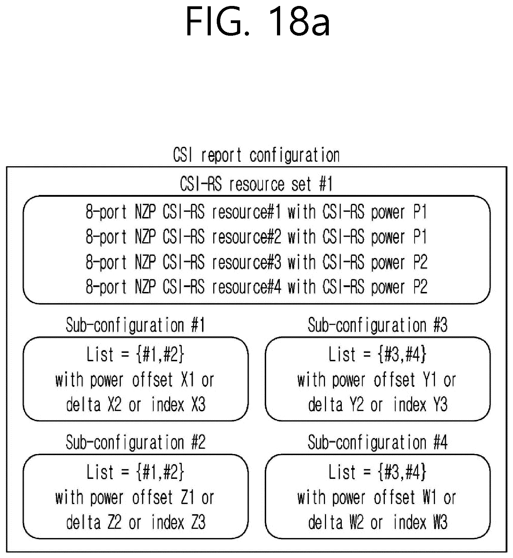

As in CSI framework #2, CSI-RS resources in which power or antenna/spatial element on/off states are the same or similar within one sub-configuration may be related to each other through a list parameter, and a plurality of sub-configurations may be included in one CSI-ReportConfig. Additionally, as shown in FIG. 18a, at least some of the plurality of sub-configurations may be configured with different power offset values while sharing the same list. Here, the power offset means a power difference between CSI-RS and PDSCH.

The lists related to the plurality of sub-configurations included in one CSI-ReportConfig may be the same (e.g., in the example of FIG. 18a, the lists between sub-configuration #1 and sub-configuration #2 are the same) or may be disjoint (e.g., in the example of FIG. 18a, the lists between sub-configuration #1 and sub-configuration #3 are disjoint). In this case, between sub-configurations related to different CSI-RS resource ID lists (e.g., between sub-configuration #1 and sub-configuration #3 in the example of FIG. 18a), the lists are disjoint, and power offset value configuration (e.g., a power offset value, a delta value, or an index value corresponding to each resource) may be the same or different.

Between sub-configurations sharing the same CSI-RS resource ID list (e.g., between sub-configuration #1 and sub-configuration #2 in the example of FIG. 18a), power offset value configuration (e.g., a power offset value, a delta value, or an index value corresponding to each resource) may be configured differently. That is, one CSI-RS resource is related to a plurality of sub-configurations, the plurality of sub-configurations are configured with different power offset values, and may share the list.

When there is a parameter (e.g., a list or CodebookConfig) that is not configured for a specific sub-configuration, a related parameter may be inherited from another sub-configuration having an association relationship. For example, the other sub-configuration may be a sub-configuration having a largest or smallest index, or may be a sub-configuration having a largest index among sub-configurations having smaller indices and including configuration of the parameter. As one example, in FIG. 18a, when a list is not configured for sub-configuration #2, sub-configuration #2 may inherit the list configuration from sub-configuration #1, which has a lower index than sub-configuration #2 and has the list configured, such that the same list as sub-configuration #1 (e.g., {#1, #2}) may be applied to sub-configuration #2.

FIG. 18a is an example in which spatial or power domain adaptation is applied in a separated manner, and only one of spatial adaptation or power adaptation may be applied according to presence or absence of parameters. For example, when a list parameter is not present in all sub-configurations, this may mean power domain adaptation. As another example, when only disjoint lists are configured for each sub-configuration without power-related parameters (e.g., when only sub-configuration #1 and sub-configuration #3 are configured in FIG. 18a and a power offset related parameter is not configured), this may mean spatial domain adaptation.

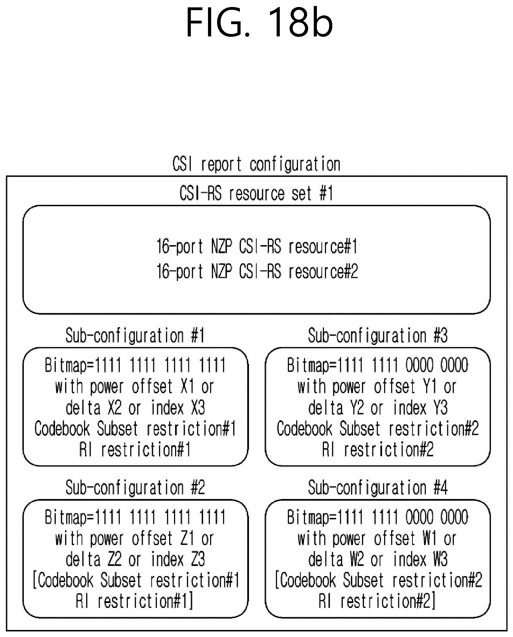

As in CSI framework #3, within one sub-configuration, a specific AP on/off pattern may be related through a bitmap parameter, and a plurality of sub-configurations may be included in one CSI-ReportConfig. Additionally, as shown in FIG. 18b, a scheme of configuring different power offsets while sharing the same bitmap may be used. Here, the power offset means a power difference between CSI-RS and PDSCH. In this case, in the example of FIG. 18b, all CSI-RS resources may be related to all sub-configurations.

Between sub-configurations related to different bitmap information (e.g., between sub-configuration #1 and sub-configuration #3 in the example of FIG. 18b), power offset value configuration (e.g., a power offset value, a delta value, or an index value corresponding to each resource) may be the same or different.

Between sub-configurations sharing the same bitmap (e.g., between sub-configuration #1 and sub-configuration #2 in the example of FIG. 18b), power offset values (e.g., a power offset value, a delta value, or an index value corresponding to each resource) may be configured differently.

When there is a parameter that is not configured for a specific sub-configuration (e.g., bitmap information or CodebookConfig information), a related parameter may be inherited from another sub-configuration having an association relationship (e.g., a sub-configuration having a largest or smallest index, or a sub-configuration having a largest index among smaller sub-configuration indices in which the parameter is configured). For example, in FIG. 18b, when a bitmap is not configured for sub-configuration #2, sub-configuration #2 may inherit bitmap configuration information from sub-configuration #1, which has a lower index than sub-configuration #2 and includes the bitmap configuration, such that the same bitmap (e.g., all 1s (all 1's)) may be applied to sub-configuration #2.

FIG. 18b is an example of disjoint operation of spatial or power domain adaptation, and only one of spatial adaptation or power adaptation may be applied according to presence or absence of parameters. For example, when a bitmap parameter is not present in all sub-configurations, this may simply mean power domain adaptation. As another example, when only bitmap information is configured for each sub-configuration without power-related parameters (e.g., when only sub-configuration #1 and sub-configuration #3 are configured in FIG. 18b and a power offset related parameter is not configured), this may simply mean spatial domain adaptation.

According to the TS 38.214 specification document, in one CSI report configuration, at least one sub-configuration may be configured, and within each sub-configuration, one of the following configurations or a combination thereof may be configured.

- An ID list of one or more CSI-RS resource(s)
- Antenna port subset indication composed of a bitmap
- An additional power offset delta from an EPRE offset between PDSCH and CSI-RS configured within a CSI-RS resource configuration

In the present disclosure, for convenience of description, a CSI report configuration including a sub-configuration in which an ID list of at least one CSI-RS resource(s) is configured is referred to as type 2 spatial domain (SD) adaptation, a CSI report configuration including a sub-configuration in which antenna port subset indication composed of a bitmap is configured is referred to as type 1 spatial domain adaptation, and a CSI report configuration including a sub-configuration in which an additional power offset delta value is configured is referred to as power domain (PD) adaptation. For sub-configuration(s) belonging to one CSI report configuration, an ID list of at least one CSI-RS resource(s) and/or a power offset delta value may be configured, and this is referred to as type 2 spatial domain + power domain adaptation. Additionally, for sub-configuration(s) belonging to one CSI report configuration, antenna port subset indication composed of a bitmap and/or a power offset delta value may be configured, and this is referred to as type 1 spatial domain + power domain adaptation. In the case of type 1 spatial domain adaptation or power domain adaptation or type 1 spatial domain + power domain adaptation, each CSI-RS resource may be related to each of all sub-configurations configured within one CSI report configuration. In the case of type 2 spatial domain adaptation, each CSI-RS resource may be related to only a single sub-configuration among a plurality of sub-configurations within one CSI report configuration. In the case of type 2 spatial domain + power domain adaptation, a list #1 of CSI-RS resource(s) configured for a certain sub-configuration and a list #2 of CSI-RS resource(s) configured for another sub-configuration within the same CSI report configuration may be the same or may be disjoint.

Meanwhile, when L sub-configurations are configured within one CSI report configuration, the UE may report CSI corresponding to each of the L sub-configurations to the base station through one PUSCH/PUCCH. Among the L sub-configurations, only N (where N is 1 or more and L or less) sub-configuration(s) may be activated or triggered through a MAC-CE or DCI, and in this case, the UE may report CSI corresponding to each of the N sub-configurations to the base station through one PUSCH/PUCCH. Specifically, for a CSI report configuration in which semi-persistent (SP) CSI reporting on PUCCH is configured, N sub-configuration(s) among the L sub-configurations configured through the MAC-CE may be activated. Additionally, for a CSI report configuration in which SP CSI reporting on PUSCH or aperiodic (A) CSI reporting is configured, N sub-configuration(s) among the L sub-configurations may be triggered through DCI.

**AP Mapping** of CSI-RS

Hereinafter, [Table 1] is a structure of configuration information related to CSI-RS resource mapping defined in the TS 38.331 specification document.

[Table 1]

```
CSI-RS-ResourceMapping ::=          SEQUENCE {
      frequencyDomainAllocation          CHOICE {
            row1                               BIT STRING (SIZE (4)),
            row2                               BIT STRING (SIZE (12)),
            row4                               BIT STRING (SIZE (3)),
            other                              BIT STRING (SIZE (6))
      },
      nrofPorts                          ENUMERATED {p1,p2,p4,p8,p12,p16,p24,p32},
      firstOFDMSymbolInTimeDomain         INTEGER (0..13),
      firstOFDMSymbolInTimeDomain2        INTEGER (2..12)          OPTIONAL,    -- Need R
      cdm-Type                           ENUMERATED {noCDM, fd-CDM2, cdm4-FD2-TD2, cdm8
-FD2-TD4},
      density                            CHOICE {
            dot5                               ENUMERATED {evenPRBs, oddPRBs},
            one                                NULL,
            three                              NULL,
            spare                              NULL
      },
      freqBand                           CSI-FrequencyOccupation,
      ...
}
```

Hereinafter, [Table 2] is a table related to positions of CSI-RS within a slot defined in the TS 38.211 specification document.

[Table 2]

| Row | Ports X | Density $\rho$ | cdm-Type | $(\bar{k}, \bar{l})$ | CDM group index j | k' | l' |
|---|---|---|---|---|---|---|---|
| 1 | 1 | 3 | noCDM | $(k_0,l_0),(k_0+4,l_0),(k_0+8,l_0)$ | 0,0,0 | 0 | 0 |
| 2 | 1 | 1, 0.5 | noCDM | $(k_0,l_0)$ | 0 | 0 | 0 |
| 3 | 2 | 1, 0.5 | fd-CDM2 | $(k_0,l_0)$ | 0 | 0, 1 | 0 |
| 4 | 4 | 1 | fd-CDM2 | $(k_0,l_0),(k_0+2,l_0)$ | 0,1 | 0, 1 | 0 |
| 5 | 4 | 1 | fd-CDM2 | $(k_0,l_0),(k_0+4,l_0)$ | 0,1 | 0, 1 | 0 |
| 6 | 8 | 1 | fd-CDM2 | $(k_0,l_0),(k_1,l_0),(k_2,l_0),(k_3,l_0)$ | 0,1,2,3 | 0, 1 | 0 |
| 7 | 8 | 1 | fd-CDM2 | $(k_0,l_0),(k_1,l_0),(k_0,l_0+1),(k_1,l_0+1)$ | 0,1,2,3 | 0, 1 | 0 |
| 8 | 8 | 1 | cdm4-FD2-TD2 | $(k_0,l_0),(k_1,l_0)$ | 0,1 | 0, 1 | 0, 1 |
| 9 | 12 | 1 | fd-CDM2 | $(k_0,l_0),(k_1,l_0),(k_2,l_0),(k_3,l_0),(k_4,l_0),(k_5,l_0)$ | 0,1,2,3,4,5 | 0, 1 | 0 |
| 10 | 12 | 1 | cdm4-FD2-TD2 | $(k_0,l_0),(k_1,l_0),(k_2,l_0)$ | 0,1,2 | 0, 1 | 0, 1 |
| 11 | 16 | 1, 0.5 | fd-CDM2 | $(k_0,l_0),(k_1,l_0),(k_2,l_0),(k_3,l_0),(k_0,l_0+1),(k_1,l_0+1),(k_2,l_0+1),(k_3,l_0+1)$ | 0,1,2,3,4,5,6,7 | 0, 1 | 0 |
| 12 | 16 | 1, 0.5 | cdm4-FD2-TD2 | $(k_0,l_0),(k_1,l_0),(k_2,l_0),(k_3,l_0)$ | 0,1,2,3 | 0, 1 | 0, 1 |
| 13 | 24 | 1, 0.5 | fd-CDM2 | $(k_0,l_0),(k_1,l_0),(k_2,l_0),(k_0,l_0+1),(k_1,l_0+1),(k_2,l_0+1),(k_0,l_1),(k_1,l_1),(k_2,l_1),(k_0,l_1+1),(k_1,l_1+1),(k_2,l_1+1)$ | 0,1,2,3,4,5,6,7,8,9,10,11 | 0, 1 | 0 |
| 14 | 24 | 1, 0.5 | cdm4-FD2-TD2 | $(k_0,l_0),(k_1,l_0),(k_2,l_0),(k_0,l_1),(k_1,l_1),(k_2,l_1)$ | 0,1,2,3,4,5 | 0, 1 | 0, 1 |
| 15 | 24 | 1, 0.5 | cdm8-FD2-TD4 | $(k_0,l_0),(k_1,l_0),(k_2,l_0)$ | 0,1,2 | 0, 1 | 0, 1, 2, 3 |
| 16 | 32 | 1, 0.5 | fd-CDM2 | $(k_0,l_0),(k_1,l_0),(k_2,l_0),(k_3,l_0),(k_0,l_0+1),(k_1,l_0+1),(k_2,l_0+1),(k_3,l_0+1),(k_0,l_1),(k_1,l_1),(k_2,l_1),(k_3,l_1),(k_0,l_1+1),(k_1,l_1+1),(k_2,l_1+1),(k_3,l_1+1)$ | 0,1,2,3,4,5,6,7,8,9,10,11,12,13,14,15 | 0, 1 | 0 |
| 17 | 32 | 1, 0.5 | cdm4-FD2-TD2 | $(k_0,l_0),(k_1,l_0),(k_2,l_0),(k_3,l_0),(k_0,l_1),(k_1,l_1),(k_2,l_1),(k_3,l_1)$ | 0,1,2,3,4,5,6,7 | 0, 1 | 0, 1 |
| 18 | 32 | 1, 0.5 | cdm8-FD2-TD4 | $(k_0,l_0),(k_1,l_0),(k_2,l_0),(k_3,l_0)$ | 0,1,2,3 | 0, 1 | 0, 1, 2, 3 |

By a combination of the RRC parameters included in the configuration information of [Table 1] and the table of [Table 2], an AP mapping method of CSI-RS may be determined. In the current NR specification, a total of 18 patterns (e.g., from a first row to an eighteenth row in the table of [Table 2]) are supported, and AP mapping examples for each pattern are described as follows with reference to the drawings.

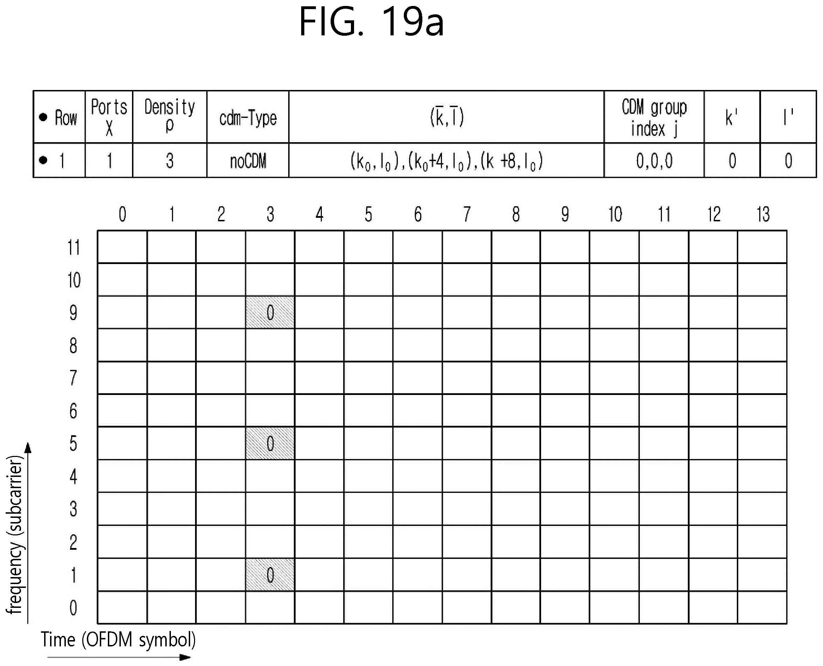

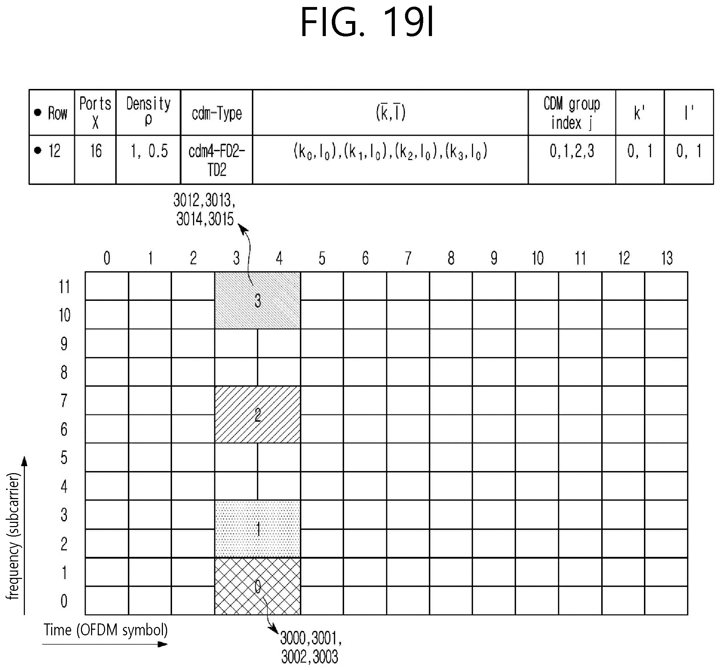

FIG. 19a to FIG. 19r illustrate examples of AP mapping of CSI-RS according to various patterns applicable to the present disclosure. In FIG. 19a to FIG. 19r, 0 to 13 on a horizontal axis of a grid structure represent OFDM symbol indices, and 0 to 11 on a vertical axis of the grid structure represent REs or subcarrier indices within one RB.

FIG. 19a illustrates an example of AP mapping of CSI-RS according to a first pattern. FIG. 19a exemplifies a case in which a firstOFDMSymbolInTimeDomain parameter is configured as 3 and a frequencyDomainAllocation parameter (e.g., a parameter corresponding to a bitmap $[b_3...b_0]$ of the TS 38.211 specification) is configured as 0010, that is, a case in which an $l_0$ value is configured as 3 and a $k_0$ value is configured as 1. In FIG. 19a, CSI-RS AP 3000 is mapped to REs indicated as '0'.

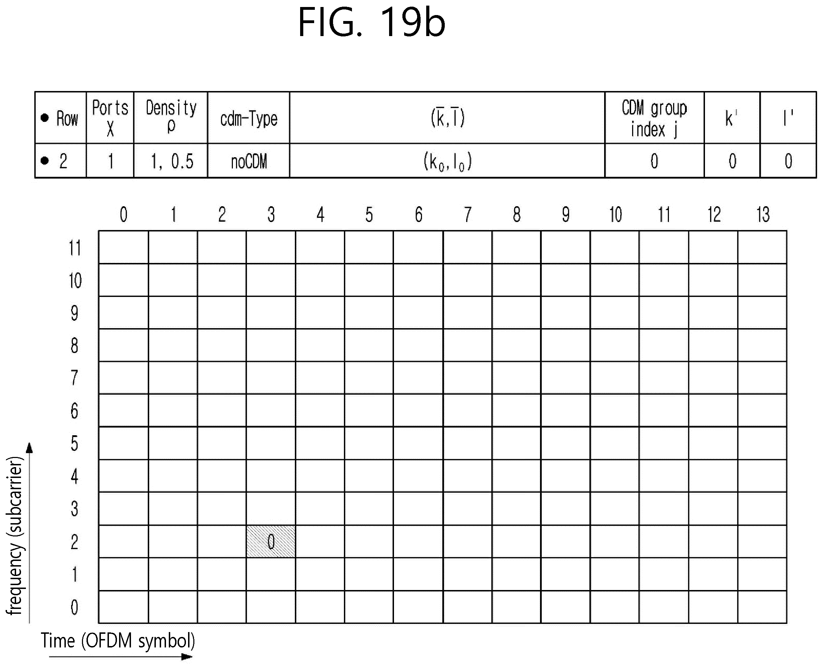

FIG. 19b illustrates an example of AP mapping of CSI-RS according to a second pattern. FIG. 19b exemplifies a case in which a firstOFDMSymbolInTimeDomain parameter is configured as 3 and a frequencyDomainAllocation parameter (e.g., a parameter corresponding to a bitmap $[b_{11}...b_0]$ of the TS 38.211 specification) is configured as 0000 0000 0010, that is, a case in which an $l_0$ value is configured as 3 and a $k_0$ value is configured as 1. In FIG. 19b, CSI-RS AP 3000 is mapped to REs indicated as '0'.

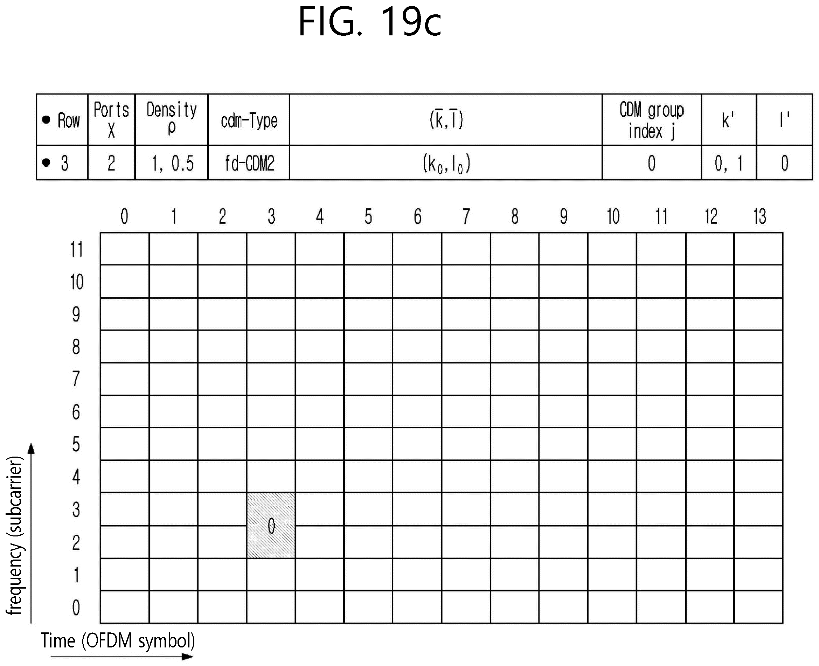

FIG. 19c illustrates an example of AP mapping of CSI-RS according to a third pattern. FIG. 19c exemplifies a case in which a firstOFDMSymbolInTimeDomain parameter is configured as 3 and a frequencyDomainAllocation parameter (e.g., a parameter corresponding to a bitmap $[b_5...b_0]$ of the TS 38.211 specification) is configured as 000010, that is, a case in which an $l_0$ value is configured as 3 and a $k_0$ value is configured as 2. In FIG. 19c, two APs are CDM-ed in a RE-group or a code domain multiplexing (CDM) group indicated as '0' by application of a frequency-axis orthogonal cover code (OCC), and CSI-RS APs 3000 and 3001 are mapped.

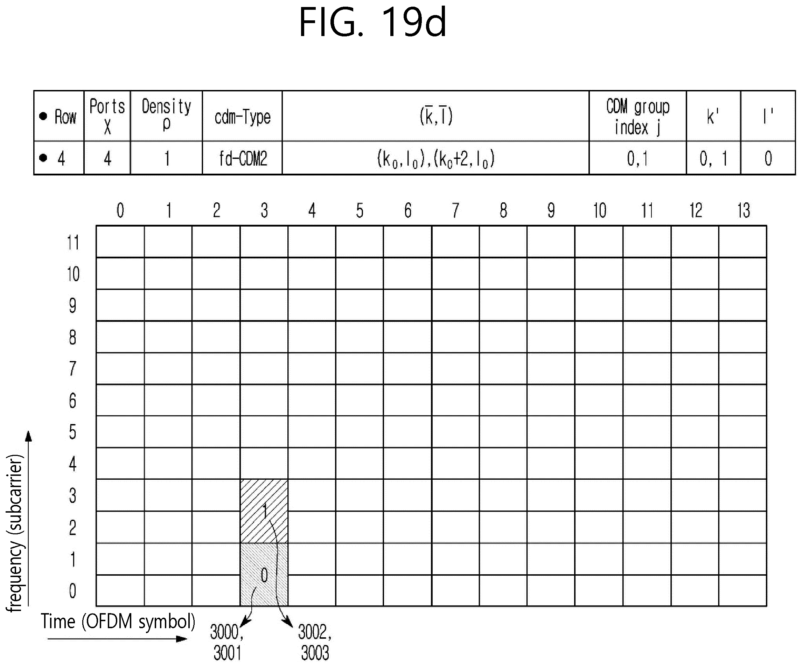

FIG. 19d illustrates an example of AP mapping of CSI-RS according to a fourth pattern. FIG. 19d exemplifies a case in which a firstOFDMSymbolInTimeDomain parameter is configured as 3 and a frequencyDomainAllocation parameter (e.g., a parameter corresponding to a bitmap $[b_2...b_0]$ of the TS 38.211 specification) is configured as 001, that is, a case in which an $l_0$ value is configured as 3 and a $k_0$ value is configured as 0. In FIG. 19d, two APs are CDM-ed in each of RE-groups or CDM groups indicated as '0' or '1' by application of a frequency-axis OCC, and accordingly, CSI-RS APs 3000 and 3001 are mapped to CDM group 0, and CSI-RS APs 3002 and 3003 are mapped to CDM group 1.

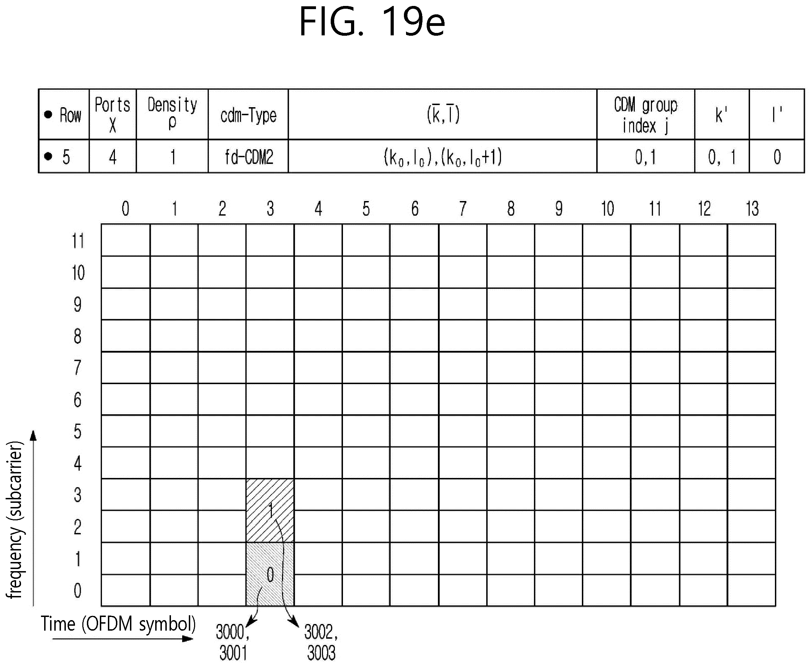

FIG. 19e illustrates an example of AP mapping of CSI-RS according to a fifth pattern. FIG. 19e exemplifies a case in which a firstOFDMSymbolInTimeDomain parameter is configured as 3 and a frequencyDomainAllocation parameter (e.g., a parameter corresponding to a bitmap $[b_5...b_0]$ of the TS 38.211 specification) is configured as 000010, that is, a case in which an $l_0$ value is configured as 3 and a $k_0$ value is configured as 2. In FIG. 19e, two APs are CDM-ed in each of RE-groups or CDM groups indicated as '0' or '1' by application of a frequency-axis OCC, and accordingly, CSI-RS APs 3000 and 3001 are mapped to CDM group 0, and CSI-RS APs 3002 and 3003 are mapped to CDM group 1.

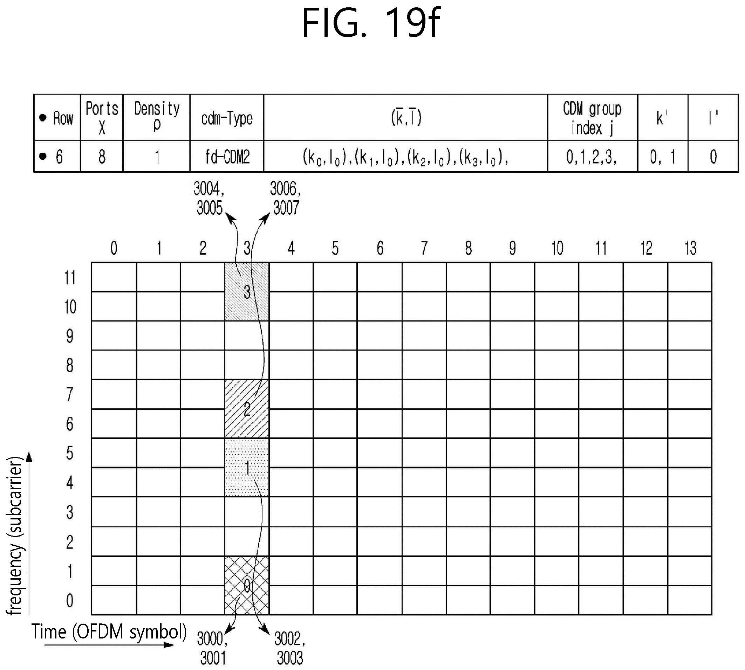

FIG. 19f illustrates an example of AP mapping of CSI-RS according to a sixth pattern. FIG. 19f exemplifies a case in which a firstOFDMSymbolInTimeDomain parameter is configured as 3 and a frequencyDomainAllocation parameter (e.g., a parameter corresponding to a bitmap $[b_5...b_0]$ of the TS 38.211 specification) is configured as 101101, that is, a case in which an $l_0$ value is configured as 3 and values of $k_0$, $k_1$, $k_2$, and $k_3$ are configured as 0, 4, 6, and 10, respectively. In FIG. 19f, two APs are CDM-ed in each of RE-groups or CDM groups indicated as '0', '1', '2', or '3' by application of a frequency-axis OCC, and accordingly, CSI-RS APs 3000 and 3001 are mapped to CDM group 0, CSI-RS APs 3002 and 3003 are mapped to CDM group 1, CSI-RS APs 3004 and 3005 are mapped to CDM group 2, and CSI-RS APs 3006 and 3007 are mapped to CDM group 3.

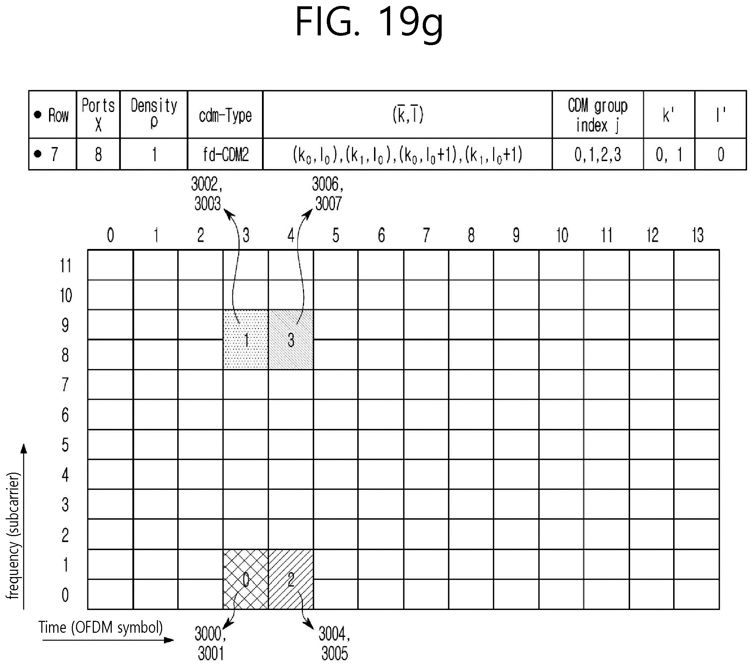

FIG. 19g illustrates an example of AP mapping of CSI-RS according to a seventh pattern. FIG. 19g exemplifies a case in which a firstOFDMSymbolInTimeDomain parameter is configured as 3 and a frequencyDomainAllocation parameter (e.g., a parameter corresponding to a bitmap $[b_5...b_0]$ of the TS 38.211 specification) is configured as 010001, that is, a case in which an $l_0$ value is configured as 3 and values of $k_0$ and $k_1$ are configured as 0 and 8, respectively. In FIG. 19g, two APs are CDM-ed in each of RE-groups or CDM groups indicated as '0', '1', '2', or '3' by application of a frequency-axis OCC, and accordingly, CSI-RS APs 3000 and 3001 are mapped to CDM group 0, CSI-RS APs 3002 and 3003 are mapped to CDM group 1, CSI-RS APs 3004 and 3005 are mapped to CDM group 2, and CSI-RS APs 3006 and 3007 are mapped to CDM group 3.

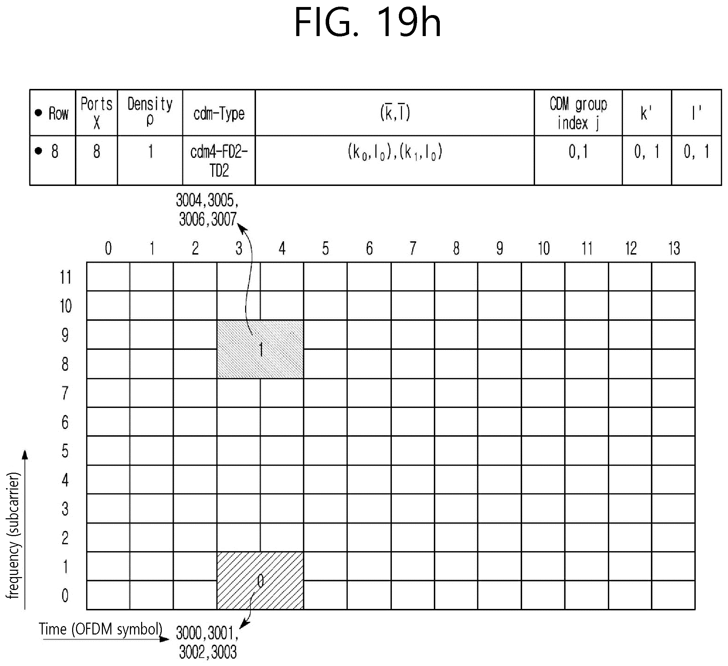

FIG. 19h illustrates an example of AP mapping of CSI-RS according to an eighth pattern. FIG. 19h exemplifies a case in which a firstOFDMSymbolInTimeDomain parameter is configured as 3 and a frequencyDomainAllocation parameter (e.g., a parameter corresponding to a bitmap $[b_5...b_0]$ of the TS 38.211 specification) is configured as 010001, that is, a case in which an $l_0$ value is configured as 3 and values of $k_0$ and $k_1$ are configured as 0 and 8, respectively. In FIG. 19h, four APs are CDM-ed in each of RE-groups or CDM groups indicated as '0' or '2' by application of a frequency-axis OCC, and accordingly, CSI-RS APs 3000 to 3003 are mapped to CDM group 0, and CSI-RS APs 3004 and 3007 are mapped to CDM group 1.

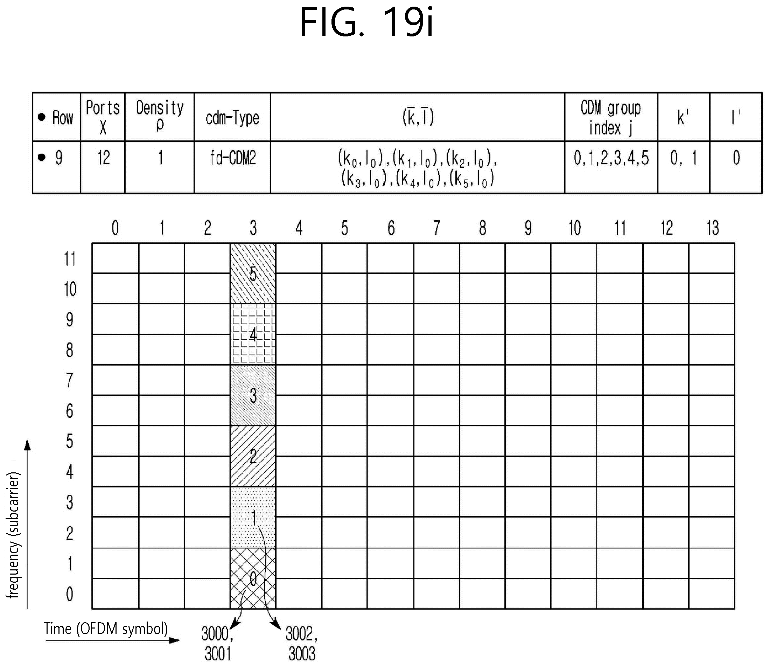

FIG. 19i illustrates an example of AP mapping of CSI-RS according to a ninth pattern. FIG. 19i exemplifies a case in which a firstOFDMSymbolInTimeDomain parameter is configured as 3 and a frequencyDomainAllocation parameter (e.g., a parameter corresponding to a bitmap $[b_5...b_0]$ of the TS 38.211 specification) is configured as 111111, that is, a case in which an I0 value is configured as 3 and values of $k_0$, $k_1$, $k_2$, $k_3$, $k_4$, and $k_5$ are configured as 0, 2, 4, 6, and 8, respectively. In FIG. 19i, two APs are CDM-ed in each of RE-groups or CDM groups indicated as '0', '1', '2', '3', '4', or '5' by application of a frequency-axis OCC, and accordingly, CSI-RS APs 3000 and 3001 are mapped to CDM group 0, CSI-RS APs 3002 and 3003 are mapped to CDM group 1, CSI-RS APs 3004 and 3005 are mapped to CDM group 2, CSI-RS APs 3006 and 3007 are mapped to CDM group 3, CSI-RS APs 3008 and 3009 are mapped to CDM group 4, and CSI-RS APs 3010 and 3011 are mapped to CDM group 5.

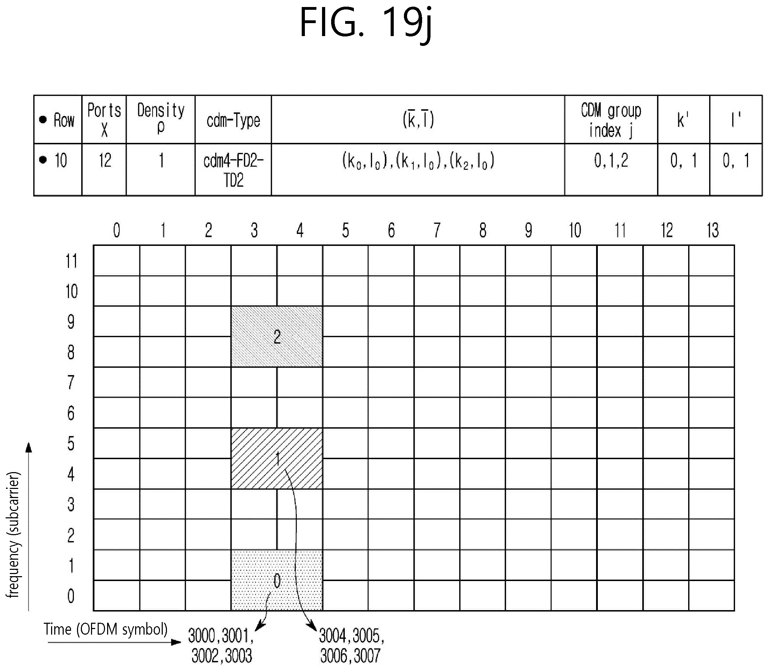

FIG. 19j illustrates an example of AP mapping of CSI-RS according to a tenth pattern. FIG. 19j exemplifies a case in which a firstOFDMSymbolInTimeDomain parameter is configured as 3 and a frequencyDomainAllocation parameter (e.g., a parameter corresponding to a bitmap $[b_5...b_0]$ of the TS 38.211 specification) is configured as 010101, that is, a case in which an $I_0$ value is configured as 3 and values of $k_0$, $k_1$, and $k_2$ are configured as 0, 4, and 8, respectively. In FIG. 19j, four APs are CDM-ed in each of RE-groups or CDM groups indicated as '0', '1', or '2' by application of a frequency-axis OCC, and accordingly, CSI-RS APs 3000 to 3003 are mapped to CDM group 0, CSI-RS APs 3004 to 3007 are mapped to CDM group 1, and CSI-RS APs 3008 to 3011 are mapped to CDM group 2.

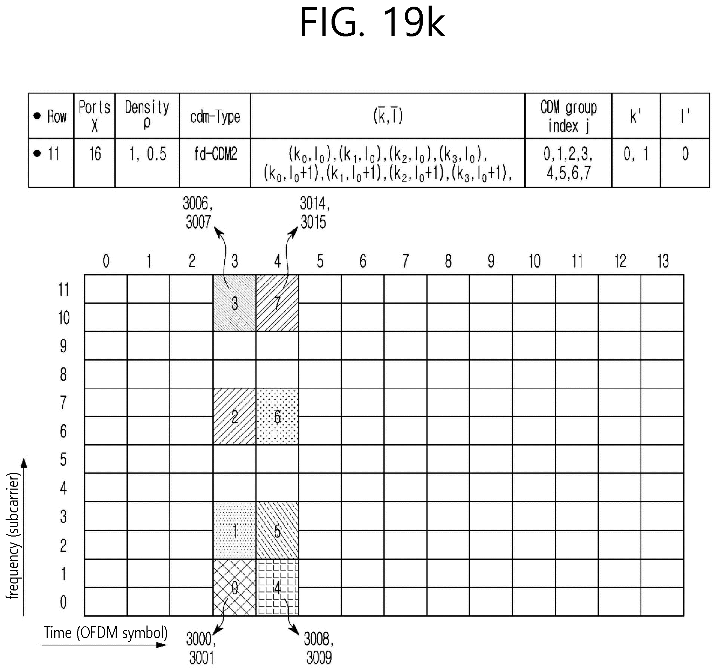

FIG. 19k illustrates an example of AP mapping of CSI-RS according to an eleventh pattern. FIG. 19k exemplifies a case in which a firstOFDMSymbolInTimeDomain parameter is configured as 3 and a frequencyDomainAllocation parameter (e.g., a parameter corresponding to a bitmap $[b_5...b_0]$ of the TS 38.211 specification) is configured as 101011, that is, a case in which an $I_0$ value is configured as 3 and values of $k_0$, $k_1$, $k_2$, and $k_3$ are configured as 0, 2, 6, and 10, respectively. In FIG. 19k, four APs are CDM-ed in each of RE-groups or CDM groups indicated as '0', '1', '2', '3', '4', '5', '6', or '7' by application of a frequency-axis OCC, and accordingly, CSI-RS APs 3000 and 3001 are mapped to CDM group 0, CSI-RS APs 3002 and 3003 are mapped to CDM group 1, CSI-RS APs 3004 and 3005 are mapped to CDM group 2, CSI-RS APs 3006 and 3007 are mapped to CDM group 3, CSI-RS APs 3008 and 3009 are mapped to CDM group 4, CSI-RS APs 3010 and 3011 are mapped to CDM group 5, CSI-RS APs 3012 and 3013 are mapped to CDM group 6, and CSI-RS APs 3014 and 3015 are mapped to CDM group 7.

FIG. 19i illustrates an example of AP mapping of CSI-RS according to a twelfth pattern. FIG. 19i exemplifies a case in which a firstOFDMSymbolInTimeDomain parameter is configured as 3 and a frequencyDomainAllocation parameter (e.g., a parameter corresponding to a bitmap $[b_5...b_0]$ of the TS 38.211 specification) is configured as 101011, that is, a case in which an $I_0$ value is configured as 3 and values of $k_0$, $k_1$, $k_2$, and $k_3$ are configured as 0, 2, 6, and 10, respectively. In FIG. 19i, four APs are CDM-ed in each of RE-groups or CDM groups indicated as '0', '1', '2', or '3' by application of a frequency-axis OCC, and accordingly, CSI-RS APs 3000 to 3003 are mapped to CDM group 0, CSI-RS APs 3004 to 3007 are mapped to CDM group 1, CSI-RS APs 3008 to 3011 are mapped to CDM group 2, and CSI-RS APs 3012 to 3015 are mapped to CDM group 3.

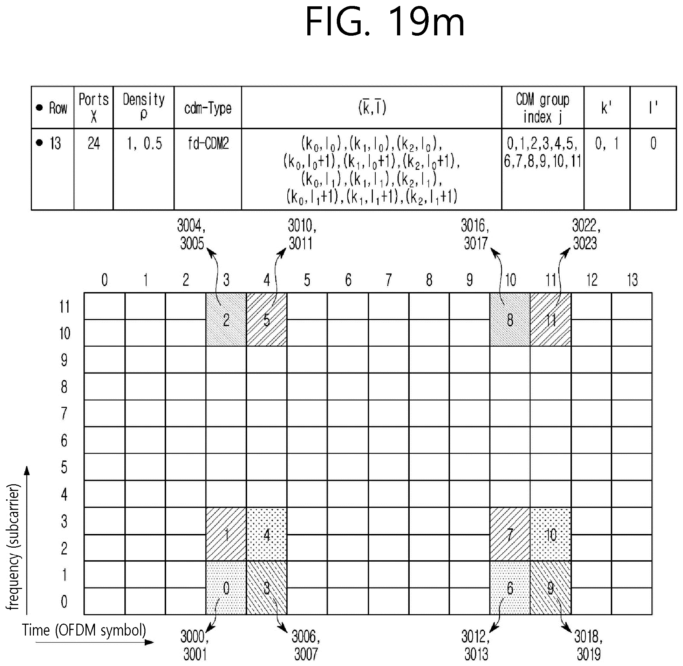

FIG. 19m illustrates an example of AP mapping of CSI-RS according to a thirteenth pattern. FIG. 19m exemplifies a case in which a firstOFDMSymbolInTimeDomain parameter is configured as 3, a firstOFDMSymbolInTimeDomain2 parameter is configured as $I_0$, and a frequencyDomainAllocation parameter (e.g., a parameter corresponding to a bitmap $[b_5...b_0]$ of the TS 38.211 specification) is configured as 100011, that is, a case in which an $I_0$ value is configured as 3, an $I_1$ value is configured as 10, and values of $k_0$, $k_1$, and $k_2$ are configured as 0, 8, and 10, respectively. In FIG. 19m, two APs are CDM-ed in each of RE-groups or CDM groups indicated as '0', '1', '2', '3', '4', '5', '6', '7', '8', '9', '10', or '11' by application of a frequency-axis OCC, and accordingly, CSI-RS APs 3000 and 3001 are mapped to CDM group 0, CSI-RS APs 3002 and 3003 are mapped to CDM group 1, CSI-RS APs 3004 and 3005 are mapped to CDM group 2, CSI-RS APs 3006 and 3007 are mapped to CDM group 3, CSI-RS APs 3008 and 3009 are mapped to CDM group 4, CSI-RS APs 3010 and 3011 are mapped to CDM group 5, CSI-RS APs 3012 and 3013 are mapped to CDM group 6, CSI-RS APs 3014 and 3015 are mapped to CDM group 7, CSI-RS APs 3016 and 3017 are mapped to CDM group 8, CSI-RS APs 3018 and 3019 are mapped to CDM group 9, CSI-RS APs 3020 and 3021 are mapped to CDM group 10, and CSI-RS APs 3022 and 3023 are mapped to CDM group 11.

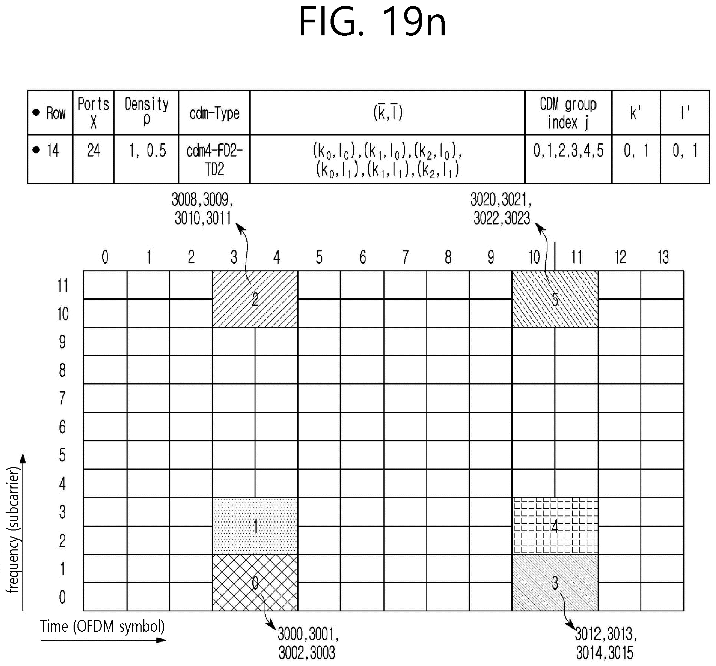

FIG. 19n illustrates an example of AP mapping of CSI-RS according to a fourteenth pattern. FIG. 19n exemplifies a case in which a firstOFDMSymbolInTimeDomain parameter is configured as 3, a firstOFDMSymbolInTimeDomain2 parameter is configured as $I_0$, and a frequencyDomainAllocation parameter (e.g., a parameter corresponding to a bitmap $[b_5...b_0]$ of the TS 38.211 specification) is configured as 100011, that is, a case in which an $I_0$ value is configured as 3, an $I_1$ value is configured as 10, and values of k0, k1, and k2 are configured as 0, 2, and 10, respectively. In FIG. 19n, four APs are CDM-ed in each of RE-groups or CDM groups indicated as '0', '1', '2', '3', '4', or '5' by application of a frequency-axis OCC, and accordingly, CSI-RS APs 3000 to 3003 are mapped to CDM group 0, CSI-RS APs 3004 to 3007 are mapped to CDM group 1, CSI-RS APs 3008 to 3011 are mapped to CDM group 2, CSI-RS APs 3012 to 3015 are mapped to CDM group 3, CSI-RS APs 3016 to 3019 are mapped to CDM group 4, and CSI-RS APs 3020 to 3023 are mapped to CDM group 5.

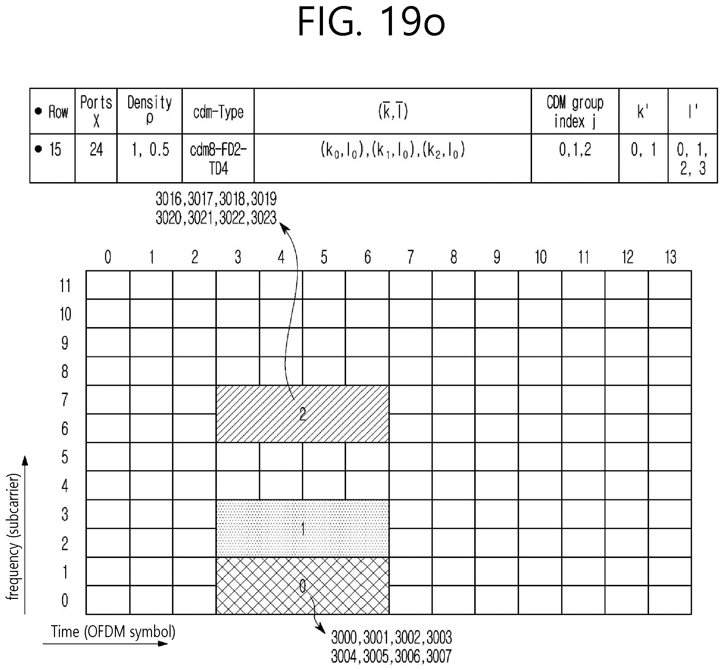

FIG. 19o illustrates an example of AP mapping of CSI-RS according to a fifteenth pattern. FIG. 19o exemplifies a case in which a firstOFDMSymbolInTimeDomain parameter is configured as 3 and a frequencyDomainAllocation parameter (e.g., a parameter corresponding to a bitmap [$b_5$...$b_0$] of the TS 38.211 specification) is configured as 001011, that is, a case in which an $I_0$ value is configured as 3 and values of $k_0$, $k_1$, and $k_2$ are configured as 0, 2, and 6, respectively. In FIG. 19o, eight APs are CDM-ed in each of RE-groups or CDM groups indicated as '0', '1', or '2' by application of a frequency-axis OCC, and accordingly, CSI-RS APs 3000 to 3007 are mapped to CDM group 0, CSI-RS APs 3008 to 3015 are mapped to CDM group 1, and CSI-RS APs 3016 to 3023 are mapped to CDM group 2.

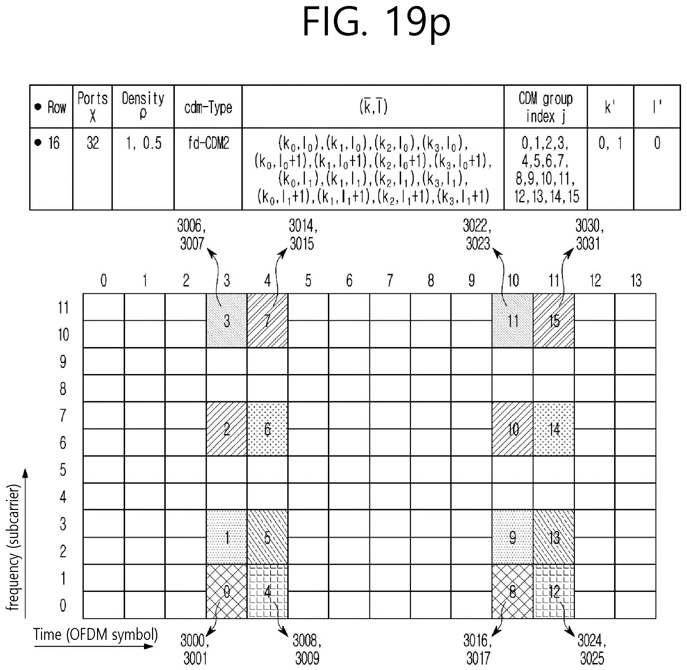

FIG. 19p illustrates an example of AP mapping of CSI-RS according to a thirteenth pattern. FIG. 19p exemplifies a case in which a firstOFDMSymbolInTimeDomain parameter is configured as 3, a firstOFDMSymbolInTimeDomain2 parameter is configured as $I_0$, and a frequencyDomainAllocation parameter (e.g., a parameter corresponding to a bitmap [$b_5$...$b_0$] of the TS 38.211 specification) is configured as 101011, that is, a case in which an $I_0$ value is configured as 3, an $I_1$ value is configured as $I_0$, and values of $k_0$, $k_1$, $k_2$, and $k_3$ are configured as 0, 2, 6, and 10, respectively. In FIG. 19p, two APs are CDM-ed in each of RE-groups or CDM groups indicated as '0', '1', '2', '3', '4', '5', '6', '7', '8', '9', '10', '11', '12', '13', '14', or '15' by application of a frequency-axis OCC, and accordingly, CSI-RS APs 3000 and 3001 are mapped to CDM group 0, CSI-RS APs 3002 and 3003 are mapped to CDM group 1, CSI-RS APs 3004 and 3005 are mapped to CDM group 2, CSI-RS APs 3006 and 3007 are mapped to CDM group 3, CSI-RS APs 3008 and 3009 are mapped to CDM group 4, CSI-RS APs 3010 and 3011 are mapped to CDM group 5, CSI-RS APs 3012 and 3013 are mapped to CDM group 6, CSI-RS APs 3014 and 3015 are mapped to CDM group 7, CSI-RS APs 3016 and 3017 are mapped to CDM group 8, CSI-RS APs 3018 and 3019 are mapped to CDM group 9, CSI-RS APs 3020 and 3021 are mapped to CDM group 10, CSI-RS APs 3022 and 3023 are mapped to CDM group 11, CSI-RS APs 3024 and 3025 are mapped to CDM group 12, CSI-RS APs 3026 and 3027 are mapped to CDM group 13, CSI-RS APs 3028 and 3029 are mapped to CDM group 14, and CSI-RS APs 3030 and 3031 are mapped to CDM group 15.

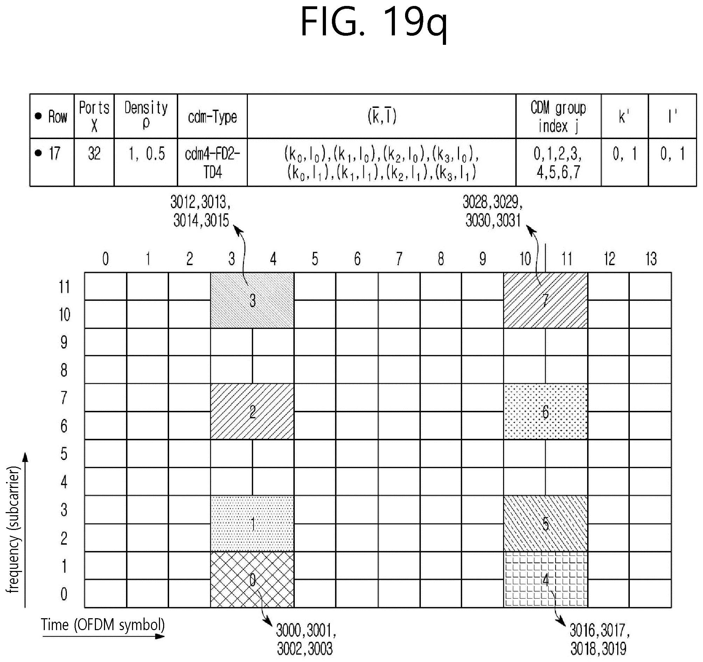

FIG. 19q illustrates an example of AP mapping of CSI-RS according to a fourteenth pattern. FIG. 19q exemplifies a case in which a firstOFDMSymbolInTimeDomain parameter is configured as 3, a firstOFDMSymbolInTimeDomain2 parameter is configured as $I_0$, and a frequencyDomainAllocation parameter (e.g., a parameter corresponding to a bitmap [$b_5$...$b_0$] of the TS 38.211 specification) is configured as 110011, that is, a case in which an $I_0$ value is configured as 3, an $I_1$ value is configured as $I_0$, and values of $k_0$, $k_1$, $k_2$, and $k_3$ are configured as 0, 2, 8, and 10, respectively. In FIG. 19q, four APs are CDM-ed in each of RE-groups or CDM groups indicated as '0', '1', '2', '3', '4', '5', '6', or '7' by application of a frequency-axis OCC, and accordingly, CSI-RS APs 3000 to 3003 are mapped to CDM group 0, CSI-RS APs 3004 to 3007 are mapped to CDM group 1, CSI-RS APs 3008 to 3011 are mapped to CDM group 2, CSI-RS APs 3012 to 3015 are mapped to CDM group 3, CSI-RS APs 3016 to 3019 are mapped to CDM group 4, CSI-RS APs 3020 to 3023 are mapped to CDM group 5, CSI-RS APs 3024 to 3027 are mapped to CDM group 6, and CSI-RS APs 3028 to 3031 are mapped to CDM group 7.

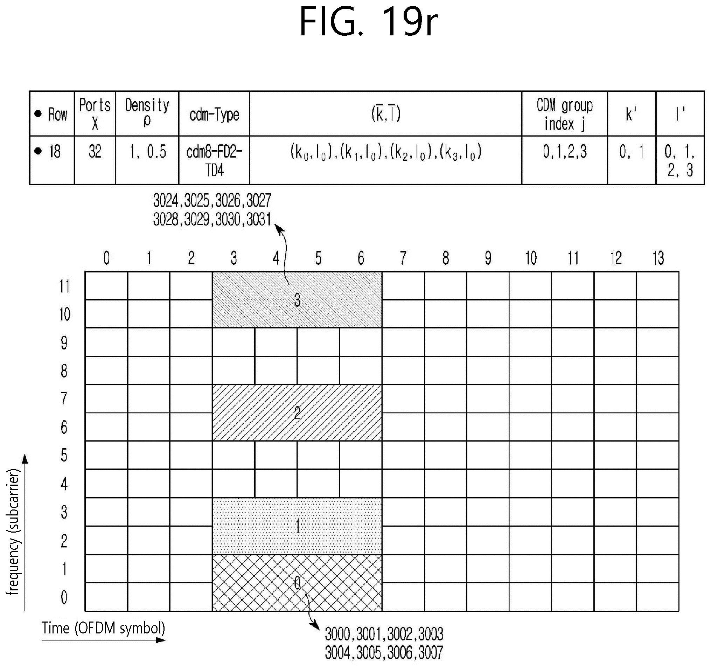

FIG. 19r illustrates an example of AP mapping of CSI-RS according to a fifteenth pattern. FIG. 19r exemplifies a case in which a firstOFDMSymbolInTimeDomain parameter is configured as 3 and a frequencyDomainAllocation parameter (e.g., a parameter corresponding to a bitmap [$b_5$...$b_0$] of the TS 38.211 specification) is configured as 101011, that is, a case in which an $I_0$ value is configured as 3 and values of $k_0$, $k_1$, $k_2$, and $k_3$ are configured as 0, 2, 6, and 10, respectively. In FIG. 19r, eight APs are CDM-ed in each of RE-groups or CDM groups indicated as '0', '1', '2', or '3' by application of a frequency-axis OCC, and accordingly, CSI-RS APs 3000 to 3007 are mapped to CDM group 0, CSI-RS APs 3008 to 3015 are mapped to CDM group 1, CSI-RS APs 3016 to 3023 are mapped to CDM group 2, and CSI-RS APs 3024 to 3031 are mapped to CDM group 3.

**[Embodiment #1] Definition of a CSI reference resource when the UE calculates/reports at least one CSI corresponding to at least one sub-configuration for one CSI report**

When the TS 38.214 specification document is examined, in defining a time-domain CSI reference resource, an $n_{CSI\_ref}$ value is defined differently depending on whether the number of CSI-RS resource(s) is one or a plurality for periodic/semi-persistent CSI (P/SP-CSI) reporting.

5.2.2.5 CSI reference resource definition

The CSI reference resource for a serving cell is defined as follows:

In the frequency domain, the CSI reference resource is defined by the group of downlink physical resource blocks corresponding to the band to which the derived CSI relates.

In the time domain, the CSI reference resource for a CSI reporting in uplink slot n' is defined by a single downlink slot $n - n_{CSI\_ref} - K_{offset} \cdot \frac{2^{\mu_{DL}}}{2^{\mu_{K_{offset}}}}$, where $K_{offset}$ is a parameter configured by higher layer as specified in clause 4.2 of [6 TS 38.213], and where $\mu_{K_{offset}}$ is the subcarrier spacing configuration for $K_{offset}$ with a value of 0 for frequency range 1,

- where $n = \left\lfloor n' \cdot \frac{2^{\mu_{DL}}}{2^{\mu_{UL}}} \right\rfloor + \left\lfloor \left( \frac{N_{slot,offset,UL}^{CA}}{2^{\mu_{offset,UL}}} - \frac{N_{slot,offset,DL}^{CA}}{2^{\mu_{offset,DL}}} \right) \cdot 2^{\mu_{DL}} \right\rfloor$ and $\mu_{DL}$ and $\mu_{UL}$ are the subcarrier spacing configurations for DL and UL, respectively, and $N_{\text{slot, offset}}^{\text{CA}}$ and $\mu_{\text{offset}}$ are determined by higher-layer configured ca-SlotOffset for the cells transmitting the uplink and downlink, as defined in clause 4.5 of [4, TS 38.211]

- where for periodic and semi-persistent CSI reporting
- if a single CSI-RS/SSB resource is configured for channel measurement $n_{\text{CSI\_ref}}$ is the smallest value greater than or equal to $4 \cdot 2^{\mu DL}$, such that it corresponds to a valid downlink slot, or
- if multiple CSI-RS/SSB resources are configured for channel measurement $n_{\text{CSI\_ref}}$ is the smallest value greater than or equal to $5 \cdot 2^{\mu DL}$, such that it corresponds to a valid downlink slot.
- where for aperiodic CSI reporting, if the UE is indicated by the DCI to report CSI in the same slot as the CSI request, $n_{\text{CSI\_ref}}$ is such that the reference resource is in the same valid downlink slot as the corresponding CSI request, otherwise $n_{\text{CSI\_ref}}$ is the smallest value greater than or equal to $\left\lfloor Z'/N_{symb}^{slot} \right\rfloor$, such that slot n- $n_{\text{CSI\_ref}}$ corresponds to a valid downlink slot, where Z' corresponds to the delay requirement as defined in Clause 5.4.
- when periodic or semi-persistent CSI-RS/CSI-IM or SSB is used for channel/interference measurements, the UE is not expected to measure channel/interference on the CSI-RS/CSI-IM/SSB whose last OFDM symbol is received up to Z' symbols before transmission time of the first OFDM symbol of the aperiodic CSI reporting.

A slot in a serving cell shall be considered to be a valid downlink slot if:

- it comprises at least one higher layer configured downlink or flexible symbol, and
- it does not fall within a configured measurement gap for that UE

If there is no valid downlink slot for the CSI reference resource corresponding to a CSI Report Setting in a serving cell, CSI reporting is omitted for the serving cell in uplink slot n'.

According to the specification document described above, an $n_{\text{CSI\_ref}}$ value may be defined as a smallest value corresponding to a valid downlink slot within a range equal to or greater than a first value (e.g., $4 \cdot 2^{\mu DL}$) or a second value (e.g., $5 \cdot 2^{\mu DL}$). That is, the first value or the second value becomes a minimum value of the $n_{\text{CSI\_ref}}$ value. In this case, the second value used when a plurality of CSI-RS resources are configured is greater than the first value used when a single CSI-RS resource is configured. This considers that, when a plurality of CSI-RS resources are configured for one CSI report, time or complexity required for the UE to calculate/report corresponding CSI(s) may be greater than that when a single CSI-RS resource is configured.

However, when a plurality of sub-configurations are configured for CSI reporting, similar to a case in which a plurality of CSI-RS resources are configured, time or complexity required to calculate/report CSI(s) may increase. Therefore, the present disclosure proposes the following embodiments in which, in selecting a minimum value of the $n_{\text{CSI\_ref}}$ value as the first value or the second value, not only CSI-RS resources but also the number and states of sub-configurations configured for related CSI reporting are further considered.

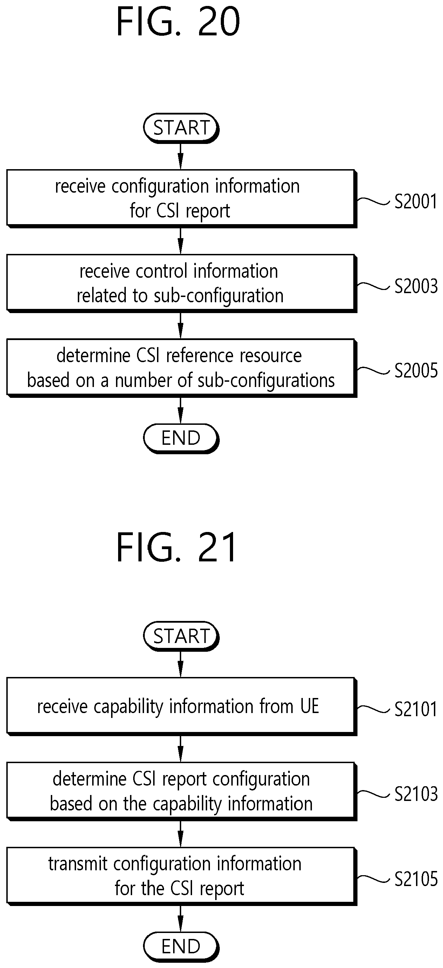

FIG. 20 illustrates an example of a procedure for determining a CSI reference resource according to one embodiment of the present disclosure. FIG. 20 exemplifies a method performed by the UE.

Referring to FIG. 20, in step S2001, the UE receives configuration information for CSI reporting. The configuration information may include information related to CSI-RS resource(s) or resource set(s), the number of APs, power offset, and the like related to CSI reporting. Additionally, the configuration information may include a plurality of sub-configurations, and the sub-configurations may be related to subsets with different numbers of APs or power offset values.

In step S2003, the UE receives control information related to at least one sub-configuration. For example, the control information may indicate activation or triggering of at least one sub-configuration among sub-configurations configured for CSI reporting. However, depending on a case, this step may be omitted.

In step S2005, the UE determines a CSI reference resource based on the number of sub-configuration(s). The CSI reference resource means a latest downlink slot in which the UE may receive a reference signal (e.g., CSI-RS, SSB) in order to report a CSI measurement result. That is, the CSI reference resource indicates up to which slot the UE may use reference signals in order to transmit a CSI report at a configured timing. Specifically, the CSI reference resource may be determined based on at least one of a number of an uplink slot for transmitting a CSI report, information related to an uplink subcarrier spacing, information related to a downlink subcarrier spacing, carrier aggregation (CA) related information (e.g., a slot offset between a Pcell and a PScell, an offset of subcarrier spacing between carriers, etc.), information related to a scheduling offset, information related to a subcarrier spacing for the scheduling offset, or information related to a slot interval (e.g., $n_{\text{CSI\_ref}}$). In this case, according to various embodiments, the UE may determine information related to the slot interval within a range equal to or greater than a minimum value determined based on the number of activated sub-configurations.

As described above with reference to FIG. 20, the UE may determine the CSI reference resource based on the number of activated sub-configurations. Thereafter, although not illustrated in FIG. 20, the UE may determine CSI(s) by using a reference signal received in the CSI reference resource or at least one slot before the CSI reference resource, and may transmit a CSI report including the CSI(s). In this case, the CSI report may include CSI for each sub-configuration.

Hereinafter, the present disclosure describes more specific embodiments related to determination of information related to a slot interval among the procedures exemplified in FIG. 20.

[Embodiment #1-1] Even when only a single CSI-RS resource is configured within one CSI report, as in FIG. 18b described above, a plurality of sub-configurations may be configured according to spatial domain adaptation and/or power domain adaptation. In this case, the UE may perform calculation/reporting for CSI corresponding to the plurality of sub-configurations. Considering that a plurality of CSI(s) are calculated/reported, even when a single CSI-RS resource (e.g., a CSI-RS resource for CMR) is configured for CSI reporting, for P/SP-CSI reporting corresponding to a CSI report in which a plurality of sub-configurations are configured, the UE may define an $n_{CSI\_ref}$ value as a smallest value within a range of $5 \cdot 2^{\mu_{DL}}$ such that the CSI reference resource corresponds to a valid downlink slot, as if a plurality of CSI-RS resources (e.g., CSI-RS resources for CMR) were configured.

In particular, in the case of P-CSI reporting, or when activation/triggering through a MAC-CE and/or DCI for selecting only N sub-configuration(s) among L sub-configurations configured for SP-CSI reporting is not possible, the UE may report CSI corresponding to all of the configured L sub-configurations to the base station at once. Even when a single CSI-RS resource is configured for the CSI reporting, calculating/reporting CSI corresponding to a plurality of L sub-configurations may require a level of UE implementation complexity equivalent to that in which a plurality of CSI-RS resources are allocated in an existing CSI reporting configuration. Therefore, in consideration of such UE implementation complexity, when the number of sub-configuration(s) configured for or related to CSI reporting exceeds 1, or when a total number of CSI-RS resources corresponding to each sub-configuration exceeds 1 (e.g., particularly in the case of type 1 spatial domain adaptation and/or power domain adaptation, when one CSI-RS is configured and two sub-configurations are configured, the total number of CSI-RS resources corresponding to the respective sub-configurations is 2), as if a plurality of CSI-RS resources (e.g., CSI-RS resources for CMR) were configured, an $n_{CSI\_ref}$ value may be defined as a smallest value within a range equal to or greater than $5 \cdot 2^{\mu_{DL}}$ such that the CSI reference resource corresponds to a valid downlink slot.

Conversely, when one CSI-RS resource (e.g., a CSI-RS resource for CMR) is configured for CSI reporting and the number of configured or corresponding sub-configuration(s) is 1, or when a total number of CSI-RS resources corresponding to each sub-configuration is 1 (e.g., when one CSI-RS is configured and one sub-configuration is configured, the total number of CSI-RS resources corresponding to each sub-configuration is 1), as if a single CSI-RS resource for CMR were configured, an $n_{CSI\_ref}$ value may be defined as a smallest value within a range equal to or greater than $4 \cdot 2^{\mu_{DL}}$ such that the CSI reference resource corresponds to a valid downlink slot.

When the above-described Embodiment #1-1 is applied, a definition of $n_{CSI\_ref}$ in the TS 38.214 specification document may be described as follows.

CSI reference resource definition

The CSI reference resource for a serving cell is defined as follows:

- In the frequency domain, the CSI reference resource is defined by the group of downlink physical resource blocks corresponding to the band to which the derived CSI relates.
- In the time domain, the CSI reference resource for a CSI reporting in uplink slot n' is defined by a single downlink slot $n - n_{CSI\_ref} - K_{offset} \cdot \frac{2^{\mu_{DL}}}{2^{\mu_{K_{offset}}}}$, where $K_{offset}$ is a parameter configured by higher layer as specified in clause 4.2 of [6 TS 38.213], and where $\mu_{K_{offset}}$ is the subcarrier spacing configuration for $K_{offset}$ with a value of 0 for frequency range 1,
- where $n = \left\lfloor n' \cdot \frac{2^{\mu_{DL}}}{2^{\mu_{UL}}} \right\rfloor + \left\lfloor \left( \frac{N_{slot,offset,UL}^{CA}}{2^{\mu_{offset,UL}}} - \frac{N_{slot,offset,DL}^{CA}}{2^{\mu_{offset,DL}}} \right) \cdot 2^{\mu_{DL}} \right\rfloor$ and $\mu_{DL}$ and $\mu_{UL}$ are the subcarrier spacing configurations for DL and UL, respectively, and $N_{slot,\,offset}^{CA}$ and $\mu_{offset}$ are determined by higher-layer configured ca-SlotOffset for the cells transmitting the uplink and downlink, as defined in clause 4.5 of [4, TS 38.211]

where for periodic and semi-persistent CSI reporting

- if a single CSI-RS/SSB resource is configured for channel measurement and if sub-configuration is not provided, $n_{CSI\_ref}$ is the smallest value greater than or equal to $4 \cdot 2^{\mu_{DL}}$ such that it corresponds to a valid downlink slot, or
- if a single CSI-RS resource is configured for channel measurement and if sub-configuration is provided, $n_{CSI\_ref}$ is the smallest value greater than or equal to $5 \cdot 2^{\mu_{DL}}$ such that it corresponds to a valid downlink slot.
- if multiple CSI-RS/SSB resources are configured for channel measurement $n_{CSI\_ref}$ is the smallest value greater than or equal to $5 \cdot 2^{\mu_{DL}}$ such that it corresponds to a valid downlink slot.

[Embodiment #1-2] Meanwhile, in the case of SP-CSI reporting, even when a plurality (e.g., L) of sub-configurations are configured for one CSI report, only sub-configuration(s) of L or less (e.g., N) may be activated by using a MAC-CE or DCI. In consideration of this, when N = 1, for the corresponding SP-CSI reporting, as if a single CSI-RS resource (e.g., a CSI-RS resource for CMR) were configured, an $n_{CSI\_ref}$ value may be defined as a smallest value within a range equal to or greater than $4 \cdot 2^{\mu_{DL}}$ such that the CSI reference resource corresponds to a valid downlink slot. Additionally, when N > 1, for the corresponding SP-CSI reporting, as if a plurality of CSI-RS resources (e.g., CSI-RS resources for CMR) were configured, an $n_{CSI\_ref}$ value may be defined as a smallest value within a range equal to or greater than $5 \cdot 2^{\mu_{DL}}$ such that the CSI reference resource corresponds to a valid downlink slot. The described above embodiment may be applied under a constraint that a single CSI-RS resource (e.g., a CSI-RS resource for CMR) is configured for one CSI report.

Meanwhile, in the case of SP-CSI reporting, activation/triggering through a MAC-CE and/or DCI for selecting N sub-configuration(s) among configured L sub-configurations may be performed. Accordingly, the UE may receive the MAC-CE and/or DCI, and may report CSI corresponding to the activated/triggered N sub-configurations to the base station. For the corresponding CSI reporting, even when a single CSI-RS resource is configured, when CSI corresponding to a plurality of N sub-configurations is calculated/reported, or when CSI corresponding to a plurality of CSI-RS resources each having a single sub-configuration is calculated/reported, a level of UE implementation complexity equivalent to that in which a plurality of CSI-RS resources are allocated in an existing CSI reporting configuration may be required. Therefore, in consideration of such UE implementation complexity, when the number of activated/triggered sub-configuration(s) for CSI reporting exceeds 1, or when a total number of CSI-RS resources corresponding to each sub-configuration exceeds 1 (e.g., particularly in the case of type 1 spatial domain adaptation and/or power domain adaptation, when one CSI-RS is configured and two sub-configurations are configured, the total number of CSI-RS resources corresponding to the respective sub-configurations is 2), as if a plurality of CSI-RS resources (e.g., CSI-RS resources for CMR) were configured, an $n_{CSI\_ref}$ value may be defined as a smallest value within a range equal to or greater than $5 \cdot 2^{\mu_{DL}}$ such that the CSI reference resource corresponds to a valid downlink slot. Conversely, when the number of CSI-RS resource(s) (e.g., CSI-RS resource(s) for CMR) configured for CSI reporting is 1, the number of configured, corresponding, or activated/triggered sub-configuration(s) is 1, and the number of CSI-RS resources corresponding to the sub-configuration is 1, or when a total number of CSI-RS resources corresponding to each sub-configuration is 1 (e.g., particularly in the case of type 2 spatial domain adaptation, when two CSI-RSs are configured, two sub-configurations are configured, one CSI-RS resource is associated with each sub-configuration, and only one sub-configuration is activated/triggered, the total number of CSI-RS resources corresponding to the CSI reporting is 1), as if a single CSI-RS resource (e.g., a CSI-RS resource for CMR) were configured, an $n_{CSI\_ref}$ value may be defined as a smallest value within a range equal to or greater than $4 \cdot 2^{\mu_{DL}}$ such that the CSI reference resource corresponds to a valid downlink slot.

When the above-described Embodiment #1-2 is applied, a definition of $n_{CSI\_ref}$ in the TS 38.214 specification document may be described as follows.

5.2.2.5 CSI reference resource definition

The CSI reference resource for a serving cell is defined as follows:

- In the frequency domain, the CSI reference resource is defined by the group of downlink physical resource blocks corresponding to the band to which the derived CSI relates.
- In the time domain, the CSI reference resource for a CSI reporting in uplink slot n' is defined by a single downlink slot $n - n_{CSI\_ref} - K_{offset} \cdot \frac{2^{\mu_{DL}}}{2^{\mu_{K_{offset}}}}$, where $K_{offset}$ is a parameter configured by higher layer as specified in clause 4.2 of [6 TS 38.213], and where $\mu_{K_{offset}}$ is the subcarrier spacing configuration for $K_{offset}$ with a value of 0 for frequency range 1,
- where $n = \left\lfloor n' \cdot \frac{2^{\mu_{DL}}}{2^{\mu_{UL}}} \right\rfloor + \left\lfloor \left( \frac{N_{slot,offset,UL}^{CA}}{2^{\mu_{offset,UL}}} - \frac{N_{slot,offset,DL}^{CA}}{2^{\mu_{offset,DL}}} \right) \cdot 2^{\mu_{DL}} \right\rfloor$ and $\mu_{DL}$ and $\mu_{UL}$ are the subcarrier spacing configurations for DL and UL, respectively, and $N_{slot,\,offsct}^{CA}$ and $\mu_{offset}$ are determined by higher-layer configured caSlotOffset for the cells transmitting the uplink and downlink, as defined in clause 4.5 of [4, TS 38.211]
- where for periodic and semi-persistent CSI reporting not containing a list of L sub-configurations provided by the higher layer parameter [csi-ReportSubConfigList]
- if a single CSI-RS/SSB resource is configured for channel measurement $n_{CSI\_ref}$ is the smallest value greater than or equal to $4 \cdot 2^{\mu_{DL}}$, such that it corresponds to a valid downlink slot, or
- if multiple CSI-RS/SSB resources are configured for channel measurement $n_{CSI\_ref}$ is the smallest value greater than or equal to $5 \cdot 2^{\mu_{DL}}$, such that it corresponds to a valid downlink slot.
- where for periodic CSI reporting containing a list of L sub-configurations provided by the higher layer parameter [csi-ReportSubConfigList]

- if $\sum_{i=1}^{L} K_s^i = 1$ where $K_s^i$ is the total number of CSI-RS resources for channel measurement corresponding to the i-th sub-configuration, $n_{CSI\_ref}$ is the smallest value greater than or equal to $4 \cdot 2^{\mu_{DL}}$ such that it corresponds to a valid downlink slot, or

- if $\sum_{i=1}^{L} K_s^i > 1$ where $K_s^i$ is the total number of CSI-RS resources for channel measurement corresponding to the i-th sub-configuration, $n_{CSI\_ref}$ is the smallest value greater than or equal to $5 \cdot 2^{\mu_{DL}}$ such that it corresponds to a valid downlink slot.

- where for semi-persistent CSI reporting containing a list of L sub-configurations provided by the higher layer parameter [csi-ReportSubConfigList]

- if $\sum_{i=1}^{N} K_s^i = 1$ where $K_s^i$ is the total number of CSI-RS resources for channel measurement corresponding to the i-th sub-configuration, and where the i-th sub-configuration is from N indicated sub-configurations out of L sub-configurations contained in a CSI-ReportConfig, where $N \leq L$ and $N \geq 1$, $n_{CSI\_ref}$ is the smallest value greater than or equal to $4 \cdot 2^{\mu_{DL}}$ such that it corresponds to a valid downlink slot, or

- if $\sum_{i=1}^{N} K_s^i > 1$ where $K_s^i$ is the total number of CSI-RS resources for channel measurement corresponding to the i-th sub-configuration, and where the i-th sub-configuration is from N indicated sub-configurations out of L sub-configurations contained in a CSI-ReportConfig, where $N \leq L$ and $N \geq 1$, $n_{CSI\_ref}$ is the smallest value greater than or equal to $5 \cdot 2^{\mu_{DL}}$, such that it corresponds to a valid downlink slot.

where for aperiodic CSI reporting, if the UE is indicated by the DCI to report CSI in the same slot as the CSI request, $n_{CSI\_ref}$ is such that the reference resource is in the same valid downlink slot as the corresponding CSI request, otherwise $n_{CSI\_ref}$ is the smallest value greater than or equal to $\lfloor Z'/N_{symb}^{slot} \rfloor$, such that slot n- $n_{CSI\_ref}$ corresponds to a valid downlink slot, where Z' corresponds to the delay requirement as defined in Clause 5.4.

- when periodic or semi-persistent CSI-RS/CSI-IM or SSB is used for channel/interference measurements, the UE is not expected to measure channel/interference on the CSI-RS/CSI-IM/SSB whose last OFDM symbol is received up to Z' symbols before transmission time of the first OFDM symbol of the aperiodic CSI reporting.

**[Embodiment #2] A method of counting the number of CSI-RS resource(s) and/or port(s) when one CSI-RS resource may be related to a plurality of sub-configurations**

The NR specification defines counting of the number of CSI-RS resource(s) and/or port(s) through the following expressions.

If a CSI-RS resource is referred N times by one or more CSI Reporting Settings, the CSI-RS resource and the CSI-RS ports within the CSI-RS resource are counted N times.

That is, when one CSI-RS resource is associated with a plurality of CSI report configurations, the number of CSI-RS resources and ports is counted by the number of the CSI report configurations. Such counting of the number of CSI-RS resources and ports is required due to a limitation of UE capability. Specifically, since the UE may not store CSI-RS(s) exceeding a certain number of resources/ports when storing CSI-RS(s) in memory, the base station may receive information related to the number of resources/ports through UE capability information (e.g., maxNumberSimultaneousNZP-CSI-RS-PerCC, totalNumberPortsSimultaneousNZP-CSI-RS-PerCC), and may configure a CSI report configuration so as not to exceed the UE capability based on the counting rule described above.

As the CSI framework is enhanced for NES, a plurality of sub-configurations may be configured for one CSI report configuration, and the sub-configurations may be related to the same CSI-RS resource. Therefore, it is necessary to define a CSI-RS resource/port counting rule in consideration of the sub-configurations.

FIG. 21 illustrates an example of a procedure for providing configuration information for CSI reporting according to one embodiment of the present disclosure. FIG. 21 exemplifies a method performed by a base station.

Referring to FIG. 21, in step S2101, the base station receives capability information from the UE. For this purpose, although not illustrated in FIG. 21, the base station may transmit a message requesting capability information to the UE. The capability information may include information related to functional and hardware capabilities related to communication of the UE. For example, the capability information may include information related to available memory capacity of the UE for CSI measurement. Specifically, the capability information may include information related to a maximum number of NZP-CSI-RS that the UE may simultaneously process per CC or a total number of NZP-CSI-RS ports.

In step S2103, the base station determines configuration related to CSI reporting based on the capability information. In other words, the base station determines various parameters related to CSI reporting of the UE based on the capability information. For example, the various parameters related to CSI reporting may include at least one of CSI-RS resource(s), port(s) related to the CSI-RS resource(s), power offset, resource(s) for CSI reporting, a CSI reporting type (e.g., P, AP, or SP), or CSI reporting item(s). In this case, the base station may determine the parameters such that a counting value of CSI-RS resource(s) and CSI-RS port(s) configured for the UE for one CSI report does not exceed a threshold confirmed through the capability information of the UE. Here, according to various embodiments, the base station may count CSI-RS resource(s) and CSI-RS port(s) based on sub-configuration(s).

In step S2105, the base station transmits configuration information for CSI reporting. The configuration information includes the CSI report configuration determined in step S2103, that is, information related to various parameters. Specifically, the configuration information may include information related to CSI-RS resource(s) or resource set(s) for CSI reporting, the number of APs, power offset, and the like. Additionally, the configuration information may include a plurality of sub-configurations, and the sub-configurations may be related to subsets with different numbers of APs or power offset values.

As described above with reference to FIG. 21, the base station may determine configuration for CSI reporting based on capability information of the UE and may transmit the configuration information. Thereafter, although not illustrated in FIG. 21, the base station may receive a CSI report including at least one CSI from the UE.

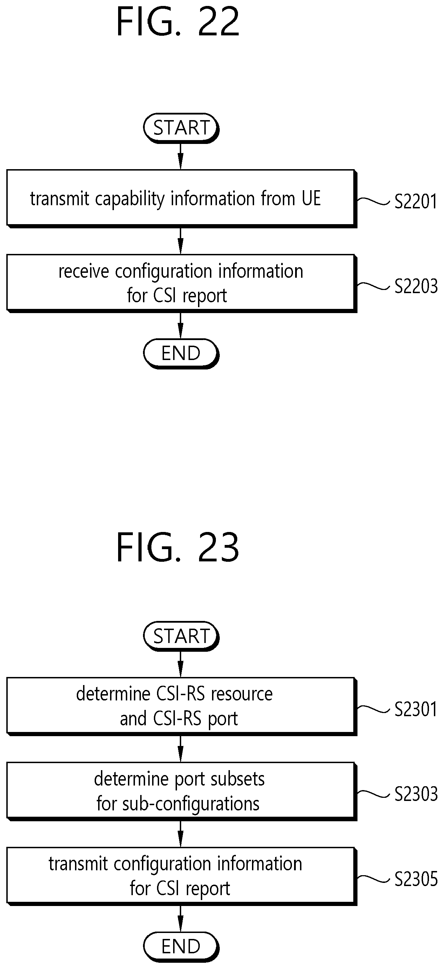

FIG. 22 illustrates an example of a procedure for receiving configuration information for CSI reporting according to one embodiment of the present disclosure. FIG. 22 exemplifies a method performed by the UE.

Referring to FIG. 22, in step S2201, the UE transmits capability information to the base station. For this purpose, although not illustrated in FIG. 22, the UE may receive a message requesting capability information from the base station. The capability information may include information related to functional and hardware capabilities related to communication of the UE. For example, the capability information may include information related to available memory capacity of the UE for CSI measurement. Specifically, the capability information may include information related to a maximum number of NZP-CSI-RS that the UE may simultaneously process per CC or a total number of NZP-CSI-RS ports.

In step S2203, the UE receives configuration information for CSI reporting. The configuration information may include information related to CSI-RS resource(s) or resource set(s) for CSI reporting, the number of APs, power offset, and the like. Additionally, the configuration information may include a plurality of sub-configurations, and the sub-configurations may be related to subsets with different numbers of APs or power offset values. Here, at least some of parameters included in the above-described configuration information may be determined by the base station based on the capability information transmitted in step S2201.

As described above with reference to FIG. 22, the UE may transmit capability information and may receive configuration information for CSI reporting. In this case, the UE may determine a threshold of a counting value of CSI-RS resource(s) and CSI-RS port(s) related to one CSI report, which is determined based on the capability information, and may check whether a counting value of CSI-RS resource(s) and CSI-RS port(s), which is calculated based on parameters included in the configuration received from the base station, does not exceed the threshold. In this case, when making a determination on a per-slot basis, the UE may not expect that CSI reporting is configured by the base station so as to exceed the counting value calculated based on the reported capability information.

Hereinafter, the present disclosure describes more specific embodiments related to counting of CSI-RS resource(s) and CSI-RS port(s) among the procedures exemplified in FIG. 21 and FIG. 22. The following embodiments may be applied to counting of CSI-RS resource(s) and CSI-RS port(s) of the base station and/or the UE.

[Embodiment #2-1] A proposed counting rule for CSI-RS resources is as follows. For one CSI-RS resource, when X CSI report configuration(s) are configured, and when the number of sub-configuration(s) related to the CSI-RS resource in a k-th CSI report configuration is expressed as $N(k)$, CSI-RS resource counting may be defined as $N(1)+N(2)+...+N(X)$. Here, $N(1)$ means the number of sub-configuration(s) related to the CSI-RS resource in a first CSI report configuration in which the CSI-RS resource is configured, and $N(X)$ means the number of sub-configuration(s) related to the CSI-RS resource in an X-th CSI report configuration in which the CSI-RS resource is configured. If no sub-configuration is configured for the k-th CSI report configuration, the value of $N(k)$ is 1. Specifically, the value of $N(k)$, that is, the number of sub-configuration(s) related to the CSI-RS resource, may be determined according to one of the embodiments described below or a combination thereof, based on UE capability, a CSI reporting type (e.g., P/SP/AP CSI reporting), a CSI-RS resource type (e.g., P/SP/AP CSI-RS resource), or the like.

[Embodiment #2-1-1] Even when a plurality of sub-configurations are configured or activated for a k-th CSI report configuration (e.g., CSI-ReportConfig), the value of $N(k)$ is always regarded as 1.

[Embodiment #2-1-2] When a plurality (e.g., L) of sub-configurations are configured for the k-th CSI report configuration, regardless of how many among the L sub-configurations are actually activated/triggered, the value of $N(k)$ is always regarded as L.

[Embodiment #2-1-3] Even when a plurality (e.g., L) of sub-configurations are configured for the k-th CSI report configuration, when N among the L sub-configurations are actually activated/triggered through a MAC-CE or DCI, the value of $N(k)$ is regarded as N.

[Embodiment #2-1-4] In the above-described embodiments, when sub-configurations that differ only in power offset (e.g., a power offset between CSI-RS and PDSCH) are configured for the same CSI-RS resource, $N(k)$ related to the sub-configurations is counted as 1. For example, for a CSI report configuration configured as in FIG. 18b, when Embodiment #2-1-2 is applied, N(k)=4, but since sub-configuration #1 and sub-configuration #2 differ only in power offset from each other, and sub-configuration #3 and sub-configuration #4 also differ only in power offset from each other, N(k) related to the sub-configurations may be counted as 2. As another example, when only sub-configuration #1 and sub-configuration #2 are activated in FIG. 18b, if Embodiment #2-1-3 is applied, N(k)=2. However, when only sub-configuration #1 and sub-configuration #2 are activated in FIG. 18b, according to the present embodiment, since sub-configuration #1 and sub-configuration #2 differ only in power offset from each other, N(k) may be counted as 1.

[Embodiment #2-1-5] When a plurality (e.g., L) of sub-configurations are configured for a k-th CSI report configuration, particularly for SP-CSI reporting on PUSCH or AP-CSI reporting, only some M sub-configuration(s) among the L sub-configurations may be activated through DCI. As one example, when a plurality of sub-configurations are configured for the corresponding CSI report configuration, a CSI report configuration and sub-configuration(s) related to each code-point of a CSI request field of DCI may be pre-configured/indicated, and the UE may feedback CSI corresponding to the CSI report configuration and sub-configuration(s) related to an indicated code-point to the base station through an uplink channel (e.g., PUSCH). In this case, a maximum number of sub-configuration(s) among all code-points of the CSI request field related to the k-th CSI report configuration may be determined as the value of N(k).

For example, when code-points of a CSI request field related to a k-th CSI report configuration in which a total of four sub-configurations are configured are '001', '110', and '111', and '001' is related to two sub-configurations within the k-th CSI report configuration, '110' is related to one sub-configuration within the k-th CSI report configuration, and '111' is related to three sub-configurations within the k-th CSI report configuration, the corresponding N(k) value may be determined as 3. That is, even when four sub-configurations are configured, since a maximum number of sub-configuration(s) that may be triggered through DCI is 3, it is preferable to count only three CSI-RS resource(s).

In this example, it is assumed that, particularly in the case of type 1 spatial domain adaptation and/or power domain adaptation, all four sub-configurations are related to the CSI-RS resource. The same embodiment may also be applied to type 2 spatial domain adaptation or type 2 spatial domain + power domain adaptation. For example, when CSI-RS resource ID #1 is related only to sub-configuration #0 and sub-configuration #1 among a total of four sub-configurations, and code-points of a CSI request field related to a k-th CSI report configuration in which a total of four sub-configurations are configured are '001', '110', and '111', where '001' is related to two sub-configurations (e.g., sub-configurations #0 and #2) within the k-th CSI report configuration, '110' is related to one sub-configuration (e.g., sub-configuration #2) within the k-th CSI report configuration, and '111' is related to three sub-configurations (e.g., sub-configurations #0, #1, and #2) within the k-th CSI report configuration, the corresponding N(k) value may be determined as 2. That is, even when four sub-configurations are configured, since a maximum number of sub-configuration(s) that may be triggered through DCI and are related to the CSI-RS resource ID #1 (e.g., sub-configurations #0 and #1 related to the code-point '111' of the CSI request field) is 2, it is preferable to count only the corresponding sub-configurations. The present embodiment may be applied to a P-CSI-RS resource and/or an SP-CSI-RS resource related to AP-CSI reporting and/or SP-CSI reporting on PUSCH.

One of the above-described Embodiment #2-1-1, Embodiment #2-1-2, and Embodiment #2-1-3 may be selectively applied according to the capability of the UE.

[Embodiment #2-2] A proposed counting rule for the number of ports of a CSI-RS resource is as follows. When X CSI report configurations are related to one CSI-RS resource, and {the number of sub-configuration(s) related to the CSI-RS resource in each CSI report configuration} × {the number of ports configured in the CSI-RS resource configuration} is expressed as N(k), counting of the number of ports of the CSI-RS resource may be defined as N(1) + N(2) + ... + N(X). Here, N(1) means a product of {the number of sub-configuration(s) related to the CSI-RS resource in a first CSI report configuration in which the CSI-RS resource is configured} and {the number of ports configured in the CSI-RS resource configuration}, and N(X) means a product of {the number of sub-configuration(s) related to the CSI-RS resource in an X-th CSI report configuration in which the CSI-RS resource is configured} and {the number of ports configured in the CSI-RS resource configuration}. If no sub-configuration is configured for a k-th CSI report configuration, an N(k) value is determined as {the number of ports configured in the CSI-RS resource configuration}. Specifically, an N(k) value, that is, the number of sub-configuration(s) related to the CSI-RS resource, may be determined based on a capability of the UE, a CSI report type (e.g., P/SP/AP CSI report), or a CSI-RS resource type (e.g., P/SP/AP CSI-RS resource), according to one of embodiments described below or a combination thereof.

[Embodiment #2-2-1] Even when a plurality of sub-configurations are configured or activated for a k-th CSI report configuration (e.g., CSI-ReportConfig), an N(k) value is always regarded as {the number of ports configured in the CSI-RS resource configuration}.

[Embodiment #2-2-2] When a plurality (e.g., L) of sub-configurations are configured for a k-th CSI report configuration, regardless of how many among the L sub-configurations are actually activated/triggered, an N(k) value is always regarded as a product of L and {the number of ports configured in the CSI-RS resource configuration}.

[Embodiment #2-2-3] Even when a plurality (e.g., L) of sub-configurations are configured for a k-th CSI report configuration, when N among the L sub-configurations are actually activated/triggered through a MAC-CE or DCI, an N(k) value is regarded as a product of N and {the number of ports configured in the CSI-RS resource configuration}.

[Embodiment #2-2-4] For Embodiment #2-2-2 and Embodiment #2-2-3, when sub-configurations having only different power offsets (e.g., a power offset between CSI-RS and PDSCH) are configured for the same CSI-RS resource, the sub-configurations may be regarded as one sub-configuration. For example, for a CSI report configuration configured as shown in FIG. 18b, when Embodiment #2-2-2 is applied, N(k) = 4 × 16, but since sub-configuration #1 and sub-configuration #2 differ only in a power offset, and sub-configuration #3 and sub-configuration #4 also differ only in a power offset, N(k) related to the sub-configurations may be counted as 2 × 16. As another example, when only sub-configuration #1 and sub-configuration #2 are activated in FIG. 18b, when Embodiment #2-2-3 is applied, N(k) = 2 × 16. However, when only sub-configuration #1 and sub-configuration #2 are activated in FIG. 18b, according to the present embodiment, since sub-configuration #1 and sub-configuration #2 differ only in a power offset, N(k) may be counted as 16.

[Embodiment #2-2-5] In applying Embodiment #2-2-2, Embodiment #2-2-3, Embodiment #2-2-4, and Embodiment #2-2-6, when port subset indication information, that is, bitmap information for port on/off, is configured for a specific sub-configuration, such as type 1 spatial domain adaptation or type 1 spatial domain + power domain adaptation, the number of ports configured in the CSI-RS resource configuration may be replaced with the number of ports that are turned on by the bitmap information. For example, for a CSI report configuration configured as shown in FIG. 18b, when Embodiment #2-2-2 is applied, N(k) = 4 × 16, but since only eight ports are turned on for sub-configuration #3 and sub-configuration #4 by bitmap information being configured, in this case, N(k) may be counted as 2 × 16 + 2 × 8. As another example, when only sub-configuration #1 and sub-configuration #3 are activated in FIG. 18b, when Embodiment #2-2-3 is applied, N(k) = 2 × 16. However, since only eight ports are turned on for sub-configuration #3 by bitmap information, in this case, N(k) may be counted as 16 + 8.

[Embodiment #2-2-6] For a k-th CSI report configuration, a plurality (e.g., L) of sub-configurations are configured, and particularly for SP-CSI reporting on PUSCH or AP-CSI reporting, only some M among the L sub-configurations may be activated by using DCI. For example, a CSI report configuration related to each code-point of a CSI request field of DCI, and, when a plurality of sub-configurations are configured for the CSI report configuration, sub-configuration(s), may be pre-configured/indicated. Accordingly, the UE may feedback CSI corresponding to a CSI report configuration and sub-configuration(s) related to a code-point indicated by the DCI to the base station through an uplink channel (e.g., PUSCH). In this case, an N(k) value may be regarded as a product of {a maximum number of sub-configuration(s)} and {the number of ports configured in the CSI-RS resource configuration} among all code-points of the CSI request field related to the k-th CSI report configuration, or an N(k) value may be regarded as a maximum value between {a sum of the number of ports in an on state configured for sub-configuration(s) related to each code-point (e.g., the number of antenna ports signaled as '1' by a bitmap)} and {the number of ports configured in the CSI-RS resource configuration}.

For example, when a k-th CSI report configuration in which a 16-port CSI-RS resource and a total of four sub-configurations are configured (e.g., sub-configuration #0 in which all 16 antenna ports are turned on, sub-configuration #1 in which only eight antenna ports are turned on, sub-configuration #2 in which only four antenna ports are turned on, and sub-configuration #3 in which only two antenna ports are turned on, which are signaled through antenna port subset indication or a bitmap) is associated with code-points '001', '110', and '111' of a CSI request field, and '001' is associated with two sub-configurations (e.g., sub-configurations #1/#3) within the k-th CSI report configuration, '110' is associated with one sub-configuration (e.g., sub-configuration #0) within the k-th CSI report configuration, and '111' is associated with three sub-configurations (e.g., sub-configurations #1/#2/#3) within the k-th CSI report configuration, an N(k) value may be determined as 3 × 16. That is, even when four sub-configurations are configured, since a maximum number of sub-configuration(s) that may be triggered through DCI is three, it is preferable to count only CSI-RS resource ports corresponding to three sub-configurations.

As another method, when an N(k) value is regarded as a maximum value between {a sum of the number of ports in an on state configured for sub-configuration(s) related to each code-point (e.g., the number of antenna ports signaled as '1' by a bitmap)} among all code-points of a related CSI request field and {the number of ports configured in the CSI-RS resource configuration}, the N(k) value may be determined as 16 = max{8 + 2, 16, 8 + 4 + 2}. Here, when a value determined by the max function is less than the number of ports configured in the CSI-RS resource configuration, a final N(k) value may be determined as the number of ports configured in the CSI-RS resource configuration.

In the present example, it is assumed that all four sub-configurations are configured to be related to the CSI-RS resource, particularly for type 1 spatial domain adaptation and/or power domain adaptation. For type 2 spatial domain adaptation or type 2 spatial domain + power domain adaptation, the same method may be extended and applied. For example, when a 16-port CSI-RS resource ID#1 is related only to sub-configuration #0 and sub-configuration #1 among four sub-configurations, and a k-th CSI report configuration in which four sub-configurations are configured is related to code-points '001', '110', and '111' of a CSI request field, and '001' is related to two sub-configurations (e.g., sub-configurations #0/#2) in the k-th CSI report configuration, and '110' is related to one sub-configuration (e.g., sub-configuration #2) in the k-th CSI report configuration, and '111' is related to three sub-configurations (e.g., sub-configurations #0/#1/#2) in the k-th CSI report configuration, an N(k) value may be determined as 16 × 2 = 32. That is, even when four sub-configurations are configured, since a maximum number of sub-configuration(s) that may be triggered through DCI and are related to the CSI-RS resource ID#1 is two (e.g., sub-configurations #0/#1 related to a code-point '111' of the CSI request field), it is preferable to count only a product of the number of CSI-RS resource(s) corresponding to two sub-configurations and the number of antenna ports. The present embodiment may be applied in a limited manner to P-CSI-RS resource(s) and/or SP-CSI-RS resource(s) related to AP-CSI reporting and/or SP-CSI reporting on PUSCH.

One of Embodiment #2-2-1, Embodiment #2-2-2, and Embodiment #2-2-3 described above may be selectively applied according to a capability of the UE.

**[Embodiment #3] When CSI is measured/calculated based on a subset of antenna ports configuring a CSI-RS resource indicated by a portSubsetIndicator parameter configured for a sub-configuration, a method for determining CSI-RS EPRE and a method for indicating an antenna port subset.**

A sub-configuration may be configured in a CSI report configuration. A subset of antenna ports configuring a CSI-RS resource may be signaled by a portSubsetIndicator parameter configured in the sub-configuration, and CSI measurement/calculation using only the subset may be configured. In this regard, Embodiment #3 relates to determination of CSI-RS EPRE and indication of an antenna port subset.

A CSI-ReportSubConfig IE defined in the TS 38.331 specification document is as shown in [Table 3] below.

[Table 3]

| | |
|---|---|
| CSI-ReportSubConfig-r18  ::= | SEQUENCE { |
| reportSubConfigId-r18 | CSI-ReportSubConfigId-r18, |
| reportSubConfigParams | CHOICE { |

```
               a1-parameters              SEQUENCE {
                  codebookSubConfig-r18            CodebookConfig
               OPTIONAL,    -- Need R
                  portSubsetIndicator-r18          CHOICE {
                     p2                      BIT STRING (SIZE (2)),
                     p4                      BIT STRING (SIZE (4)),
                     p8                      BIT STRING (SIZE (8)),
                     p12                     BIT STRING (SIZE (12)),
                     p16                     BIT STRING (SIZE (16)),
                     p24                     BIT STRING (SIZE (24)),
                     p32                     BIT STRING (SIZE (32))
                  }
               OPTIONAL,    -- Need R
                  non-PMI-PortIndication-r18       SEQUENCE (SIZE (1..maxNrofNZP-CSI-RS-Resou
rcesPerConfig)) OF PortIndexFor8Ranks

               OPTIONAL    -- Need R
               },
               a2-parameters              SEQUENCE {
                  nzp-CSI-RS-ResourceList-r18         SEQUENCE (SIZE (1..maxNrofNZP-CSI-RS-Reso
urcesPerSet)) OF NZP-CSI-RS-ResourceIndex-r18
               }
            }
               OPTIONAL,    -- Need R
            powerOffset-r18                  INTEGER(0..23)
               OPTIONAL    -- Need R
         }

         NZP-CSI-RS-ResourceIndex-r18 ::= INTEGER (0..maxNrofNZP-CSI-RS-ResourcesPerSet-1-r18)
```

Descriptions of respective fields of [Table 3] may be found in the TS 38.331 specification document, and are as follows.

codebookSubConfig: codebook parameters applicable to ports indicated by portSubsetIndicator. Codebook subset restriction, rank restriction, and applicable value ranges of N1, N2, Ng, and 2TX-CodebookSubsetRestriction follow existing specifications according to codebookConfig configured in CSI-ReportConfig, and are applied to the number of ports determined by portSubsetIndicator (see TS 38.214 [19], Section 5.2.1.4.2). In this field, the network always configures the codebook type as type1. When reportQuantity is configured as 'cri-RI-i1-CQI', for each sub-configuration including portSubsetIndicator, the network shall mandatorily configure the typeISinglePanel-codebookSubsetRestriction-i2 parameter in codebookSubConfig. For each CSI-RS resource of a CSI-ResourceConfig related to channel measurement, this field is a port indication for each rank R indicating which R ports are used among P ports to be used within the sub-configuration. P corresponds to the number of bits having a value of 1 in the bitmap portSubsetIndicator-r18.

nzp-CSI-RS-ResourceList: an NZP CSI-RS resource list for a sub-configuration, which is a (sub-)set of CSI-RS resources for channel measurement related to the sub-configuration in a CSI report configuration. A value 0 indicates a first NZP CSI-RS resource of a CSI-RS resource set. A value 1 indicates a second NZP CSI-RS resource of the CSI-RS resource set.

portSubsetIndicator: indicates a (sub-)set of CSI-RS antenna ports used for CSI calculation of a sub-configuration. Each bit in a bit sequence corresponds to an antenna port. When a bit is set to 1, a corresponding port is activated for CSI calculation corresponding to the sub-configuration. When a bit is set to 0, a corresponding port is not activated for CSI calculation corresponding to the sub-configuration. A size of the bit sequence is equal to P bits, where P = 2/4/8/12/16/24/32 indicates the number of ports of an NZP CSI-RS resource related to CSI-ReportConfig in a resource set for channel measurement.

powerOffset: when powerControlOffset is configured for an NZP CSI-RS resource indicated by nzp-CSI-RS-Resources, a power offset between a PDSCH RE and an NZP CSI-RS RE is equal to powerControlOffset minus powerOffset.

reportSubConfigParams: indicates resources to be used for a CSI report sub-configuration, including an a1-parameter including parameters related to an antenna port subset and a sub-configuration, or an a2-parameter including an NZP CSI-RS resource list for the sub-configuration (see TS 38.214 [19], Section 5.2.1.4.2).

As described above, a portSubsetIndicator parameter is included in a1-parameters included in a sub-configuration. By using the portSubsetIndicator parameter, among a total of P antenna ports configured for an NZP CSI-RS, which antenna ports are turned on or turned off may be configured through bitmap information having a P-bit size. In the bitmap information, a bit having a value of '1' indicates on, and a bit having a value of '0' indicates off. The UE may calculate CSI, such as RI, PMI, and CQI, corresponding to the sub-configuration by using antenna ports in an on state, and may report the CSI to the base station.

In the RAN1#96bis meeting, the following conclusion was determined.

**Conclusion (RAN1#96bis)**

It is common understanding in RAN1 that:

- The powerControlOffset ("Pc") ratio is defined as $10 \times log_{10} \frac{P_{PDSCH}}{P_{CSIRS}}$ dB

- Where

  $P_{PDSCH}$ is the energy of total PDSCH ports multiplexed on one subcarrier of one OFDM symbol
  $P_{CSIRS}$ is the energy of all CSI-RS ports multiplexed on one subcarrier of one OFDM symbol

As in the conclusion of the RAN1#96bis meeting described above, $P_{CSIRS}$ or CSI-RS energy per resource element (EPRE) may be interpreted as energy carried on all CSI-RS ports that are multiplexed on one sub-carrier in one OFDM symbol. For example, as shown in FIG. 19h, one CDM group may be formed by CDMing four CSI-RS ports on one RE. In this case, when two antenna ports are turned off for each CDM group by portSubsetIndicator, for example, when the portSubsetIndicator parameter is configured such that antenna ports 3000, 3002, 3004, and 3006 are turned off, $P_{CSIRS}$ or CSI-RS EPRE may be halved. In other words, when '1' values are configured in portSubsetIndicator for N ($\leq$ K) ports among a CDM group composed of K antenna ports, a CSI-RS EPRE value corresponding to an NZP CSI-RS to which the portSubsetIndicator parameter is applied may be N/K times a CSI-RS EPRE value configured for the NZP CSI-RS. Here, according to the TS 38.214 specification document, the CSI-RS EPRE value configured for the NZP CSI-RS is determined by an offset value relative to SSB power as follows.

The downlink CSI-RS EPRE can be derived from the SS/PBCH block downlink transmit power given by the parameter ss-PBCH-BlockPower and CSI-RS power offset given by the parameter powerControlOffsetSS provided by higher layers if the SS/PBCH block is associated with serving cell PCI, or derived from ss-PBCH-BlockPower-r17 in SSBMTC-AdditionalPCI-r17 and powerControlOffsetSS provided by higher layers if the SS/PBCH block is associated with additional PCI different from serving cell PCI. Here, the CSI-RS is QCLed with the SS/PBCH block. The downlink reference-signal transmit power is defined as the linear average over the power contributions (in [W]) of the resource elements that carry the configured CSI-RS within the operating system bandwidth.

However, when an EPRE of a CSI-RS to which a portSubsetIndicator parameter is applied is determined in the manner described above, there is a problem in that EPRE values differ per CDM group when the number of antenna ports in an off state differs per CDM group within the same symbol. Specifically, for an 8-port CSI-RS resource configured as shown in FIG. 19h, four ports, such as antenna ports 3000, 3005, 3006, and 3007, may be configured to be turned off by the portSubsetIndicator parameter. That is, since one antenna port among four is turned off in CDM group 0 and three antenna ports among four are turned off in CDM group 1, EPRE becomes 1/4 for CDM group 0 and 3/4 for CDM group 1. However, an assumption that EPREs of CDM group 0 and CDM group 1 included in one OFDM symbol are different may be inappropriate from a viewpoint of CQI derivation of the UE.

FIG. 23 illustrates an example of a procedure for providing configuration information for CSI reporting according to an embodiment of the present disclosure. FIG. 23 exemplifies a method performed by a base station.

Referring to FIG. 23, in step S2301, the base station determines at least one CSI-RS resource and at least one CSI-RS port. That is, the base station may request CSI measurement and reporting from the UE in order to obtain channel information of the UE, and for this purpose, may determine at least one CSI-RS resource and at least one port for CSI-RS transmission. In this case, a plurality of ports may be related to one CSI-RS resource.

In step S2303, the base station determines port subsets for sub-configurations. The base station may determine a plurality of port subsets using subsets of CSI-RS ports related to one CSI-RS resource. By generating the port subsets, spatial domain adaptation may be performed. In this case, according to various embodiments, the base station may determine the port subsets by considering CDM groups defined by CDM relationships among ports. Specifically, the base station may determine the port subsets such that the number of ports that are turned off or turned on is identical in CDM groups located in the same time resource (e.g., OFDM symbol, slot, etc.). In other words, the base station may determine the port subsets such that the number of ports that are turned off or turned on is identical among CDM groups transmitted in one OFDM symbol, or among CDM groups transmitted within one slot.

In step S2305, the base station transmits configuration information for CSI reporting. The configuration information may include information related to at least one CSI-RS resource and at least one CSI-RS port determined in step S2301, and information related to the sub-configurations determined in step S2303. The information related to the sub-configurations may include a bitmap indicating port subsets.

As described with reference to FIG. 23, the base station determines port subsets under constraints related to CDM groups. Thereafter, although not illustrated in FIG. 23, the base station may receive, from the UE, a CSI report including at least one CSI.

Hereinafter, the present disclosure describes more specific embodiments related to determination of port subsets among the procedures exemplified in FIG. 23.

[Embodiment #3-1] In order to solve this problem, a constraint may be introduced such that the number of antenna ports that are turned off or turned on by a portSubsetIndicator parameter is identical for at least one CDM group on the same OFDM symbol. In other words, the UE may not expect a configuration in which, on the same OFDM symbol or within the same slot, the number of antenna ports that are turned off or turned on by the portSubsetIndicator parameter differs per CDM group. For example, in FIG. 19h, when two antenna ports are turned off for CDM group 0 by the portSubsetIndicator parameter, two antenna ports may also have to be turned off for another CDM group 1, and the UE may not expect signaling in which one or three antenna ports are turned off for CDM group 1.

Exceptionally, it may be allowed that all antenna ports belonging to a specific CDM group among at least one CDM group on the same OFDM symbol or within the same slot are turned off. This is because turning off all antenna ports within a CDM group does not cause confusion in CSI-RS EPRE calculation of the UE. For example, in FIG. 19h, signaling in which two antenna ports are turned off for CDM group 0 by the portSubsetIndicator parameter and all antenna ports belonging to another CDM group 1 are turned off (e.g., portSubsetIndicator parameter configuration) may be allowed.

[Embodiment #3-2] According to another embodiment, when portSubsetIndicator is configured, if '1' values are configured in portSubsetIndicator for N ($\leq$ K) antenna ports among K antenna ports configured for an NZP CSI-RS on one OFDM symbol or within the same slot, a CSI-RS EPRE value corresponding to an NZP CSI-RS to which the portSubsetIndicator parameter is applied may be N/K times a CSI-RS EPRE configured for the NZP CSI-RS. For example, for an 8-port CSI-RS resource configured as shown in FIG. 19h, when four ports, such as antenna ports 3000, 3005, 3006, and 3007, are configured to be off by the portSubsetIndicator parameter, a CSI-RS EPRE value corresponding to an NZP CSI-RS to which the portSubsetIndicator parameter is applied may be half of a CSI-RS EPRE configured for the NZP CSI-RS.

[Embodiment #3-3] According to another embodiment, a constraint may be introduced such that the number of antenna ports that are turned off or turned on per symbol by the portSubsetIndicator parameter is identical. For example, as shown in FIG. 19p, for a CSI-RS resource transmitted on symbols #3/#4/#10/#11, when N ports are turned off or turned on on symbol #3, a constraint may be introduced such that N ports are turned off or turned on also on the remaining symbols #4/#10/#11. In the case of the present embodiment, an advantage exists in that CSI-RS EPRE per symbol may be aligned to be identical by assuming that the number of CSI-RS ports transmitted per symbol is identical.

The CSI-RS EPRE value corresponding to an NZP CSI-RS to which the portSubsetIndicator parameter is applied, described above, may be applied to the CSI-RS EPRE extracted from Section 5.2.2.5.1 of the TS 38.214 specification document below. Based on this, the UE may measure a CQI value and may report the CQI value to the base station.

- For a UE configured with a CSI-ReportConfig that contains a list of sub-configurations provided by [csi-ReportSub-ConfigList],

- if a sub-configuration indicates a CSI-RS antenna port subset using the higher layer bitmap parameter [port-subsetIndicator], as described in clause 5.2.1.4.2, for CQI calculation, antenna ports corresponding to all bits with value of 1 in [port-subsetIndicator] are mapped to consecutive antenna ports starting at CSI-RS antenna port 3000 in increasing order of the bit position in [port-subsetIndicator]. The UE should assume that PDSCH signals on antenna ports in the set [1000, ..., 1000+v-1] for v layers would result in signals equivalent to corresponding symbols transmitted on antenna ports [3000, ..., 3000+P-1] $^{T}$, as given by

$$\begin{bmatrix} y^{(3000)}(i) \\ \cdots \\ y^{(3000+P-1)}(i) \end{bmatrix} = W(i) \begin{bmatrix} x^{(0)}(i) \\ \cdots \\ x^{(v-1)}(i) \end{bmatrix}$$

where P corresponds to the number of bits with value 1 in the bitmap [port-subsetIndicator] and $x(i) = [x^{(0)}(i) \ldots x^{(v-1)}(i)]^T$ , and $W(i)$ are as previously described in this Clause, and **the corresponding PDSCH EPRE and CSI-RS EPRE are as previously defined in this Clause if the sub-configuration does not indicate a power offset [power-Offset]**.

The present embodiment may be applied when a power offset parameter is not configured for a sub-configuration and a portSubsetIndicator parameter is configured.

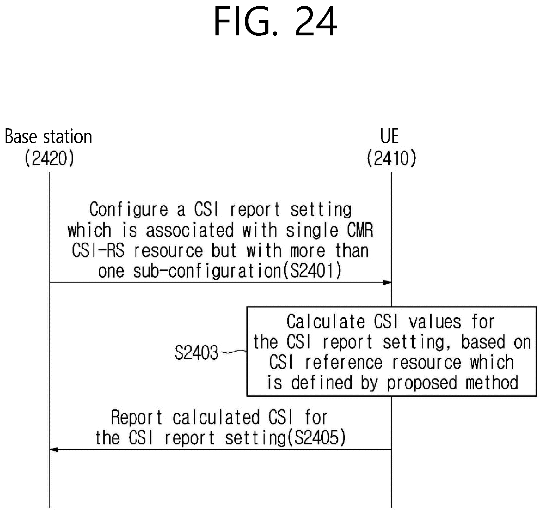

FIG. 24 illustrates an example of a procedure for transmitting a CSI report according to one embodiment of the present disclosure. FIG. 24 exemplifies signal exchange between a UE 2310 and a base station 2320.

Referring to FIG. 24, in step S2301, the base station 2320 configures a CSI report configuration for the UE 2310. Here, the CSI report configuration is related to a single CMR CSI-RS resource. In addition, the CSI report configuration is related to a plurality of sub-configurations.

In step S2303, the UE 2310 calculates CSI values for the CSI report configuration. The CSI values are determined based on a CSI reference resource. In this case, the CSI reference resource may be defined according to the proposed method.

In step S2305, the UE 2310 transmits the CSI calculated for the CSI report configuration to the base station 2320. As such, even when the CSI report configuration is configured with a single CSI-RS resource for CMR, when a plurality of sub-configurations are configured, as proposed in [Embodiment #1], a time domain property of a CSI reference resource may be defined as in a case in which a plurality of CSI-RS resources are configured.

In preparation for the base station turning on/off antennas or adjusting power values, a plurality of antenna port numbers or a plurality of power offset values may be related to one CSI report configuration. In this case, by applying the proposed technique to definition of a CSI reference resource corresponding to the CSI report and counting of CSI-RS resource(s)/port(s), an efficient CSI calculation/reporting method considering UE implementation complexity may be supported.

The proposed methods described above may be implemented independently, but may also be implemented in a form of combination (or merging) of some proposed methods. Information on whether the proposed methods are applied (or information on rules of the proposed methods) may be defined by a rule such that the base station informs the UE through a predefined signal (e.g., a physical layer signal or a higher layer signal).

The present disclosure may be embodied in other specific forms without departing from the technical idea and essential features described herein. Therefore, the above detailed description should not be interpreted in a limiting sense in all aspects and should be considered as illustrative. The scope of the present disclosure should be determined by a reasonable interpretation of the appended claims, and all modifications within the equivalent scope of the present disclosure are included in the scope of the present disclosure. In addition, claims having no explicit reference relationship in the claims may be combined to constitute an embodiment, or may be included as new claims through amendment after filing.

## INDUSTRIAL APPLICABILITY

The embodiments of the present disclosure may be applied to various wireless access systems. Examples of various wireless access systems include 3GPP (3rd Generation Partnership Project) systems or 3GPP2 systems.

The embodiments of the present disclosure may be applied not only to the above various wireless access systems but also to all technical fields to which the above various wireless access systems are applied. Furthermore, the proposed method may be applied to mmWave and THz communication systems using an ultra-high frequency band.

Additionally, the embodiments of the present disclosure may be applied to various applications such as autonomous vehicles and drones.

## Claims

1. A method performed by a user equipment (UE) in a wireless communication system, the method comprising:

receiving configuration information for a channel state information (CSI) report including a list of a plurality of sub-configurations; and
transmitting, to a base station, CSI including a measurement result based on at least one CSI-reference signal (RS) related to the CSI report,
wherein the configuration information includes information related to a CSI-RS resource for the CSI report and a plurality of CSI-RS ports,
wherein the plurality of sub-configurations is associated with information related to different port subsets based on the plurality of CSI-RS ports, and
wherein the port subsets are determined based on a code division multiplexing (CDM) group of the CSI-RS ports.

2. The method of claim 1,
wherein each of the port subsets is determined such that a number of ports that are turned off or turned on in CDM groups located on a same time axis is identical.

3. The method of claim 2,
wherein the UE does not expect configuration in which a number of antenna ports that are turned on or turned off for at least one CDM group is different for each CDM group on a same orthogonal frequency division multiplexing (OFDM) symbol or a same slot.

4. The method of claim 2,

wherein the CDM groups include a first CDM group and a second CDM group which are located on the same time axis, and
wherein all ports included in the first CDM group are turned off, regardless of a number of ports that are turned off or turned on among ports included in the second CDM group.

5. The method of claim 1,
wherein a CSI-RS energy per resource element (EPRE) for a port subset including at least one port that is turned off among the port subsets is determined as a value by reducing the CSI-EPRE configured for CSI-RS related to the CSI-RS resource by a ratio of ports that are turned off.

6. The method of claim 1,
wherein each of the port subsets is determined such that a number of ports that are turned off or turned on in at least one CDM group located in a first symbol and a number of ports that are turned off or turned on in at least one CDM group located in a second symbol are equal.

7. A method performed by a base station in a wireless communication system, the method comprising:

determining a channel stat information (CSI)-reference signal (RS) resource and a plurality of CSI-RS ports for a user equipment (UE);
determining sub-configurations for the UE from the plurality of CSI-RS ports using port subsets; and
transmitting configuration information for a CSI report including information related to the port subsets,
wherein the port subsets are determined based on a code division multiplexing (CDM) group of the CSI-RS ports.

8. The method of claim 7,
wherein each of the port subsets is determined such that a number of ports that are turned off or turned on in CDM groups located on a same time axis is identical.

9. The method of claim 8,

wherein the CDM groups include a first CDM group and a second CDM group which are located on the same time axis, and
wherein all ports included in the first CDM group are turned off, regardless of a number of ports that are turned off or turned on among ports included in the second CDM group.

10. The method of claim 7,
wherein a CSI-RS energy per resource element (EPRE) for a port subset including at least one port that is turned off among the port subsets is determined as a value by reducing the CSI-EPRE configured for CSI-RS related to the CSI-RS resource by a ratio of ports that are turned off.

11. The method of claim 7,

wherein each of the port subsets is determined such that a number of ports that are turned off or turned on in at least one CDM group located in a first symbol and a number of ports that are turned off or turned on in at least one CDM group located in a second symbol are equal.

12. A user equipment (UE) in a wireless communication system, comprising:

a transceiver; and
a processor connected to the transceiver,
wherein the processor is configured to:

receive configuration information for a channel state information (CSI) report including a list of a plurality of sub-configurations; and
transmit, to a base station, CSI including a measurement result based on at least one CSI-reference signal (RS) related to the CSI report,
wherein the configuration information includes information related to a CSI-RS resource for the CSI report and a plurality of CSI-RS ports,
wherein the plurality of sub-configurations is associated with information related to different port subsets based on the plurality of CSI-RS ports, and
wherein the port subsets are determined based on a code division multiplexing (CDM) group of the CSI-RS ports.

13. A base station in a wireless communication system, comprising:

a transceiver; and
a processor connected to the transceiver,
wherein the processor is configured to:

determine a channel stat information (CSI)-reference signal (RS) resource and a plurality of CSI-RS ports for a user equipment (UE);
determine sub-configurations for the UE from the plurality of CSI-RS ports using port subsets; and
transmit configuration information for a CSI report including information related to the port subsets,
wherein the port subsets are determined based on a code division multiplexing (CDM) group of the CSI-RS ports.

14. A communication device comprising:

at least one processor; and
at least one computer memory connected to the at least one processor and storing instructions that direct operations when executed by the at least one processor, the operations comprising:

receiving configuration information for a channel state information (CSI) report including a list of a plurality of sub-configurations; and
transmitting, to a base station, CSI including a measurement result based on at least one CSI-reference signal (RS) related to the CSI report,
wherein the configuration information includes information related to a CSI-RS resource for the CSI report and a plurality of CSI-RS ports,
wherein the plurality of sub-configurations is associated with information related to different port subsets based on the plurality of CSI-RS ports, and
wherein the port subsets are determined based on a code division multiplexing (CDM) group of the CSI-RS ports.

15. A non-transitory computer-readable medium storing at least one instruction, the at least one instruction being executable by a processor, the at least one instruction causing a device, the processor, to:

receive configuration information for a channel state information (CSI) report including a list of a plurality of sub-configurations; and
transmit, to a base station, CSI including a measurement result based on at least one CSI-reference signal (RS) related to the CSI report,

47

wherein the configuration information includes information related to a CSI-RS resource for the CSI report and a plurality of CSI-RS ports,
wherein the plurality of sub-configurations is associated with information related to different port subsets based on the plurality of CSI-RS ports, and
wherein the port subsets are determined based on a code division multiplexing (CDM) group of the CSI-RS ports.

# FIG. 1

Non-Terrestrial Network

Split gNB in NG-RAN

Mobile IAB

MT | DU

gNB-CU-UP

gNB-CU-UP | gNB-CU-UP

CU | DU

Donor node

gNB-DU

UE-to-UE relay

UE-to-Network relay

Network Controlled Repeater

Sidelink Relay

EP 4 761 128 A1

# FIG. 2

# FIG. 3

# FIG. 4

Terminal
(410)

Base Station
(420)

synchronization (401)

System information acquisition (403)

random access (405)

control information signaling (405)

data transmission/reception (407)

# FIG. 5

EP 4 761 128 A1

# FIG. 6

First node                          Second node

1. first signaling

2. perform operation based on AI/ML model

3. second signaling

# FIG. 7

EP 4 761 128 A1

# FIG. 8

BS(820)

UE(810)　　　　　　　　　　　　　　Cell#1(THz)　　　　Cell#2

system information of cell#1 (801)

| obtain synchronization for cell#1 (803) |

signal for accessing to cell#1 (805)

| perform access procedure and communication (807) |

# FIG. 9

UE(910)　　　　　　　　　　　　　　　　　　BS(920)

resource configuration
for beam management (901)

measurement signal (903)

•
•
•

feedback signal (905)

| perform communication (907) |

# FIG. 10a

Satellite
(or UAS platform)

Service
link

Feeder link

Gateway

Data network

User
Equipments

Beam foot
print

Field of view of the satellite
(or UAS platform)

EP 4 761 128 A1

# FIG. 10b

Satellite (or UAS platform)

Satellite (or UAS platform)

ISL

Feeder link

Feeder link (mandatory if on ISL)

Service link

Gateway

Data network

User Equipments

Beam foot print

Field of view of the satellite (or UAS platform)

EP 4 761 128 A1

# FIG. 11a

# FIG. 11b

# FIG. 11c

# FIG. 12a

6G-based wireless communication system

# FIG. 12b

6G-based wireless communication system

Sensing Transmitter → Object

Sensing signal

Sensing Receiver

Scattered/Reflected signal

Object

Sensing data → Processing

Sensing results → Wireless Sensing Service

Sensing results → Trusted 3rd party

EP 4 761 128 A1

# FIG. 13

:Sensing Resource    :Comunication Resource

Frequency

Symbol unit

Resource Block unit

Time

# FIG. 14

IDENTIFY SENSING CAPABILITY

CONFIGURE SENSING OPERATION

PERFORM SENSING OPERATION

# FIG. 15

```
        START
          │
          ▼
IDENTIFY NES SOLUTION(S)
          │
          ▼
PERFORM SIGNALING FOR NES
          │
          ▼
PERFORM OPERATIONS FOR NES
          │
          ▼
         END
```

# FIG. 16

TERMINAL           BASE STATION

SYSTEM INFORMATION

IDENTIFY INFORMATION
RELATED TO CELL DTX/DRX

RANDOM ACCESS

CONFIGURATION INFORMATION

CONTROL INFORMATION

PERFORM COMMUNICATION
BASED ON CELL DTX/DRX

# FIG. 17

TERMINAL      BASE STATION

← CONFIGURATION INFORMATION FOR CSI

← CSI-RS

DETERMINE CSI

→ CSI REPORT

# FIG. 18a

CSI report configuration

CSI-RS resource set #1

8-port NZP CSI-RS resource#1 with CSI-RS power P1
8-port NZP CSI-RS resource#2 with CSI-RS power P1
8-port NZP CSI-RS resource#3 with CSI-RS power P2
8-port NZP CSI-RS resource#4 with CSI-RS power P2

Sub-configuration #1

List = {#1,#2}
with power offset X1 or
delta X2 or index X3

Sub-configuration #3

List = {#3,#4}
with power offset Y1 or
delta Y2 or index Y3

Sub-configuration #2

List = {#1,#2}
with power offset Z1 or
delta Z2 or index Z3

Sub-configuration #4

List = {#3,#4}
with power offset W1 or
delta W2 or index W3

# FIG. 18b

CSI report configuration

CSI-RS resource set #1

16-port NZP CSI-RS resource#1
16-port NZP CSI-RS resource#2

Sub-configuration #1

Bitmap=1111 1111 1111 1111
with power offset X1 or
delta X2 or index X3
Codebook Subset restriction#1
RI restriction#1

Sub-configuration #3

Bitmap=1111 1111 0000 0000
with power offset Y1 or
delta Y2 or index Y3
Codebook Subset restriction#2
RI restriction#2

Sub-configuration #2

Bitmap=1111 1111 1111 1111
with power offset Z1 or
delta Z2 or index Z3
[Codebook Subset restriction#1
RI restriction#1]

Sub-configuration #4

Bitmap=1111 1111 0000 0000
with power offset W1 or
delta W2 or index W3
[Codebook Subset restriction#2
RI restriction#2]

# FIG. 19a

| ● Row | Ports X | Density ρ | cdm-Type | $(\bar{k},\bar{l})$ | CDM group index j | k' | l' |
|---|---|---|---|---|---|---|---|
| ● 1 | 1 | 3 | noCDM | $(k_0,l_0),(k_0+4,l_0),(k+8,l_0)$ | 0,0,0 | 0 | 0 |

# FIG. 19b

| ● Row | Ports X | Density ρ | cdm-Type | $(\bar{k},\bar{l})$ | CDM group index j | k' | l' |
|-------|---------|-----------|----------|---------------------|-------------------|-----|-----|
| ● 2 | 1 | 1, 0.5 | noCDM | $(k_0,l_0)$ | 0 | 0 | 0 |

Time (OFDM symbol)

frequency (subcarrier)

EP 4 761 128 A1

## FIG. 19c

| ● Row | Ports $\chi$ | Density $\rho$ | cdm-Type | $(\bar{k},\bar{l})$ | | CDM group index j | k' | l' |
|---|---|---|---|---|---|---|---|---|
| ● 3 | 2 | 1, 0.5 | fd-CDM2 | $(k_0,l_0)$ | | 0 | 0, 1 | 0 |

EP 4 761 128 A1

# FIG. 19d

EP 4 761 128 A1

| • Row | Ports X | Density ρ | cdm-Type | $(\bar{k},\bar{l})$ | CDM group index j | k' | l' |
|---|---|---|---|---|---|---|---|
| • 4 | 4 | 1 | fd-CDM2 | $(k_0,l_0),(k_0+2,l_0)$ | 0,1 | 0, 1 | 0 |

# FIG. 19e

| ● Row | Ports X | Density ρ | cdm-Type | $(\bar{k},\bar{l})$ | | CDM group index j | k' | l' |
|---|---|---|---|---|---|---|---|---|
| ● 5 | 4 | 1 | fd-CDM2 | $(k_0,l_0),(k_0,l_0+1)$ | | 0,1 | 0, 1 | 0 |

frequency (subcarrier)

Time (OFDM symbol)

3000, 3001    3002, 3003

EP 4 761 128 A1

# FIG. 19f

| • Row | Ports X | Density ρ | cdm-Type | $(\bar{k}, \bar{l})$ | | CDM group index j | k' | l' |
|---|---|---|---|---|---|---|---|---|
| • 6 | 8 | 1 | fd-CDM2 | $(k_0, l_0), (k_1, l_0), (k_2, l_0), (k_3, l_0),$ | | 0,1,2,3, | 0, 1 | 0 |

EP 4 761 128 A1

# FIG. 19g

| ● Row | Ports X | Density ρ | cdm-Type | $(\bar{k},\bar{l})$ | CDM group index j | k' | l' |
|---|---|---|---|---|---|---|---|
| ● 7 | 8 | 1 | fd-CDM2 | $(k_0,l_0),(k_1,l_0),(k_0,l_0+1),(k_1,l_0+1)$ | 0,1,2,3 | 0, 1 | 0 |

EP 4 761 128 A1

# FIG. 19h

| • Row | Ports X | Density ρ | cdm-Type | $(\bar{k}, \bar{l})$ | CDM group index j | k' | l' |
|---|---|---|---|---|---|---|---|
| • 8 | 8 | 1 | cdm4-FD2-TD2 | $(k_0, l_0), (k_1, l_0)$ | 0,1 | 0, 1 | 0, 1 |

EP 4 761 128 A1

# FIG. 19i

| ● Row | Ports X | Density ρ | cdm-Type | $(\bar{k}, \bar{l})$ | CDM group index j | k' | l' |
|---|---|---|---|---|---|---|---|
| ● 9 | 12 | 1 | fd-CDM2 | $(k_0, l_0), (k_1, l_0), (k_2, l_0),$ $(k_3, l_0), (k_4, l_0), (k_5, l_0)$ | 0,1,2,3,4,5 | 0, 1 | 0 |

# FIG. 19j

| • Row | Ports X | Density ρ | cdm-Type | $(\bar{k},\bar{l})$ | CDM group index j | k' | l' |
|---|---|---|---|---|---|---|---|
| • 10 | 12 | 1 | cdm4-FD2-TD2 | $(k_0,l_0),(k_1,l_0),(k_2,l_0)$ | 0,1,2 | 0, 1 | 0, 1 |

frequency (subcarrier)

Time (OFDM symbol)

3000,3001,3002,3003

3004,3005,3006,3007

EP 4 761 128 A1

# FIG. 19k

| ● Row | Ports X | Density ρ | cdm-Type | $(\bar{k},\bar{l})$ | CDM group index j | k' | l' |
|---|---|---|---|---|---|---|---|
| ● 11 | 16 | 1, 0.5 | fd-CDM2 | $(k_0,l_0),(k_1,l_0),(k_2,l_0),(k_3,l_0),$ $(k_0,l_0+1),(k_1,l_0+1),(k_2,l_0+1),(k_3,l_0+1),$ | 0,1,2,3, 4,5,6,7 | 0, 1 | 0 |

EP 4 761 128 A1

# FIG. 19I

| ● Row | Ports X | Density ρ | cdm-Type | $(\bar{k},\bar{l})$ | CDM group index j | k' | l' |
|---|---|---|---|---|---|---|---|
| ● 12 | 16 | 1, 0.5 | cdm4-FD2-TD2 | $(k_0,l_0),(k_1,l_0),(k_2,l_0),(k_3,l_0)$ | 0,1,2,3 | 0, 1 | 0, 1 |

3012,3013,
3014,3015

3000,3001,
3002,3003

frequency (subcarrier)

Time (OFDM symbol)

EP 4 761 128 A1

# FIG. 19m

| • Row | Ports X | Density ρ | cdm-Type | $(\bar{k},\bar{l})$ | CDM group index j | k' | l' |
|---|---|---|---|---|---|---|---|
| • 13 | 24 | 1, 0.5 | fd-CDM2 | $(k_0,l_0),(k_1,l_0),(k_2,l_0),$<br>$(k_0,l_0+1),(k_1,l_0+1),(k_2,l_0+1),$<br>$(k_0,l_1),(k_1,l_1),(k_2,l_1),$<br>$(k_0,l_1+1),(k_1,l_1+1),(k_2,l_1+1)$ | 0,1,2,3,4,5,<br>6,7,8,9,10,11 | 0, 1 | 0 |

EP 4 761 128 A1

# FIG. 19n

| • Row | Ports X | Density ρ | cdm-Type | $(\bar{k},\bar{l})$ | | CDM group index j | k' | l' |
|---|---|---|---|---|---|---|---|---|
| • 14 | 24 | 1, 0.5 | cdm4-FD2-TD2 | $(k_0,l_0),(k_1,l_0),(k_2,l_0),$ $(k_0,l_1),(k_1,l_1),(k_2,l_1)$ | | 0,1,2,3,4,5 | 0, 1 | 0, 1 |

# FIG. 19o

EP 4 761 128 A1

| ● Row | Ports X | Density ρ | cdm-Type | $(\bar{k},\bar{l})$ | CDM group index j | k' | l' |
|-------|---------|-----------|----------|---------------------|-------------------|-----|-----|
| ● 15 | 24 | 1, 0.5 | cdm8-FD2-TD4 | $(k_0,l_0),(k_1,l_0),(k_2,l_0)$ | 0,1,2 | 0, 1 | 0, 1, 2, 3 |

3016,3017,3018,3019
3020,3021,3022,3023

3000,3001,3002,3003
3004,3005,3006,3007

# FIG. 19p

| ● Row | Ports X | Density ρ | cdm-Type | $(\bar{k},\bar{l})$ | CDM group index j | k' | l' |
|---|---|---|---|---|---|---|---|
| ● 16 | 32 | 1, 0.5 | fd-CDM2 | $(k_0,l_0),(k_1,l_0),(k_2,l_0),(k_3,l_0),$ $(k_0,l_0+1),(k_1,l_0+1),(k_2,l_0+1),(k_3,l_0+1),$ $(k_0,l_1),(k_1,l_1),(k_2,l_1),(k_3,l_1),$ $(k_0,l_1+1),(k_1,l_1+1),(k_2,l_1+1),(k_3,l_1+1)$ | 0,1,2,3, 4,5,6,7, 8,9,10,11, 12,13,14,15 | 0, 1 | 0 |

# FIG. 19q

| • Row | Ports X | Density ρ | cdm-Type | $(\overline{k},\overline{l})$ | CDM group index j | k' | l' |
|---|---|---|---|---|---|---|---|
| • 17 | 32 | 1, 0.5 | cdm4-FD2-TD4 | $(k_0,l_0),(k_1,l_0),(k_2,l_0),(k_3,l_0),$ $(k_0,l_1),(k_1,l_1),(k_2,l_1),(k_3,l_1)$ | 0,1,2,3, 4,5,6,7 | 0, 1 | 0, 1 |

EP 4 761 128 A1

84

# FIG. 19r

| Row | Ports X | Density ρ | cdm-Type | $(\bar{k},\bar{l})$ | CDM group index j | k' | l' |
|---|---|---|---|---|---|---|---|
| • 18 | 32 | 1, 0.5 | cdm8-FD2-TD4 | $(k_0,l_0),(k_1,l_0),(k_2,l_0),(k_3,l_0)$ | 0,1,2,3 | 0, 1 | 0, 1, 2, 3 |

3024,3025,3026,3027
3028,3029,3030,3031

3000,3001,3002,3003
3004,3005,3006,3007

EP 4 761 128 A1

# FIG. 20

START

receive configuration information
for CSI report — S2001

receive control information
related to sub-configuration — S2003

determine CSI reference resource
based on a number of sub-configurations — S2005

END

# FIG. 21

START

receive capability information from UE — S2101

determine CSI report configuration
based on the capability information — S2103

transmit configuration information
for the CSI report — S2105

END

# FIG. 22

START

transmit capability information from UE — S2201

receive configuration information
for CSI report — S2203

END

# FIG. 23

START

determine CSI-RS resource
and CSI-RS port — S2301

determine port subsets
for sub-configurations — S2303

transmit configuration information
for CSI report — S2305

END

# FIG. 24

Base station
(2420)

UE
(2410)

Configure a CSI report setting
which is associated with single CMR
CSI-RS resource but with more than
one sub-configuration(S2401)

S2403 — Calculate CSI values for
the CSI report setting, based on
CSI reference resource which
is defined by proposed method

Report calculated CSI for
the CSI report setting(S2405)

<div align="center">

**INTERNATIONAL SEARCH REPORT**

</div>

| | International application No. |
|---|---|
| | **PCT/KR2024/011616** |

| **A.** | **CLASSIFICATION OF SUBJECT MATTER** |
|---|---|

**H04B 7/06**(2006.01)i; **H04W 52/02**(2009.01)i; **H04W 72/0446**(2023.01)i; **H04W 72/23**(2023.01)i; **H04B 7/08**(2006.01)i; **H04W 8/24**(2009.01)i; **H04L 5/00**(2006.01)i

According to International Patent Classification (IPC) or to both national classification and IPC

| **B.** | **FIELDS SEARCHED** |
|---|---|

Minimum documentation searched (classification system followed by classification symbols)

H04B 7/06(2006.01); H04B 7/04(2006.01); H04W 24/10(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: CSI 보고(channel state information report), 서브-설정(sub-configuration), CSI-RS 포트(CSI-RS port), 포트-서브셋(port subset), CDM 그룹(code division multiplexing group)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | HUAWEI et al. CSI enhancements for network energy saving. R1-2304644, 3GPP TSG RAN WG1 #113. Incheon, Korea. 15 May 2023. See pages 12-14; and figures 11-13. | 1,7,12-15 |
| Y | | 2-6,8-11 |
| Y | LG ELECTRONICS. Discussion on NES techniques in spatial and power domains. R1-2305143, 3GPP TSG RAN WG1 #113. Incheon, Korea. 15 May 2023. See pages 9-10; and figures 4-6(b). | 2-4,6,8-9,11 |
| Y | CATT. Network Energy Saving techniques in spatial and power domain. R1-2304743, 3GPP TSG RAN WG1 #113. Incheon, Korea. 15 May 2023. See section 3. | 5,10 |
| A | SAMSUNG. Techniques in spatial and power domains. R1-2305526, 3GPP TSG RAN WG1 #113. Incheon, Korea. 13 May 2023. See sections 3.1-3.2. | 1-15 |

| ✓ | Further documents are listed in the continuation of Box C. | ✓ | See patent family annex. |
|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 November 2024** | **05 November 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2024/011616**

### C.    DOCUMENTS CONSIDERED TO BE RELEVANT

| Category* | Citation of document, with indication, where appropriate, of the relevant passages | Relevant to claim No. |
|-----------|-----------------------------------------------------------------------------------|-----------------------|
| A | WO 2021-217328 A1 (QUALCOMM INCORPORATED et al.) 04 November 2021 (2021-11-04) See paragraphs [0094]-[0199]; and figures 9-20. | 1-15 |

Form PCT/ISA/210 (second sheet) (July 2022)

## INTERNATIONAL SEARCH REPORT
### Information on patent family members

International application No.

**PCT/KR2024/011616**

| Patent document cited in search report | Publication date (day/month/year) | Patent family member(s) | Publication date (day/month/year) |
|---|---|---|---|
| WO 2021-217328 A1 | 04 November 2021 | None | |

Form PCT/ISA/210 (patent family annex) (July 2022)